# EUROPEAN PATENT APPLICATION

(11) **EP 4 842 106 A1**
(43) Date of publication of application: **18.11.2026**
(21) Application number: 25751609.6
(22) Date of filing: 06.02.2025
(51) Int. Cl.: H04W 72/0453

(54) **COMMUNICATION METHOD AND APPARATUS BASED ON DISTRIBUTED RESOURCE UNIT**

(30) Priority: 08.02.2024 CN 202410178320
(71) Applicant: Huawei Technologies Co., Ltd., Shenzhen, Guangdong 518129 (CN)
(72) Inventor: MAO, Zhi, Shenzhen, Guangdong 518129 (CN); GONG, Bo, Shenzhen, Guangdong 518129 (CN); YU, Jian, Shenzhen, Guangdong 518129 (CN); LIU, Chenchen, Shenzhen, Guangdong 518129 (CN); GAN, Ming, Shenzhen, Guangdong 518129 (CN)
(74) Representative: Maiwald GmbH
(86) International application number: PCT/CN2025/076063
(87) International publication number: WO 2025/168010

(57) **Abstract**

This application relates to the field of wireless communication, and in particular, to a communication method and apparatus based on a distributed resource unit. The method includes: A communication apparatus generates and transmits a PPDU according to a 40 MHz or 80 MHz dRU tone plan. For the 40 MHz or 80 MHz dRU tone plan, refer to descriptions of embodiments. According to this application, spectrum utilization can be improved. This application supports 802.11 series protocols, including 802.11bn/UHR/Wi-Fi 8, 802.11be/EHT/Wi-Fi 7, 802.11ax protocol, 802.11a/b/g, 802.11n, and 802.11ac, and also support a UWB protocol, a sensing protocol, or the like.

## Description

This application claims priority to Chinese Patent Application No. 202410178320.X, filed with the China National Intellectual Property Administration on February 8, 2024 and entitled "COMMUNICATION METHOD AND APPARATUS BASED ON DISTRIBUTED RESOURCE UNIT", which is incorporated herein by reference in its entirety.

### TECHNICAL FIELD

This application relates to the field of wireless communication technologies, and in particular, to a communication method and apparatus based on a distributed resource unit.

### BACKGROUND

The European Telecommunications Standards Institute (European telecommunications standards institute, ETSI) has issued regulations on the 6 GHz spectrum, limiting the maximum power to 23 dBm (decibel-milliwatts, dBm) and the maximum power spectral density to 10 dBm/MHz (decibel-milliwatts/megahertz, dBm/MHz) during transmission. The Federal Communications Commission of the United States has also issued regulations on the 6 GHz spectrum, defining the low power indoor (low power indoor, LPI) communication mode, and imposing strict limits on the maximum power and the maximum power spectral density during transmission. For an access point (access point, AP), during transmission, the maximum power is limited to 30 dBm, and the maximum power spectral density is limited to 5 dBm/MHz. For a station (station, STA), during transmission, the maximum power is limited to 24 dBm, and the maximum power spectral density is limited to -1 dBm/MHz. A transmit power of a device is limited by both the maximum power and the maximum power spectral density. To be specific, the transmit power cannot exceed the maximum power, and a transmit power spectral density (power spectral density, PSD) cannot exceed the maximum power spectral density. Compared with the limit of the maximum power, the limit of the maximum power spectral density is stricter, and an allowed maximum transmit power is generally more limited by the power spectral density. For the station, a transmit power of the station reaches the limit of the specified maximum power only when a bandwidth is 320 MHz. When the bandwidth is less than 320 MHz, due to the limit of the maximum power spectral density, the station can only use a lower power (which is a power lower than the specified maximum power) for transmission.

Based on this, a distributed resource unit (distributed resource unit, dRU) technology is proposed to increase the transmit power. A basic idea of the dRU is to discretize contiguous subcarriers in a resource unit (resource unit, RU) to a bandwidth that is as wide as possible, to reduce a quantity of subcarriers existing in 1 MHz, thereby increasing a transmit power of each subcarrier, and further increasing a total transmit power. Therefore, how to design a dRU is a problem that is being studied by a person skilled in the art.

### SUMMARY

Embodiments of this application provide a communication method and apparatus based on a distributed resource unit. By using a dRU designed according to this application for transmission, a transmit power of a device can be increased without increasing a power spectral density, and spectrum utilization can be improved.

The following describes this application from different aspects. It should be understood that mutual reference may be made to the following implementations and beneficial effects of different aspects.

According to a first aspect, this application provides a communication method based on a distributed resource unit. The method includes: a first communication apparatus generates and transmits a physical layer protocol data unit (physical layer protocol data unit, PPDU) according to a 40 MHz bandwidth dRU tone plan (tone plan). One or more dRUs corresponding to the dRU tone plan include eighteen 26-tone dRUs, or nine 52-tone dRUs, or four 106-tone dRUs, or two 242-tone dRUs, or one 484-tone dRU, or various combinations of 26-tone dRUs, 52-tone dRUs, 106-tone dRUs, and 242-tone dRUs. A ninth 52-tone dRU includes subcarrier indexes of [-234, -225, -216, -207, -198, -189, -180, -171, -162, -153, -144, -135, -126, -117, -108, -99, -90, -81, -72, -63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243].

For ease of description, in this application, "one or more dRUs corresponding to a dRU tone plan" is referred to as "dRU tone plan (dRU tone plan)". In other words, "dRU tone plan" described below in this application may be understood as "one or more dRUs corresponding to the dRU tone plan". Details are not described below.

For example, for the dRU tone plan, refer to the descriptions in the following embodiments. Details are not described herein again.

For example, the first communication apparatus may be an access point or a station.

It may be understood that the dRU in this application may be determined by using a size (size) and a location. A size (size) of the dRU may be a quantity of subcarriers in the dRU, and a location of the dRU may be a location of a subcarrier in the dRU in frequency domain. Generally, a subcarrier index range (subcarrier index range) may indicate a location of a subcarrier in a dRU in frequency domain. Details are not described below.

In this application, a 26-tone dRU may be understood as a dRU including 26 subcarriers. Similarly, a 52-tone dRU may be understood as a dRU including 52 subcarriers, a 106-tone dRU may be understood as a dRU including 106 subcarriers, a 242-tone dRU may be understood as a dRU including 242 subcarriers, and a 484-tone dRU may be understood as a dRU including 484 subcarriers. Details are not described below.

In this application, a dRU includes a plurality of subcarriers that are discrete in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency.

In this application, the ninth 52-tone dRU is defined in a 40 MHz bandwidth, and more frequency domain resources are used in the 40 MHz bandwidth, thereby improving spectrum utilization and increasing a transmit power of a device without increasing a power spectral density.

According to a second aspect, this application provides a communication method based on a distributed resource unit. The method includes: a second communication apparatus receives and processes a PPDU according to the 40 MHz bandwidth dRU tone plan. The dRU tone plan includes eighteen 26-tone dRUs, or nine 52-tone dRUs, or four 106-tone dRUs, or two 242-tone dRUs, or one 484-tone dRU, or various combinations of 26-tone dRUs, 52-tone dRUs, 106-tone dRUs, and 242-tone dRUs. A ninth 52-tone dRU includes subcarrier indexes of [-234, -225, -216, -207, -198, -189, -180, -171, -162, -153, -144, -135, -126, -117, -108, -99, -90, -81, -72, - 63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243]. For example, the second communication apparatus may specifically receive the PPDU according to the dRU in the 40 MHz bandwidth dRU tone plan.

For example, the second communication apparatus may be an access point or a station. For example, for the dRU tone plan, refer to the descriptions in the following embodiments. Details are not described herein again.

According to a third aspect, this application provides a communication apparatus. The communication apparatus is configured to perform the method in any one of the first aspect or the possible implementations of the first aspect. The communication apparatus includes modules configured to perform the method in any one of the first aspect or the possible implementations of the first aspect.

According to a fourth aspect, this application provides a communication apparatus. The communication apparatus is configured to perform the method in any one of the second aspect or the possible implementations of the second aspect. The communication apparatus includes modules configured to perform the method in any one of the second aspect or the possible implementations of the second aspect.

In the third aspect or the fourth aspect, the communication apparatus may include a transceiver module and a processing module. For specific descriptions of the transceiver module and the processing module, refer to the following apparatus embodiments. For beneficial effects of the third aspect and the fourth aspect, refer to related descriptions in the first aspect and the second aspect. Details are not described herein again.

According to a fifth aspect, this application provides a communication method based on a distributed resource unit. The method includes: a first communication apparatus generates and transmits a PPDU according to an 80 MHz bandwidth dRU tone plan. The dRU tone plan includes thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A second 52-tone dRU in the eighteen 52-tone dRUs includes a subcarrier with a subcarrier index of 457, and a seventh 52-tone dRU in the eighteen 52-tone dRUs includes subcarriers with subcarrier indexes of 19, 55, 91, 127, 163, 199, 235, 271, 307, 343, 379, 415, and 451. A first 106-tone dRU in the nine 106-tone dRUs includes a subcarrier with a subcarrier index of 457, and a fourth 106-tone dRU in the nine 106-tone dRUs includes subcarriers with subcarrier indexes of 19, 55, 91, 127, 163, 199, 235, 271, 307, 343, 379, 415, and 451.

For ease of description, dRUs may be numbered in this application. For example, for the eighteen 52-tone dRUs in the 80 MHz dRU tone plan, if numbering starts from 0, an index (index) of a first 52-tone dRU is 0 (which may also be expressed as 52-tone dRU 0), an index (index) of a second 52-tone dRU is 1 (which may also be expressed as 52-tone dRU 1), and so on, and an index (index) of an eighteenth 52-tone dRU is 17 (which may also be expressed as 52-tone dRU 17). If numbering starts from 1, an index (index) of the first 52-tone dRU is 1 (which may also be expressed as 52-tone dRU 1), an index (index) of the second 52-tone dRU is 2 (which may also be expressed as 52-tone dRU 2), and so on, and an index (index) of the eighteenth 52-tone dRU is 18 (which may also be expressed as 52-tone dRU 18). Similarly, for other dRUs in the 80 MHz dRU tone plan (such as 26-tone dRUs, 106-tone dRUs, 242-tone dRUs, 484-tone dRUs, 996-tone dRUs), a similar numbering manner may be used, and details are not described herein. Similarly, for dRUs in a dRU tone plan of another bandwidth, a similar numbering manner may also be used, and details are not described below.

In this application, a 996-tone dRU may be understood as a dRU including 996 subcarriers, and details are not described below.

For example, for the dRU tone plan, refer to descriptions in the following embodiments. Details are not described herein again.

For example, the first communication apparatus may be an access point or a station.

In this application, a seventeenth 52-tone dRU, an eighteenth 52-tone dRU, and a ninth 106-tone dRU are defined in an 80 MHz bandwidth, and more frequency domain resources are used in the 80 MHz bandwidth, thereby improving spectrum utilization and increasing a transmit power of a device without increasing a power spectral density.

According to a sixth aspect, this application provides a communication method based on a distributed resource unit. The method includes: a second communication apparatus receives and process a PPDU according to an 80 MHz bandwidth dRU tone plan. The dRU tone plan includes thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A second 52-tone dRU in the eighteen 52-tone dRUs includes a subcarrier with a subcarrier index of 457, and a seventh 52-tone dRU in the eighteen 52-tone dRUs includes subcarriers with subcarrier indexes of 19, 55, 91, 127, 163, 199, 235, 271, 307, 343, 379, 415, and 451. A first 106-tone dRU in the nine 106-tone dRUs includes a subcarrier with a subcarrier index of 457, and a fourth 106-tone dRU in the nine 106-tone dRUs includes subcarriers with subcarrier indexes of 19, 55, 91, 127, 163, 199, 235, 271, 307, 343, 379, 415, and 451.

For example, the second communication apparatus may be an access point or a station. For example, for the dRU tone plan, refer to descriptions in the following embodiments. Details are not described herein again.

With reference to the fifth aspect or the sixth aspect, in a possible implementation, the second 52-tone dRU in the eighteen 52-tone dRUs includes subcarrier indexes of [-475, -459, - 439, -423, -403, -387, -367, -351, -331, -315, -295, -279, -259, -243, -223, -207, -187, -171, -151, -135, -115, -99, -79, -63, -43, -27, 25, 41, 61, 77, 97, 113, 133, 149, 169, 185, 205, 221, 241, 257, 277, 293, 313, 329, 349, 365, 385, 401, 421, 437, 457, 473].

With reference to the fifth aspect or the sixth aspect, in a possible implementation, the seventh 52-tone dRU in the eighteen 52-tone dRUs includes subcarrier indexes of [-481, -465, - 445, -429, -409, -393, -373, -357, -337, -321, -301, -285, -265, -249, -229, -213, -193, -177, -157, -141, -121, -105, -85, -69, -49, -33, 19, 35, 55, 71, 91, 107, 127, 143, 163, 179, 199, 215, 235, 251, 271, 287, 307, 323, 343, 359, 379, 395, 415, 431, 451, 467].

With reference to the fifth aspect or the sixth aspect, in a possible implementation, a seventeenth 52-tone dRU in the eighteen 52-tone dRUs includes subcarriers of a fifth 26-tone dRU and a fourteenth 26-tone dRU. In other words, the seventeenth 52-tone dRU in the eighteen 52-tone dRUs includes subcarriers that are the same as subcarriers included in the fifth 26-tone dRU and the fourteenth 26-tone dRU. An eighteenth 52-tone dRU in the eighteen 52-tone dRUs includes subcarriers of a twenty-fourth 26-tone dRU and a thirty-third 26-tone dRU. In other words, the eighteenth 52-tone dRU in the eighteen 52-tone dRUs includes subcarriers that are the same as subcarriers included in the twenty-fourth 26-tone dRU and the thirty-third 26-tone dRU.

With reference to the fifth aspect or the sixth aspect, in a possible implementation, a ninth 106-tone dRU in the nine 106-tone dRUs includes subcarriers of the fifth, fourteenth, twenty-fourth, and thirty-third 26-tone dRUs, and subcarriers with subcarrier indexes of [-500, 16].

For example, the fifth 26-tone dRU includes subcarrier indexes of [-451, -415, -379, -343, -307, -271, -235, -199, -163, -127, -91, -55, -19, 49, 85, 121, 157, 193, 229, 265, 301, 337, 373, 409, 445, 481]; the fourteenth 26-tone dRU includes subcarrier indexes of [-450, -414, -378, -342, -306, -270, -234, -198, -162, -126, -90, -54, -18, 50, 86, 122, 158, 194, 230, 266, 302, 338, 374, 410, 446, 482]; the twenty-fourth 26-tone dRU includes subcarrier indexes of [-449, -413, -377, -341, -305, -269, -233, -197, -161, -125, -89, -53, -17, 51, 87, 123, 159, 195, 231, 267, 303, 339, 375, 411, 447, 483]; and the thirty-third 26-tone dRU includes subcarrier indexes of [-448, -412, -376, -340, -304, -268, -232, -196, -160, -124, -88, -52, -16, 52, 88, 124, 160, 196, 232, 268, 304, 340, 376, 412, 448, 484].

With reference to the fifth aspect or the sixth aspect, in a possible implementation, the first 106-tone dRU in the nine 106-tone dRUs includes subcarrier indexes of [-495, -483, -475,-467, -459, -447, -439, -431, -423, -411, -403, -395, -387, -375, -367, -359, -351, -339, -331, -323, -315, -303, -295, -287, -279, -267, -259, -251, -243, -231, -223, -215, -207, -195,-187, -179, -171, -159, -151, -143, -135, -123, -115, -107, -99, -87, -79, -71, -63, -51, -43,-35, -27, 17, 25, 33, 41, 53, 61, 69, 77, 89, 97, 105, 113, 125, 133, 141, 149, 161, 169, 177, 185, 197, 205, 213, 221, 233, 241, 249, 257, 269, 277, 285, 293, 305, 313, 321, 329, 341, 349, 357, 365, 377, 385, 393, 401, 413, 421, 429, 437, 449, 457, 465, 473, 485]. The fourth 106-tone dRU in the nine 106-tone dRUs includes subcarrier indexes of [-493, -481, -473, -465, -457, -445, -437,-429, -421, -409, -401, -393, -385, -373, -365, -357, -349, -337, -329, -321, -313, -301, -293, -285, -277, -265, -257, -249, -241, -229, -221, -213, -205, -193, -185, -177, -169, -157,-149, -141, -133, -121, -113, -105, -97, -85, -77, -69, -61, -49, -41, -33, -25, 19, 27, 35, 43, 55, 63, 71, 79, 91, 99, 107, 115, 127, 135, 143, 151, 163, 171, 179, 187, 199, 207, 215, 223, 235, 243, 251, 259, 271, 279, 287, 295, 307, 315, 323, 331, 343, 351, 359, 367, 379, 387, 395, 403, 415, 423, 431, 439, 451, 459, 467, 475, 487].

According to a seventh aspect, this application provides a communication apparatus. The communication apparatus is configured to perform the method in any one of the fifth aspect or the possible implementations of the fifth aspect. The communication apparatus includes modules configured to perform the method in any one of the fifth aspect or the possible implementations of the fifth aspect.

According to an eighth aspect, this application provides a communication apparatus. The communication apparatus is configured to perform the method in any one of the sixth aspect or the possible implementations of the sixth aspect. The communication apparatus includes modules configured to perform the method according to any one of the sixth aspect or the possible implementations of the sixth aspect.

In the seventh aspect or the eighth aspect, the communication apparatus may include a transceiver module and a processing module. For specific descriptions of the transceiver module and the processing module, refer to the following apparatus embodiments. For beneficial effects of the seventh aspect and the eighth aspect, refer to related descriptions of the fifth aspect and the sixth aspect. Details are not described herein again.

According to a ninth aspect, this application provides a communication method based on a distributed resource unit. The method includes: a first communication apparatus generates and transmits a PPDU according to an 80 MHz bandwidth dRU tone plan. The dRU tone plan includes thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A subcarrier spacing in the 52-tone dRU is greater than or equal to 18, or an absolute value of a difference between indexes of two adjacent subcarriers in the 52-tone dRU is greater than or equal to 18. A subcarrier spacing in the 106-tone dRU is greater than or equal to 9, or an absolute value of a difference between two adjacent subcarrier indexes in the 106-tone dRU is greater than or equal to 9.

For example, for the dRU tone plan, refer to descriptions in the following embodiments. Details are not described herein again.

For example, the first communication apparatus may be an access point or a station.

In this application, an 80 MHz dRU tone plan is designed, including eighteen 52-tone dRUs or nine 106-tone dRUs, and more frequency domain resources are used in an 80 MHz bandwidth, thereby improving spectrum utilization, and increasing a transmit power of a device without increasing a power spectral density. In addition, in the 80 MHz dRU tone plan, a subcarrier spacing of a 52-tone dRU is greater than or equal to 18 (that is, each subcarrier exclusively occupies 1 MHz), and a higher power gain can be obtained.

According to a tenth aspect, this application provides a communication method based on a distributed resource unit. The method includes: a second communication apparatus receives and process a PPDU according to an 80 MHz bandwidth dRU tone plan. The dRU tone plan includes thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A subcarrier spacing in the 52-tone dRU is greater than or equal to 18, or an absolute value of a difference between indexes of two adjacent subcarriers in the 52-tone dRU is greater than or equal to 18. A subcarrier spacing in the 106-tone dRU is greater than or equal to 9, or an absolute value of a difference between two adjacent subcarrier indexes in the 106-tone dRU is greater than or equal to 9.

For example, the second communication apparatus may be an access point or a station. For example, for the dRU tone plan, refer to descriptions in the following embodiments. Details are not described herein again.

With reference to the ninth aspect or the tenth aspect, in a possible implementation, the dRU tone plan further includes a 26-tone dRU, and the 26-tone dRU includes subcarriers as shown in Table 8 below.

With reference to the ninth aspect or the tenth aspect, in a possible implementation, in the eighteen 52-tone dRUs, a first 52-tone dRU includes subcarriers of a first 26-tone dRU and a second 26-tone dRU; a second 52-tone dRU includes subcarriers of a third 26-tone dRU and a fourth 26-tone dRU; a third 52-tone dRU includes subcarriers of a sixth 26-tone dRU and a seventh 26-tone dRU; a fourth 52-tone dRU includes subcarriers of an eighth 26-tone dRU and a ninth 26-tone dRU; a fifth 52-tone dRU includes subcarriers of a tenth 26-tone dRU and an eleventh 26-tone dRU; a sixth 52-tone dRU includes subcarriers of a twelfth 26-tone dRU and a thirteenth 26-tone dRU; a seventh 52-tone dRU includes subcarriers of a fifteenth 26-tone dRU and a sixteenth 26-tone dRU; an eighth 52-tone dRU includes subcarriers of a seventeenth 26-tone dRU and an eighteenth 26-tone dRU; a ninth 52-tone dRU includes subcarriers of a twentieth 26-tone dRU and a twenty-first 26-tone dRU; a tenth 52-tone dRU includes subcarriers of a twenty-second 26-tone dRU and a twenty-third 26-tone dRU; an eleventh 52-tone dRU includes subcarriers of a twenty-fifth 26-tone dRU and a twenty-sixth 26-tone dRU; a twelfth 52-tone dRU includes subcarriers of a twenty-seventh 26-tone dRU and a twenty-eighth 26-tone dRU; a thirteenth 52-tone dRU includes subcarriers of a twenty-ninth 26-tone dRU and a thirtieth 26-tone dRU; a fourteenth 52-tone dRU includes subcarriers of a thirty-first 26-tone dRU and a thirty-second 26-tone dRU; a fifteenth 52-tone dRU includes subcarriers of a thirty-fourth 26-tone dRU and a thirty-fifth 26-tone dRU; a sixteenth 52-tone dRU includes subcarriers of a thirty-sixth 26-tone dRU and a thirty-seventh 26-tone dRU; a seventeenth 52-tone dRU includes subcarriers of a fifth 26-tone dRU and a fourteenth 26-tone dRU; and an eighteenth 52-tone dRU includes subcarriers of a twenty-fourth 26-tone dRU and a thirty-third 26-tone dRU.

With reference to the ninth aspect or the tenth aspect, in a possible implementation, in the nine 106-tone dRUs, a first 106-tone dRU includes subcarriers of first to fourth 26-tone dRUs and subcarriers with subcarrier indexes of [-495, 485]; a second 106-tone dRU includes subcarriers of sixth to ninth 26-tone dRUs and subcarriers with subcarrier indexes of [-491, 489]; a third 106-tone dRU includes subcarriers of tenth to thirteenth 26-tone dRUs and subcarriers with subcarrier indexes of [-493, 487]; a fourth 106-tone dRU includes subcarriers of fifteenth to eighteenth 26-tone dRUs and subcarriers with subcarrier indexes of [-489, 491]; a fifth 106-tone dRU includes subcarriers of twentieth to twenty-third 26-tone dRUs and subcarriers with subcarrier indexes of [-494, 486]; a sixth 106-tone dRU includes subcarriers of twenty-fifth to twenty-eighth 26-tone dRUs and subcarriers with subcarrier indexes of [-490, 490]; a seventh 106-tone dRU includes subcarriers of twenty-ninth to thirty-second 26-tone dRUs and subcarriers with subcarrier indexes of [-492, 488]; an eighth 106-tone dRU includes subcarriers of thirty-fourth to thirty-seventh 26-tone dRUs and subcarriers with subcarrier indexes of [-488, 492]; and a ninth 106-tone dRU includes subcarriers of the fifth, fourteenth, twenty-fourth, and thirty-third 26-tone dRUs and subcarriers with subcarrier indexes of [-500, 16].

With reference to the ninth aspect or the tenth aspect, in a possible implementation, the dRU tone plan further includes four 242-tone dRUs. A first 242-tone dRU includes subcarriers of first to ninth 26-tone dRUs and subcarriers with subcarrier indexes of [-499, -495, -491, -487, 485, 489, 493, 497]. A second 242-tone dRU includes subcarriers of tenth to eighteenth 26-tone dRUs and subcarriers with subcarrier indexes of [-497, -493, -489, -485, 487, 491, 495, 499]. A third 242-tone dRU includes subcarriers of twentieth to twenty-eighth 26-tone dRUs and subcarriers with subcarrier indexes of [-498, -494, -490, -486, 486, 490, 494, 498]. A fourth 242-tone dRU includes subcarriers of twenty-ninth to thirty-seventh 26-tone dRUs and subcarriers with subcarrier indexes of [-496, -492, -488, -484, 488, 492, 496, 500].

With reference to the ninth aspect or the tenth aspect, in a possible implementation, the dRU tone plan further includes two 484-tone dRUs. A first 484-tone dRU includes subcarriers of first to eighteenth 26-tone dRUs and subcarriers with subcarrier indexes of [-499, -497, -495, - 493, -491, -489, -487, -485, 485, 487, 489, 491, 493, 495, 497, 499]. A second 484-tone dRU includes subcarriers of twentieth to thirty-seventh 26-tone dRUs and subcarriers with subcarrier indexes of [-498, -496, -494, -492, -490, -488, -486, -484, 486, 488, 490, 492, 494, 496, 498, 500].

With reference to the ninth aspect or the tenth aspect, in a possible implementation, the dRU tone plan further includes one 996-tone dRU. The 996-tone dRU includes subcarrier indexes of [-500:-3, 3:500]. The subcarrier indexes [-500:-3, 3:500] represent -500, -499, -498, ..., -5, -4, -3, 3, 4, 5, ..., 498, 499, 500.

According to an eleventh aspect, this application provides a communication apparatus. The communication apparatus is configured to perform the method according to any one of the ninth aspect or the possible implementations of the ninth aspect. The communication apparatus includes units for performing the method according to any one of the ninth aspect or the possible implementations of the ninth aspect.

According to a twelfth aspect, this application provides a communication apparatus. The communication apparatus is configured to perform the method according to any one of the tenth aspect or the possible implementations of the tenth aspect. The communication apparatus includes units for performing the method according to any one of the tenth aspect or the possible implementations of the tenth aspect.

In the eleventh aspect or the twelfth aspect, the communication apparatus may include a transceiver module and a processing module. For specific descriptions of the transceiver module and the processing module, refer to the following apparatus embodiments. For beneficial effects of the eleventh aspect and the twelfth aspect, refer to related descriptions of the ninth aspect and the tenth aspect. Details are not described herein again.

According to a thirteenth aspect, this application provides a communication method based on a distributed resource unit. The method includes: a first communication apparatus receives a trigger frame, where the trigger frame includes indication information, and the indication information indicates a dRU in a dRU tone plan corresponding to a first bandwidth; and the first communication apparatus transmits a PPDU using the dRU indicated by the indication information. The dRU tone plan corresponding to the first bandwidth includes any one of the following: nine 52-tone dRUs when the first bandwidth is 40 MHz, eighteen 52-tone dRUs when the first bandwidth is 80 MHz, thirty-six 52-tone dRUs when the first bandwidth is 160 MHz, seventy-two 52-tone dRUs when the first bandwidth is 320 MHz, nine 106-tone dRUs when the first bandwidth is 80 MHz, eighteen 106-tone dRUs when the first bandwidth is 160 MHz, or thirty-six 106-tone dRUs when the first bandwidth is 320 MHz.

For example, the first communication apparatus may be a station.

For example, a 52-tone dRU with a physical dRU index (PHY dRU index) of 2 when the first bandwidth is 80 MHz includes a subcarrier with a subcarrier index of 457, and a 52-tone dRU with a physical dRU index (PHY dRU index) of 7 when the first bandwidth is 80 MHz includes subcarriers with subcarrier indexes of 19, 55, 91, 127, 163, 199, 235, 271, 307, 343, 379, 415, and 451. A 106-tone dRU with a physical dRU index (PHY dRU index) of 1 when the first bandwidth is 160 MHz includes a subcarrier with a subcarrier index of 457, and a 106-tone dRU with a physical dRU index (PHY dRU index) of 4 when the first bandwidth is 160 MHz includes subcarriers with subcarrier indexes of 19, 55, 91, 127, 163, 199, 235, 271, 307, 343, 379, 415, and 451.

In this application, uplink transmission is scheduled through a trigger frame, and indication information is carried in the trigger frame to indicate a dRU, thereby supporting uplink communication using the dRU. Moreover, compared with the prior art, the indication information can indicate more dRUs, thereby scheduling more STAs for uplink communication (one station is allocated one dRU), and improving spectrum utilization of uplink transmission.

According to a fourteenth aspect, this application provides a communication method based on a distributed resource unit. The method includes: a second communication apparatus transmits a trigger frame, where the trigger frame includes indication information, and the indication information indicates a dRU in a dRU tone plan corresponding to a first bandwidth; and the second communication apparatus receives a PPDU on the dRU indicated by the indication information. The dRU tone plan corresponding to the first bandwidth includes any one of the following: nine 52-tone dRUs when the first bandwidth is 40 MHz, eighteen 52-tone dRUs when the first bandwidth is 80 MHz, thirty-six 52-tone dRUs when the first bandwidth is 160 MHz, seventy-two 52-tone dRUs when the first bandwidth is 320 MHz, nine 106-tone dRUs when the first bandwidth is 80 MHz, eighteen 106-tone dRUs when the first bandwidth is 160 MHz, or thirty-six 106-tone dRUs when the first bandwidth is 320 MHz.

For example, the second communication apparatus may be an access point.

For example, a 52-tone dRU with a physical dRU index of 2 when the first bandwidth is 80 MHz includes a subcarrier with a subcarrier index of 457, and a 52-tone dRU with a physical dRU index of 7 when the first bandwidth is 80 MHz includes subcarriers with subcarrier indexes of 19, 55, 91, 127, 163, 199, 235, 271, 307, 343, 379, 415, and 451. A 106-tone dRU with a physical dRU index of 1 when the first bandwidth is 160 MHz includes a subcarrier with a subcarrier index of 457, and a 106-tone dRU with a physical dRU index of 4 when the first bandwidth is 160 MHz includes subcarriers with subcarrier indexes of 19, 55, 91, 127, 163, 199, 235, 271, 307, 343, 379, 415, and 451.

With reference to the thirteenth aspect or the fourteenth aspect, in a possible implementation, the indication information includes a resource unit allocation subfield (RU allocation subfield) and a primary-secondary 160 subfield (PS160 subfield). The RU allocation subfield and the PS160 subfield may be used to jointly indicate the dRU. In this application, an existing RU/MRU indication may be reused to schedule a dRU, and compatibility is better.

For example, interpretation of the PS160 subfield and the RU allocation subfield includes one or more of the following:

| PS160 subfield | B0 of the RU allocation subfield | B7 to B1 of the RU allocation subfield | Bandwidth (BW) (MHz) | dRU size | dRU index (dRU index) | PHY dRU index (PHY dRU index) |
|---|---|---|---|---|---|---|
| 0 | | First value | 40 | 52 | dRU 9 | dRU 9 |
| 0 to 3 | | Second value and third value | 80, 160, or 320 | 52 | dRU 17 to dRU 18, respectively | 16×(BW/80-1)+2×N+dRU index |
| 0 to 3 | | Fourth value | 80, 160, or 320 | 106 | dRU 9 | 8×(BW/80-1)+N+dRU index |
| 0 to 3 | | Fifth value | 80, 160, or 320 | 26 | dRU 19 | 37×N+dRU index |

A value of N is determined based on part or all of the BW, the PS160 subfield, the B0 of the RU allocation subfield, and configuration information. For example, at least one of the first value, the second value, the third value, and the fourth value is a value from 107 to 127. The fifth value is 18.

In this application, an existing RU/MRU indication is reused to schedule a dRU resource, additional entries are added to indicate more dRUs, and an access point can schedule more stations for uplink communication (one station is allocated one dRU), thereby improving spectrum utilization of uplink transmission. In addition, this application can further resolve a problem that indication signaling is insufficient when an RU/MRU indication method is reused to indicate a dRU.

With reference to the thirteenth aspect or the fourteenth aspect, in a possible implementation, a 52-tone dRU with a physical dRU index of 9 when the first bandwidth is 40 MHz includes subcarriers of 26-tone dRUs with physical dRU indexes of 5 and 14.

For example, the 52-tone dRU with the physical dRU index of 9 includes subcarrier indexes of [-234, -225, -216, -207, -198, -189, -180, -171, -162, -153, -144, -135, -126, -117, -108, -99, -90, -81, -72, -63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243].

With reference to the thirteenth aspect or the fourteenth aspect, in a possible implementation, a 52-tone dRU with a physical dRU index of 17 when the first bandwidth is 80 MHz includes subcarriers of 26-tone dRUs with physical dRU indexes of 5 and 14. A 52-tone dRU with a physical dRU index of 18 when the first bandwidth is 80 MHz includes subcarriers of 26-tone dRUs with physical dRU indexes of 24 and 33.

For example, the 52-tone dRU with the physical dRU index of 2 when the first bandwidth is 80 MHz includes subcarrier indexes of [-475, -459, -439, -423, -403, -387, -367, -351, -331, -315, -295, -279, -259, -243, -223, -207, -187, -171, -151, -135, -115, -99, -79, -63, -43, -27, 25, 41, 61, 77, 97, 113, 133, 149, 169, 185, 205, 221, 241, 257, 277, 293, 313, 329, 349, 365, 385, 401, 421, 437, 457, 473].

For example, the 52-tone dRU with the physical dRU index of 7 when the first bandwidth is 80 MHz includes subcarrier indexes of [-481, -465, -445, -429, -409, -393, -373, -357, -337, -321, -301, -285, -265, -249, -229, -213, -193, -177, -157, -141, -121, -105, -85, -69, -49, -33, 19, 35, 55, 71, 91, 107, 127, 143, 163, 179, 199, 215, 235, 251, 271, 287, 307, 323, 343, 359, 379, 395, 415, 431, 451, 467].

With reference to the thirteenth aspect or the fourteenth aspect, in a possible implementation, a 106-tone dRU with a physical dRU index of 9 when the first bandwidth is 80 MHz includes subcarriers of 26-tone dRUs with physical dRU indexes of 5, 14, 24, and 33, and subcarriers with subcarrier indexes of [-500, 16].

For example, the 26-tone dRU with the physical dRU index of 5 includes subcarrier indexes of [-451, -415, -379, -343, -307, -271, -235, -199, -163, -127, -91, -55, -19, 49, 85, 121, 157, 193, 229, 265, 301, 337, 373, 409, 445, 481]; the 26-tone dRU with the physical dRU index of 14 includes subcarrier indexes of [-450, -414, -378, -342, -306, -270, -234, -198, -162, -126, -90, -54, -18, 50, 86, 122, 158, 194, 230, 266, 302, 338, 374, 410, 446, 482]; the 26-tone dRU with the physical dRU index of 24 includes subcarrier indexes of [-449, -413, -377, -341, - 305, -269, -233, -197, -161, -125, -89, -53, -17, 51, 87, 123, 159, 195, 231, 267, 303, 339, 375, 411, 447, 483]; and the 26-tone dRU with the physical dRU index of 33 includes subcarrier indexes of [-448, -412, -376, -340, -304, -268, -232, -196, -160, -124, -88, -52, -16, 52, 88, 124, 160, 196, 232, 268, 304, 340, 376, 412, 448, 484].

With reference to the thirteenth aspect or the fourteenth aspect, in a possible implementation, a 106-tone dRU with a physical dRU index of 1 when the first bandwidth is 80 MHz includes subcarrier indexes of [-495, -483, -475, -467, -459, -447, -439, -431, -423, -411, -403, -395, -387, -375, -367, -359, -351, -339, -331, -323, -315, -303, -295, -287, -279, - 267, -259, -251, -243, -231, -223, -215, -207, -195, -187, -179, -171, -159, -151, -143, -135, -123, -115, -107, -99, -87, -79, -71, -63, -51, -43, -35, -27, 17, 25, 33, 41, 53, 61, 69, 77, 89, 97, 105, 113, 125, 133, 141, 149, 161, 169, 177, 185, 197, 205, 213, 221, 233, 241, 249, 257, 269, 277, 285, 293, 305, 313, 321, 329, 341, 349, 357, 365, 377, 385, 393, 401, 413, 421, 429, 437, 449, 457, 465, 473, 485]. A 106-tone dRU with a physical dRU index of 4 when the first bandwidth is 80 MHz includes subcarrier indexes of [-493, -481, -473, -465, -457, -445, -437, -429, -421, - 409, -401, -393, -385, -373, -365, -357, -349, -337, -329, -321, -313, -301, -293, -285, -277, -265, -257, -249, -241, -229, -221, -213, -205, -193, -185, -177, -169, -157, -149, -141, - 133, -121, -113, -105, -97, -85, -77, -69, -61, -49, -41, -33, -25, 19, 27, 35, 43, 55, 63, 71, 79, 91, 99, 107, 115, 127, 135, 143, 151, 163, 171, 179, 187, 199, 207, 215, 223, 235, 243, 251, 259, 271, 279, 287, 295, 307, 315, 323, 331, 343, 351, 359, 367, 379, 387, 395, 403, 415, 423, 431, 439, 451, 459, 467, 475, 487].

According to a fifteenth aspect, this application provides a communication apparatus. The communication apparatus is configured to perform the method according to any one of the thirteenth aspect or the possible implementations of the thirteenth aspect. The communication apparatus includes units for performing the method according to any one of the thirteenth aspect or the possible implementations of the thirteenth aspect.

According to a sixteenth aspect, this application provides a communication apparatus. The communication apparatus is configured to perform the method according to any one of the fourteenth aspect or the possible implementations of the fourteenth aspect. The communication apparatus includes units for performing the method according to any one of the fourteenth aspect or the possible implementations of the fourteenth aspect.

In the fifteenth aspect or the sixteenth aspect, the communication apparatus may include a transceiver module and a processing module. For specific descriptions of the transceiver module and the processing module, refer to the following apparatus embodiments. For beneficial effects of the fifteenth aspect and the sixteenth aspect, refer to related descriptions of the thirteenth aspect and the fourteenth aspect. Details are not described herein again.

According to a seventeenth aspect, this application provides a communication apparatus. The communication apparatus includes a processor, configured to perform the method according to any one of the first aspect, the second aspect, the fifth aspect, the sixth aspect, the ninth aspect, the tenth aspect, the thirteenth aspect, the fourteenth aspect, or the possible implementations of any one of the aspects. Alternatively, the processor is configured to execute a program stored in a memory. When the program is executed, the method according to the first aspect, the second aspect, the fifth aspect, the sixth aspect, the ninth aspect, the tenth aspect, the thirteenth aspect, the fourteenth aspect, or any possible implementation of any one of the aspects is performed.

With reference to the seventeenth aspect, in a possible implementation, the memory is located outside the communication apparatus.

With reference to the seventeenth aspect, in a possible implementation, the memory is located in the communication apparatus.

In this application, the processor and the memory may alternatively be integrated into one component. In other words, the processor and the memory may alternatively be integrated together. For example, the communication apparatus may be a chip.

With reference to the seventeenth aspect, in a possible implementation, the communication apparatus further includes a transceiver, and the transceiver is configured to transmit or receive a PPDU or a trigger frame.

According to an eighteenth aspect, this application provides a communication apparatus. The communication apparatus includes a logic circuit and an interface, and the logic circuit is coupled to the interface. The interface is configured to exchange (or transmit/receive, or input/output) information or data, and the logic circuit is configured to run a program instruction, and the communication apparatus performs the method described in the first aspect, the second aspect, the fifth aspect, the sixth aspect, the ninth aspect, the tenth aspect, the thirteenth aspect, the fourteenth aspect, or any possible implementation of any one of the aspects. The interface may be a communication interface or a transceiver. The transceiver may be a radio frequency module in the communication apparatus, a combination of a radio frequency module and an antenna, or an input/output interface of a chip or a circuit.

According to a nineteenth aspect, this application provides a readable storage medium. The readable storage medium stores program instructions. When the program instructions are run on a computer, the computer is enabled to perform the method described in any one of the first aspect, the second aspect, the fifth aspect, the sixth aspect, the ninth aspect, the tenth aspect, the thirteenth aspect, the fourteenth aspect, or any possible implementation of any one of the aspects.

According to a twentieth aspect, this application provides a computer program product including a program instruction. When the computer program product runs, the method described in any one of the first aspect, the second aspect, the fifth aspect, the sixth aspect, the ninth aspect, the tenth aspect, the thirteenth aspect, the fourteenth aspect, or any possible implementation of any one of the aspects is performed.

According to a twenty-second aspect, this application provides a wireless communication system. The wireless communication system includes a first communication apparatus and/or a second communication apparatus. The first communication apparatus is configured to perform the method described in any one of the first aspect, the fifth aspect, the ninth aspect, the thirteenth aspect, or any possible implementation of any one of the aspects. The second communication apparatus is configured to perform the method described in any one of the second aspect, the sixth aspect, the tenth aspect, the fourteenth aspect, or any possible implementation of any one of the aspects.

For technical effects achieved in the foregoing aspects, mutual reference may be made to the foregoing aspects, or reference may be made to beneficial effects in the following method embodiments. Details are not described herein.

### BRIEF DESCRIPTION OF DRAWINGS

FIG. 1 is a network architectural diagram of a wireless communication system according to an embodiment of this application;
FIG. 2a is a diagram of a structure of an access point according to an embodiment of this application;
FIG. 2b is a diagram of a structure of a station according to an embodiment of this application;
FIG. 3 is a diagram of a tone plan and an RU plan at 20 MHz according to an embodiment of this application;
FIG. 4 is a diagram of a tone plan and an RU plan at 40 MHz according to an embodiment of this application;
FIG. 5 is a diagram of a tone plan and an RU plan at 80 MHz according to an embodiment of this application;
FIG. 6 is a schematic flowchart of uplink multi-user transmission according to an embodiment of this application;
FIG. 7 is a diagram of a frame format of an EHT variant user information field according to an embodiment of this application;
FIG. 8 is a schematic flowchart of a communication method based on a distributed resource unit according to an embodiment of this application;
FIG. 9 is a block diagram of dRU transmission based on BCC coding according to an embodiment of this application;
FIG. 10 is a block diagram of dRU transmission based on LDPC coding according to an embodiment of this application;
FIG. 11 is a logical architectural diagram of a dRU in a 40 MHz bandwidth according to an embodiment of this application;
FIG. 12 is a logical architectural diagram of a dRU in an 80 MHz bandwidth according to an embodiment of this application;
FIG. 13 is another schematic flowchart of a communication method based on a distributed resource unit according to an embodiment of this application;
FIG. 14 is a diagram of a structure of a communication apparatus according to an embodiment of this application;
FIG. 15 is a diagram of another structure of a communication apparatus according to an embodiment of this application; and
FIG. 16 is a diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "One or more of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" all mean that an apparatus performs corresponding processing in an objective situation, and are not intended to limit time. The terms do not mean that the apparatus is required to perform a determining action during implementation, and do not mean any other limitation. The apparatus performing the corresponding processing in the objective situation includes: The corresponding processing can be performed when the objective situation is met; or the corresponding processing can be performed only when the objective situation and other situations are met.

In this application, "simultaneously" may be understood as "concurrently" or being at a same time point, or may be understood as being in a period of time, or may be understood as being in a same periodicity. This may be specifically understood with reference to context.

In this application, unless otherwise specified, an element indicated in a singular form is intended to indicate "one or more", but does not indicate "one and only one".

It may be understood that in embodiments of this application, "B corresponding to A," "A corresponds to B," or a similar expression indicates that B is associated with A and B may be determined based on A. Determining B based on A does not mean that B is determined based only on A. B may alternatively be determined based on A and/or other information.

The technical solutions provided in embodiments of this application may be applied to a wireless local area network (wireless local area network, WLAN) scenario, for example, support 802.11 related standards of the Institute of Electrical and Electronics Engineers (institute of electrical and electronics engineers, IEEE), for example, the 802.11a/b/g standard, the 802.11n standard, the 802.11ac standard, the 802.11ax standard, or next-generation Wi-Fi protocols of IEEE 802.11ax, for example, 802.11be, Wi-Fi 7, extremely high throughput (extremely high throughput, EHT), 802.11ad, 802.11ay, or 802.11bf, or next-generation protocols of 802.11be, or Wi-Fi 8; or may be further applied to a wireless personal area network system based on ultra wide band (ultra wide band, UWB), for example, the 802.15 series standard; or may be further applied to a sensing (sensing) system, for example, the 802.11bf series standard; or may be further applied to the 802.11bn standard or an ultra-high reliability (ultra-high reliability, UHR) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

The technical solutions in the embodiments of this application may be applied to a scenario of communication between an access point and a station, or may be applied to a scenario of communication between access points, or may be applied to a scenario of communication between stations. In embodiments of this application, the term "communication" may also be described as "data transmission", "information transmission", or "transmission". In the embodiments of this application, the term "transmission" may also be described as "transmitting" and/or "receiving".

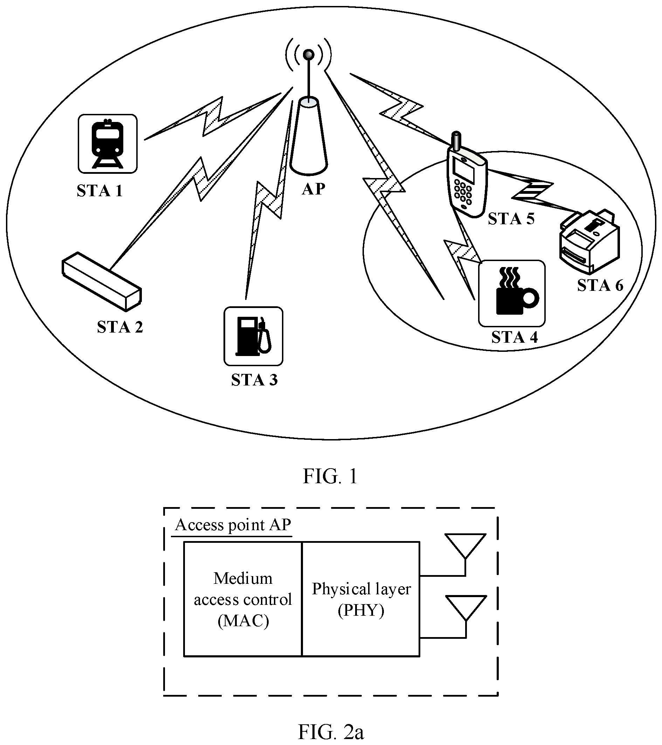

Refer to FIG. 1. FIG. 1 is a network architectural diagram of a wireless communication system according to an embodiment of this application. As shown in FIG. 1, the wireless communication system may include one or more access point (access point, AP) stations (station, STA) and one or more non access point stations (none access point station, non-AP STA). For ease of description, in this specification, an access point station (AP STA) is briefly referred to as an access point (AP), and a non-access point station (non-AP STA) is briefly referred to as a station (STA). The AP and the STA support a WLAN communication protocol. The communication protocol may include 802.11bn (or referred to as UHR), and may further include protocols such as 802.11be, 802.11ax, and 802.11ac. Certainly, with continuous evolution and development of communication technologies, the communication protocol may further include a next generation protocol of 802.11bn, and the like. A WLAN is used as an example, an apparatus for implementing the method in this application may be an AP or an STA in the WLAN, or a chip or a processing system installed in the AP or the STA.

It may be understood that FIG. 1 is described by using an example in which the wireless communication system includes one AP and six stations (STA 1, STA 2, STA 3, STA 4, STA 5 and STA 6). In actual application, the wireless communication system may include more or fewer APs and STAs. A quantity of APs and a quantity of STAs in the wireless communication system are not limited in this application.

In a possible implementation, an access point (for example, AP in FIG. 1) may be an apparatus having a wireless communication function, supporting communication using a WLAN protocol, and having a function of communicating with other devices (for example, stations or other access points) in a WLAN network. The apparatus having the wireless communication function may be an entire device, or may be a chip or processing system installed in the entire device. A device in which the chip or the processing system is installed may implement the methods and the functions in embodiments of this application under control of the chip or the processing system. The access point may be deployed in a home, inside a building, or inside a campus, with a coverage radius ranging from tens of meters to hundreds of meters. Certainly, the access point may also be deployed outdoors. The access point is equivalent to a bridge that connects a wired network and a wireless network, and is mainly used to connect various wireless network clients together and connect the wireless network to the Ethernet. For example, the access point may be a terminal device (such as a mobile phone) with a wireless-fidelity (wireless-fidelity, Wi-Fi) chip or a network device (such as a communication entity such as a communication server, a router, a switch, or a bridge).

The access point in this application may be a device that supports the 802.11bn standard. Certainly, the access point may also support multiple WLAN standards of the 802.11 family, such as 802.11be, 802.11bf, 802.11ax, 802.11ac, 802.11n, 802.11g, 802.11b, 802.11ad, 802.11ay, and 802.11a. The access point may further support a UWB or a sensing-related protocol.

In a possible implementation, a station (for example, any station in FIG. 1) may be an apparatus having a wireless communication function, supporting communication using a WLAN protocol, and having a capability of communicating with other stations or access points in a WLAN network. The apparatus having the wireless communication function may be an entire device, or may be a chip or processing system installed in the entire device. A device in which the chip or the processing system is installed may implement the methods and the functions in embodiments of this application under control of the chip or the processing system. The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function.

The station in this application may also be a device that supports the 802.11bn standard. Certainly, the station may also support multiple WLAN standards of the 802.11 family, such as 802.11be, 802.11bf, 802.11ax, 802.11ac, 802.11n, 802.11g, 802.11b, 802.11ad, 802.11ay, and 802.11a. The station may further support a UWB or a sensing-related protocol.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, infrastructure (for example, a vending machine, a self-service navigation station of a supermarket, a self-service cash register device, or a self-service ordering machine) in daily life scenarios, a device in a large sports and music venue, or the like. Specific forms of the station and the access point are not limited in embodiments of this application, and are merely examples for description herein.

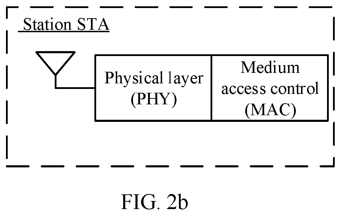

It should be understood that the 802.11 standard focuses on a physical layer (physical layer, PHY) and a medium access control (medium access control, MAC) layer. In an example, refer to FIG. 2a. FIG. 2a is a diagram of a structure of an access point according to an embodiment of this application. The AP may be a multi-antenna/multi-radio frequency, or may be a single-antenna/single-radio frequency. The antenna/radio frequency is used to transmit/receive a physical layer protocol data unit (physical layer protocol data unit, PPDU). In an implementation, an antenna part or a radio frequency part of the AP may be separated from a main body part of the AP, that is, may be remotely arranged. In FIG. 2a, the AP may include a physical layer processing circuit and a medium access control processing circuit. The physical layer processing circuit may be configured to process a physical layer signal, and the MAC layer processing circuit may be configured to process a MAC layer signal. For another example, FIG. 2b is a schematic diagram of a structure of a station according to an embodiment of this application. FIG. 2b is a diagram of a structure of a single-antenna/single-radio frequency STA. In an actual scenario, the STA may alternatively be multi-antenna/multi-radio frequency, and may be a device with at least two antennas. The antenna/radio frequency is used to transmit/receive a data packet. In an implementation, an antenna part or a radio frequency part of the STA may be separated from a main body part of the STA, that is, may be remotely arranged. In FIG. 2b, the STA may include a PHY processing circuit and a MAC processing circuit. The physical layer processing circuit may be configured to process a physical layer signal, and the MAC layer processing circuit may be configured to process a MAC layer signal.

In some embodiments, in the communication system shown in FIG. 1, the AP may be replaced with an access point multi-link device (AP multi-link device, AP MLD), and the STA may be replaced with a non-access point multi-link device (non-AP multi-link device, non-AP MLD). That is, the technical solutions provided in embodiments of this application may also be applied to a scenario in which a multi-link device (multi-link device, MLD) communicates with a multi-link device. The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STAs). The affiliated STA is a logic station and may operate on one link. The station to which the terminal belongs may be an access point (AP) or a non-access point station (non-AP STA). A multi-link device whose affiliated station is an AP may be referred to as an AP MLD, and a multi-link device whose affiliated station is a non-AP STA may be referred to as a non-AP MLD.

In a possible implementation, the multi-link device (which may be a non-AP MLD or an AP MLD herein) in embodiments of this application is an apparatus having a wireless communication function. The apparatus may be an integrated device, or may be a chip, a processing system, or the like installed in the integrated device. A device in which the chip or processing system is installed may implement methods and functions in embodiments of this application under control of the chip or processing system.

Although the embodiments of this application are mainly described by using an example in which a network in which the Institute of Electrical and Electronics Engineers (institute of electrical and electronics engineers, IEEE) 802.11 is deployed, a person skilled in the art easily understands that various aspects of this application may be extended to another network using various standards or protocols. For example, personal local area network (personal area network, PAN), Bluetooth (BLUETOOTH), high-performance wireless LAN (high performance radio LAN, HIPERLAN) (a wireless standard similar to the IEEE 802.11 standard, mainly used in Europe), wide area network (wide area network, WAN), or other networks known or developed in the future. Therefore, regardless of used coverage and a used wireless access protocol, various aspects provided in this application are applicable to any appropriate wireless network.

The following briefly describes some terms or nouns in this application.

### 1. Tone plan (tone plan) based on a resource unit (resource unit, RU)

Wireless local area network (WLAN) has been developed for many generations, including 802.11a/b/g, 802.11n, 802.11ac, 802.11ax, 802.11be, and 802.11bn. 802.11n is also called high throughput (high throughput, HT), 802.11ac is also called very high throughput (very high throughput, VHT), 802.11ax is also called high efficient (high efficient, HE), 802.11be is also called extremely high throughput (extremely high throughput, EHT) and 802.11bn is also called Ultra High Reliability (Ultra High Reliability, UHR). In terms of a bandwidth configuration, the following bandwidth configurations such as 20 MHz, 40 MHz, 80 MHz, 160 MHz, and 80 MHz+80 MHz are currently supported in 802.11ax. A difference between 160 MHz and 80 MHz+80 MHz lies in that the former is a contiguous frequency band, whereas the latter includes two 80 MHz bands that may be non-contiguous. In 802.11be, only contiguous frequency bands are supported, and the bandwidths of 20 MHz, 40 MHz, 80 MHz, 160 MHz, and 320 MHz are supported.

For example, in 802.11ax and 802.11be, an orthogonal frequency division multiplexing access (orthogonal frequency division multiplexing access, OFDMA) transmission manner is defined, to improve spectrum utilization. In the OFDMA transmission manner, some contiguous subcarriers in a bandwidth may be grouped into one resource unit (resource unit, RU). For example, in 802.11ax and 802.11be, nine 26-tone RUs are defined in a 20 MHz bandwidth, each 26-tone RU has 26 contiguous subcarriers, and one 26-tone RU may be allocated to one user for usage. This manner can improve a quantity of users for accessing. For ease of description, this application mainly describes tone plan (Tone Plan) currently defined in the 802.11be standard. The following separately describes tone planes and RU plans at different bandwidths.

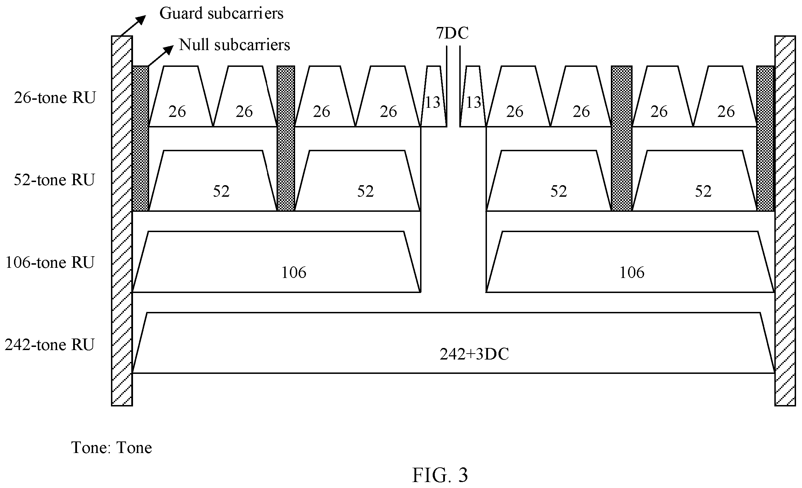

Refer to FIG. 3. FIG. 3 is a diagram of a tone plan and an RU plan at 20 MHz according to an embodiment of this application. As shown in FIG. 3, when a bandwidth is 20 MHz, the entire bandwidth (that is, 20 MHz) may include one 242-tone RU, or include various combinations of a 26-tone RU, a 52-tone RU, and a 106-tone RU. Each RU includes a data subcarrier and a pilot subcarrier, the data subcarrier is used to carry data information, and the pilot subcarrier is used to estimate a phase offset and/or a frequency offset. In addition to the RU, the bandwidth of 20 MHz further includes some guard (guard) subcarriers, null subcarriers, and/or direct current (direct current, DC) subcarriers.

It may be understood that the 242-tone RU may be understood as an RU including 242 subcarriers. Similarly, the 26-tone RU may be understood as an RU including 26 subcarriers, the 52-tone RU may be understood as an RU including 52 subcarriers, and the 106-tone RU may be understood as an RU including 106 subcarriers.

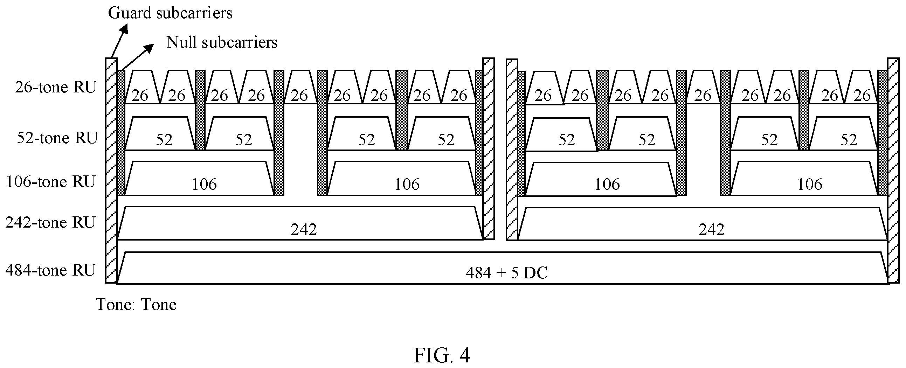

Refer to FIG. 4. FIG. 4 is a diagram of a tone plan and an RU plan at 40 MHz according to an embodiment of this application. As shown in FIG. 4, when a bandwidth is 40 MHz, the entire bandwidth (that is, 40 MHz) may include one 484-tone RU, or include various combinations of a 26-tone RU, a 52-tone RU, a 106-tone RU, and a 242-tone RU. The 484-tone RU may be understood as an RU including 484 subcarriers.

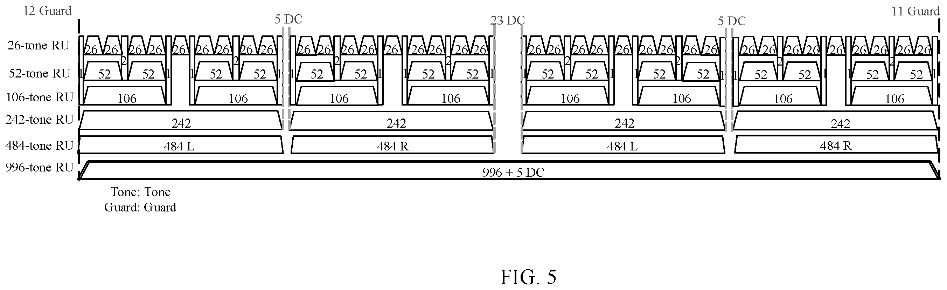

Refer to FIG. 5. FIG. 5 is a diagram of a tone plan and an RU plan at 80 MHz according to an embodiment of this application. As shown in FIG. 5, when a bandwidth is 80 MHz, the entire bandwidth (that is, 80 MHz) may include one 996-tone RU, or include various combinations of a 26-tone RU, a 52-tone RU, a 106-tone RU, a 242-tone RU, and a 484-tone RU. The 996-tone RU may be understood as an RU including 996 subcarriers. As shown in FIG. 5, 484L in FIG. 5 represents a left half of a 484-tone RU (that is, a subcarrier range [-500:-17] or a subcarrier range [17:500]), and 484R in FIG. 5 represents a right half of the 484-tone RU. 484L and 484R each include 242 subcarriers, and are another illustration of 484+5DC. The 996-tone RU may be understood as an RU including 996 subcarriers. The "left" and "right" herein mean only a relative relationship relative to a central location in frequency domain. 484-tone RU [-500:-17] is used as an example. On an actual frequency domain resource, "484L" is a low frequency part relative to a frequency domain center of the 484-tone RU, that is, [-500:-259], and "484R" is a high frequency part relative to the frequency domain center of the 484-tone RU, that is, [-258:-17]. Similarly, 484-tone RU[17:500] is used as an example. "484L" is [17:258], "484R" is [259:500].

It may be understood that in this application, [a:b] may refer to all integers from x to y (a and b are also integers), that is, a, (a+1), (a+2), (a+3), ..., b. Details are not described in the following. For example, [259:500] that is, 259, 260, 261, 262, ..., 498, 499, 500.

When a bandwidth is 160 MHz, the entire bandwidth (that is, 160 MHz) may be understood as a replication of two 80 MHz tone plans. The entire bandwidth (that is, 160 MHz) may include two 996-tone RUs or various combinations of a 26-tone RU, a 52-tone RU, a 106-tone RU, a 242-tone RU, a 484-tone RU, and a 996-tone RU. When a bandwidth is 320 MHz, the entire bandwidth (that is, 320 MHz) may be understood as a replication of four 80 MHz tone plans. Details are not described herein again.

In the foregoing tone plans shown in FIG. 3 to FIG. 5, a 242-tone RU is used as a unit. It is assumed that a leftmost RU in FIG. 3 to FIG. 5 is at a lowest frequency, and a rightmost RU in FIG. 3 to FIG. 5 is at a highest frequency. From left to right, 242-tone RUs can be numbered as follows: first (1st), second (2nd), ..., sixteenth (16th). It may be understood that, using a bandwidth of 320 MHz as an example, a 320 MHz channel may be divided into a maximum of sixteen 20 MHz channels, and each 20 MHz channel corresponds to one 242-tone RU.

In terms of bandwidth, a 26-tone RU approximately corresponds to 2 MHz, a 52-tone RU approximately corresponds to 4 MHz, a 106-tone RU approximately corresponds to 8 MHz, and a 242-tone RU approximately corresponds to 20 MHz. A bandwidth corresponding to an RU of another size (size) may be correspondingly deduced through addition or multiplication. Details are not described herein again.

It may be understood that, because the 802.11be standard allows a plurality of RUs to be allocated to one STA, that is, a plurality of RUs are combined and allocated to one STA, the 802.11be standard supports a multi-resource unit (multiple RU, MRU). In other words, in the 802.11be standard, in addition to the RUs mentioned above, some MRUs are further introduced. For example, one 52-tone RU and one 26-tone RU may form a 52+26-tone MRU, and one 106-tone RU and one 26-tone RU may form a 106+26-tone MRU. For another example, one 484-tone RU and one 242-tone RU may form a 484+242-tone MRU, and one 996-tone RU and one 484-tone RU may form a 996+484-tone MRU. For another example, one 996-tone RU, one 484-tone RU, and one 242-tone RU may form a 996+484+242-tone MRU, two 996-tone RUs and one 484-tone RU may form a 2×996+484-tone MRU, three 996-tone RUs may form a 3×996-tone MRU, three 996-tone RUs and one 484-tone RU may form a 3×996+484-tone MRU, and the like. It may be understood that, with continuous evolution and development of communication technologies, a next generation standard of 802.11be may support more RU or MRU formats. This is not limited in this application.

### 2. Uplink multi-user transmission

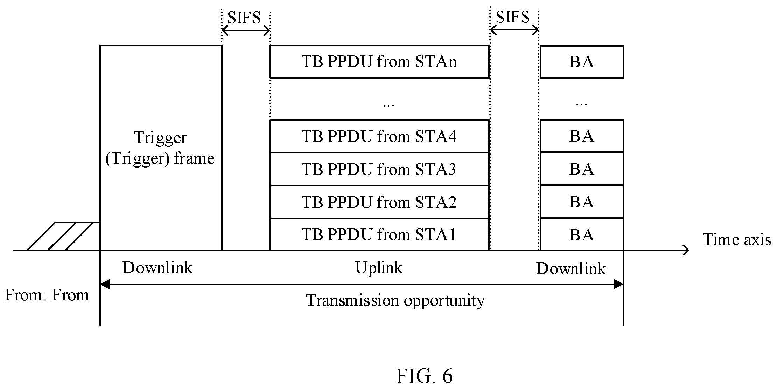

Uplink multi-user transmission is an important technology. Refer to FIG. 6. FIG. 6 is a schematic flowchart of uplink multi-user transmission according to an embodiment of this application. As shown in FIG. 6, a procedure of uplink multi-user transmission may include: An AP transmits a trigger frame for triggering uplink multi-user transmission, where the trigger frame carries identifier information and resource allocation information of one or more stations. After receiving the trigger frame, each station transmits an uplink data frame on an allocated resource unit (RU) using a trigger based physical layer protocol data unit (trigger based physical layer protocol data unit, TB PPDU), and receives an acknowledgement (block acknowledge, BA) frame transmitted by the AP after a short inter-frame space (short inter-frame space, SIFS).

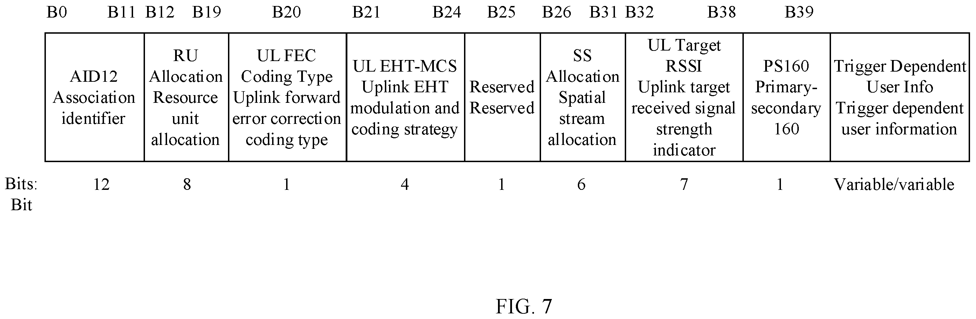

In a possible implementation, the trigger frame may include but is not limited to a common information field and a user information list field. The common information field may include common information that needs to be read by all STAs scheduled by using the trigger frame. In 802.11be, the user information list field of the trigger frame may include but is not limited to one or more EHT variant user information fields (EHT variant User Info fields). An EHT variant user information field may include information that an EHT STA needs to read. Refer to FIG. 7. FIG. 7 is a diagram of a frame format of an EHT variant user information field according to an embodiment of this application. As shown in FIG. 7, the EHT variant user information field includes but is not limited to a resource unit allocation subfield (RU allocation subfield) and a primary-secondary 160 subfield (PS160 subfield). The RU allocation subfield and the PS160 subfield may jointly indicate (a size and a location of) an RU or an MRU. For example, a mapping relationship among a B0 bit of the RU allocation subfield, B7 to B1 bits of the RU allocation subfield, the PS160 subfield, and RUs/MRUs is shown in Table 1 below. Table 1: Interpretation of an RU allocation subfield and a PS160 subfield in an 802.11be trigger frame

**Table 1**

| **PS160 subfield (PS160 subfield)** | **B0 of the RU allocation subfield (B0 of the RU allocation subfield)** | **B7 to B1 of the RU allocation subfield (B7 to B1 of the RU allocation subfield)** | **Bandwidth (MHz) (Bandwidth)** | **RU/MRU size (RU/MRU size)** | **RU/MRU index (RU/MRU index)** | **PHY RU/MRU index (PHY RU/MRU index)** |
|---|---|---|---|---|---|---|
| 0-3: (indicates 80 MHz where the RU is located) | | 0-8 | 20, 40, 80, 160, or 320 | 26 | RU1 to RU9, respectively (separately/ in order/in sequence) | 37×N+ RU index |
| | | 9-17 | 40, 80, 160, or 320 | | RU10 to RU18, respectively | |
| | | 18 | 80, 160, or 320 | | Reserved (reserved) | |
| | | 19-36 | 80, 160, or 320 | | RU20 to RU37, respectively | |
| | | 37-40 | 20, 40, 80, 160, or 320 | 52 | RU1 to RU4, respectively | 16×N+RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×N+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4×N+ |
| | | 62 | 40, 80, 160, or 320 | | RU2 | RU index |
| | | 63, 64 | 80, 160, or 320 | | RU3 and RU4, respectively | |
| | | 65 | 40, 80, 160, or 320 | 484 | RU1 | 2×N+ RU index |
| | | 66 | 80, 160, or 320 | | RU2 | |
| | | 67 | 80, 160, or 320 | 996 | RU1 | N+RU index |
| 0-1: (indicate s 160 MHz where the RU is located) | 0 | 68 | Reserved (reserved) | | | Reserved (reserved) |
| | 1 | | 160 or 320 | 2×996 | RU1 | X1+RU index |
| 0 | 0 | 69 | Reserved (reserved) | | | Reserved (reserved) |
| 0 | 1 | | | | | |
| 1 | 0 | | | | | |
| 1 | 1 | | 320 | 4×996 | RU1 | RU1 |
| 0-3: indicates 80 MHz where the MRU is located | | 70-72 | 20, 40, 80, 160, or 320 | 52+26 | MRU1 to MRU3, respectively | 12×N+M RU index |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×N+MR U index |
| | | 84, 85 | 40, 80, 160, or 320 | 106+26 | MRU3 and MRU4, respectively | |
| | | 86-89 | 80, 160, or 320 | 106+26 | MRU5 to MRU8, respectively | |
| | | 90-93 | 80, 160, or 320 | 484+242 | MRU1 to MRU4, respectively | 4×N+MR U index |
| 0-1: indicates 160 MHz where the MRU is located | 0 | 94, 95 | 160 or 320 | 996+484 | MRU1 and MRU2, respectively | 4×X1+M RU index |
| | 1 | | | | MRU3 and MRU4, respectively | |
| 0-1: indicates 160 MHz where the MRU is located | 0 | 96-99 | 160 or 320 | 996+484+2 42 | MRU1 to MRU4, respectively | 8×X1+M RU index |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 +484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any (any) | Reserved | Reserved | Reserved |
| Note: In the primary 160 MHz, if B0 of the RU allocation subfield is set to 0, it is indicated that the RU/MRU allocation is applied to the primary 80 MHz, and if B0 of the RU allocation subfield is set to 1, it is indicated that the RU/MRU allocation is applied to the secondary 80 MHz. In the secondary 160 MHz, if B0 of the RU allocation subfield is set to 0, it is indicated that the RU/MRU allocation is applied to the lower 80 MHz, and if B0 of the RU/MRU allocation is set to 1, it is indicated that the RU/MRU allocation is applied to the higher 80 MHz. | | | | | | |

In a possible implementation, N in Table 1 may be obtained by using a formula N=2*X1+X0. For values of X1 and X0, refer to the following Table 2. Table 2 shows a lookup table for X1 and N (Lookup table for X1 and N).

**Table 2**

| **Bandwidth (MHz)** | **Inputs (Inputs)** | | | **Outputs (Outputs)** | | |
|---|---|---|---|---|---|---|
| | **Configuration (Configuration)** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

It should be understood that in Table 2, P80 represents a primary 80 MHz channel, S80 represents a secondary 80 MHz channel, and S160 represents a secondary 160 MHz channel.

The configuration in Table 2 refers to a sequence of P80, S80, and S160 in an absolute frequency domain, and the sequence from left to right indicates from low frequency to high frequency. For example, [P80 S80] indicates that the primary 80 MHz channel is a first 80 MHz channel from low frequency to high frequency, and the secondary 80 MHz channel is a second 80 MHz channel from low frequency to high frequency. In other words, [P80 S80] indicates that the primary 80 MHz channel is a lower 80 MHz channel, and the secondary 80 MHz channel is a higher 80 MHz channel. For another example, [S80 P80 S160] indicates that the secondary 80 MHz channel is a lower 80 MHz channel in a lower 160 MHz channel, the primary 80 MHz channel is a higher 80 MHz channel in the lower 160 MHz channel, and the secondary 160 MHz channel is a higher 160 MHz channel.

### 3. Distributed resource unit (distributed resource unit, dRU)

Both the European Telecommunications Standards Institute (ETSI) and the Federal Communications Commission of the United States have issued regulations on the 6 GHz spectrum, which limit a maximum power and a maximum power spectral density during transmission. Compared with the maximum power during transmission, a limit of the maximum power spectral density is stricter, and an allowed maximum transmit power is generally more limited by a power spectral density (power spectral density, PSD). Due to the limit of the maximum power spectral density, the transmit power of a single contiguous RU is limited. It should be understood that a contiguous RU in this application is an RU including a plurality of contiguous subcarriers, or the contiguous RU is an RU including two contiguous subcarrier groups, a plurality of subcarriers included in each contiguous subcarrier group are contiguous, and the two contiguous subcarrier groups are spaced apart only by a guard subcarrier, a null subcarrier, or a direct current subcarrier. Certainly, the contiguous RU may also have another name, for example, a regular RU (regular RU, rRU). The "contiguous RU" and the "regular RU" may be used interchangeably. A name of the contiguous RU is not limited in this application.

The maximum power spectral density refers to a maximum transmit power of 1 MHz bandwidth, or the maximum power spectral density is limited in a form in which the transmit power of the 1 MHz bandwidth does not exceed x dBm (dBm=10lg(mW), where lg represents a base-10 logarithm). The minimum granularity of the maximum power spectral density is 1 MHz. Therefore, the distributed RU technology is proposed to increase the transmit power without changing the transmit power of 1 MHz, that is, without changing the power spectral density. The distributed RU corresponds to the consecutive RUs. The distributed RU includes a plurality of discrete subcarriers in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency. It should be understood that the "distributed RU" and the "dRU" in this specification may be used interchangeably. It should be further understood that the distributed RU mentioned in this specification is an RU whose subcarriers are discrete in frequency domain, that is, an RU having this feature is referred to as a distributed RU in this specification. However, in practice, an RU having this feature may have another name. This is not limited in this application.

For a dRU and a contiguous RU (or rRU) that include a same quantity of subcarriers, a bandwidth spanned by the dRU from a low-frequency start location to a high-frequency end location in frequency domain is greater than a frequency domain bandwidth occupied by the contiguous RU. In this way, when the maximum power spectral density is the same, the total transmit power of the dRU may be higher than the total transmit power of the contiguous RUs. In other words, when the power spectral density is limited, a limited number of subcarriers (for example, 26 subcarriers included in consecutive 26-tone RUs) are discretely allocated to a wider bandwidth, that is, more subcarriers (for example, two odd-numbered subcarriers in consecutive 26-tone RUs), to increase the transmit power. Therefore, compared with the contiguous RU, when the dRU is used for data transmission, the transmit power on each subcarrier can be increased, the total transmit power can be increased, and a signal to noise ratio (signal to noise ratio, SNR) can be increased.

In this embodiment of this application, it may be understood that, in a transmission process of a user (for example, an STA), a transmit power of each subcarrier in a resource unit allocated to the STA is the same. Taking a subcarrier spacing of 78.125 kHz as an example, 1 MHz includes 12.8 (1000/78.125=12.8, approximately 13) subcarriers. It is assumed that a transmit power of 1 MHz does not exceed p mW (that is, a maximum power spectral density). A maximum value of a quantity of subcarriers that carry a signal in any 13 consecutive subcarriers determines an average power of each subcarrier, and further determines a transmit power of the signal. The transmit power of the signal is equal to a product of the average power of each subcarrier and the quantity of subcarriers. For example, assuming that a maximum of five subcarriers in any 13 consecutive subcarriers (1 MHz) carry a signal, an average power of each subcarrier in a 1 MHz bandwidth is (p/5) mW. Assuming that a maximum of two subcarriers in any 13 consecutive subcarriers (1 MHz) carry a signal, an average power of each subcarrier in a 1 MHz bandwidth is (p/2) mW. In other words, when the maximum power spectral density is fixed, a larger quantity of subcarriers that carry a signal in any 13 consecutive subcarriers indicates a smaller average power on each subcarrier and a smaller total transmit power. It can be learned that, assuming that a resource unit allocated to the STA is a 26-tone dRU, that is, a quantity of subcarriers carrying a signal is 26, if there are at most two subcarriers carrying a signal in any 13 consecutive subcarriers of the tone plan, for example, a bandwidth occupied by the 26-tone dRU is 26/2=13 MHz, an average power of each subcarrier in a 1 MHz bandwidth is (p/2) mW, and the total transmit power of the 26-tone dRU may be calculated according to the total transmit power of subcarriers, which is specifically (p/2)*26 mW, or is calculated based on a bandwidth occupied by a subcarrier, and is specifically 13*p mW. If the resource unit allocated to the STA is a contiguous 26-tone RU, since the contiguous 26-tone RU includes 26 contiguous subcarriers (two groups of 13 contiguous subcarriers), that is, a bandwidth occupied by the contiguous 26-tone RU is 2 MHz, an average power of each subcarrier in a 1 MHz bandwidth is (p/13) mW, and the total transmit power of the contiguous 26-tone RU may be calculated based on the total transmit power of the subcarriers, which is specifically (p/13)*26 mW, or is calculated based on a bandwidth occupied by a subcarrier, and is specifically 2*p mW. In contrast, under the same maximum power spectral density, the total transmit power of the 26-tone dRU is 6.5 times higher than the total transmit power of the contiguous 26-tone RU. The symbol "*" in this specification may represent "multiply" or "multiplied by". Details are not described below.

In an implementation, the dRU may be designed based on an equal subcarrier spacing. For example, a subcarrier spacing of a 26-tone dRU in a 20 MHz bandwidth is 9, that of a 26-tone dRU in a 40 MHz bandwidth is 18, and that of a 26-tone dRU in an 80 MHz bandwidth is 36. In the prior art, eight 52-tone dRUs are constructed in a 40 MHz bandwidth, and sixteen 52-tone dRUs and eight 106-tone dRUs are constructed in an 80 MHz bandwidth. A subcarrier spacing of a 26-tone dRU in a 40 MHz bandwidth is 18, and a subcarrier spacing of a 52-tone dRU is 9. Theoretically, nine 52-tone dRUs can be constructed in a 40 MHz bandwidth. Similarly, a subcarrier spacing of a 26-tone dRU in an 80 MHz bandwidth is 36, a subcarrier spacing of a 52-tone dRU is 18, and a subcarrier spacing of a 106-tone dRU is 9. Theoretically, eighteen 52-tone dRUs and nine 106-tone dRUs can be constructed in an 80 MHz bandwidth. In other words, in the prior art, one 52-tone dRU is wasted in a 40 MHz bandwidth, and two 52-tone dRUs and one 106-tone dRU are wasted in an 80 MHz bandwidth.

Based on this, this application provides a design of dRU tone plan (tone plan). The dRU tone plan may be applied to uplink and/or downlink transmission. For the dRU tone plan in different bandwidths (for example, 40 MHz or 80 MHz), refer to descriptions in the following embodiments. Details are not described herein again. This application provides a communication method and apparatus based on distributed resource units. A dRU in a 40 MHz/80 MHz dRU tone plan is used for transmission, a transmit power of a device can be increased without increasing a power spectral density, and spectrum utilization can be improved (this is because the 40 MHz and 80 MHz tone plans designed in this embodiment of this application include more dRUs).

In addition, when dRU resource allocation is performed based on an indication of an RU or an MRU in 802.11be, a maximum of eight 52-tone dRUs may be indicated in a 40 MHz bandwidth, a maximum of sixteen 52-tone dRUs and eight 106-tone dRUs may be indicated in an 80 MHz bandwidth, a maximum of thirty-two 52-tone dRUs and sixteen 106-tone dRUs may be indicated in a 160 MHz bandwidth, and a maximum of sixty-four 52-tone dRUs and thirty-two 106-tone dRUs may be indicated in a 320 MHz bandwidth. Therefore, if more dRUs are included in 40 MHz, 80 MHz, 160 MHz, or 320 MHz bandwidths, how to use these dRUs (for example, using a ninth 52-tone dRU in a 40 MHz bandwidth, or using a seventeenth or eighteenth 52-tone dRU in an 80 MHz bandwidth, or using a ninth 106-tone dRU in an 80 MHz bandwidth) for transmission to improve spectrum utilization becomes a problem to be urgently solved.

Therefore, this application further provides another communication method and apparatus based on distributed resource units. An existing RU/MRU indication manner is reused, and additional entries are added to indicate more dRUs, and a station can perform uplink communication by using more dRUs, thereby improving spectrum utilization of uplink transmission.

In a possible implementation, a 26-tone dRU in this application may be understood as a dRU including 26 subcarriers. Similarly, a 52-tone dRU may be understood as a dRU including 52 subcarriers, a 106-tone dRU may be understood as a dRU including 106 subcarriers, a 242-tone dRU may be understood as a dRU including 242 subcarriers, a 484-tone dRU may be understood as a dRU including 484 subcarriers, and a 996-tone dRU may be understood as a dRU including 996 subcarriers. Details are not described below.

In this application, a dRU includes a plurality of discrete subcarriers in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency.

The communication apparatus in this application may support 802.11 series protocols, for example, an 802.11bn standard, or a next-generation standard of 802.11bn. Certainly, the communication apparatus in this application may also support multiple WLAN standards of the 802.11 family, such as 802.11be, 802.11bf, 802.11ax, 802.11ac, 802.11n, 802.11g, 802.11b, 802.11ad, 802.11ay, and 802.11a. The communication apparatus in this application may further support another standard protocol, for example, a sensing or ranging standard, which is not listed one by one herein.

In this application, unless otherwise specified, same or similar parts of embodiments or implementations may be mutually referenced. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

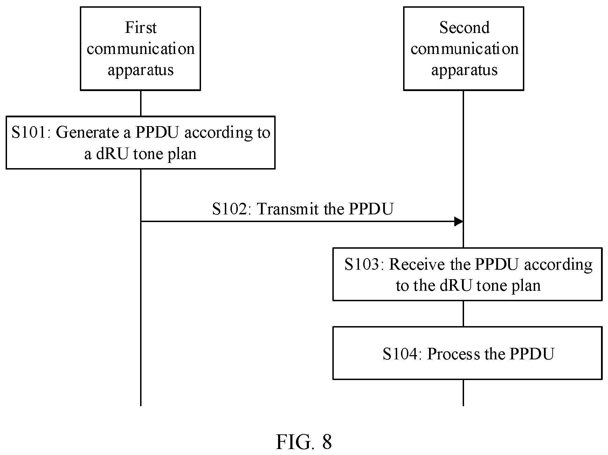

Refer to FIG. 8. FIG. 8 is a schematic flowchart of a communication method based on a distributed resource unit according to an embodiment of this application. In the method, a first communication apparatus may be the AP or the STA in FIG. 1, and correspondingly, a second communication apparatus may be the STA or the AP in FIG. 1. Certainly, the first communication apparatus in the method may also be an AP MLD or a non-AP MLD, and correspondingly, the second communication apparatus may be a non-AP MLD or an AP MLD. This is not limited in this embodiment of this application.

As shown in FIG. 8, the communication method based on the distributed resource unit includes, but is not limited to, the following steps.

S101: The first communication apparatus generates a PPDU according to a dRU tone plan.

S102: The first communication apparatus transmits the PPDU.

S103: The second communication apparatus receives the PPDU according to the dRU tone plan.

S104: The second communication apparatus processes the PPDU.

In a possible implementation, when a bandwidth (or a distributed bandwidth) is 40 MHz, the dRU tone plan may include eighteen 26-tone dRUs, or nine 52-tone dRUs, or four 106-tone dRUs, or two 242-tone dRUs, or one 484-tone dRU, or various combinations of 26-tone dRUs, 52-tone dRUs, 106-tone dRUs, and 242-tone dRUs. A ninth 52-tone dRU includes subcarrier indexes of [-234, -225, -216, -207, -198, -189, -180, -171, -162, -153, -144, -135, -126, -117, -108, -99, -90, -81, -72, -63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243]. When a bandwidth (or a distribution bandwidth) is 80 MHz, the dRU tone plan may include thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A second 52-tone dRU in the eighteen 52-tone dRUs includes a subcarrier with a subcarrier index of 457, and a seventh 52-tone dRU in the eighteen 52-tone dRUs includes subcarriers with subcarrier indexes of 19, 55, 91, 127, 163, 199, 235, 271, 307, 343, 379, 415, and 451. A first 106-tone dRU in the nine 106-tone dRUs includes a subcarrier with a subcarrier index of 457, and a fourth 106-tone dRU in the nine 106-tone dRUs includes subcarriers with subcarrier indexes of 19, 55, 91, 127, 163, 199, 235, 271, 307, 343, 379, 415, and 451. Alternatively, when a bandwidth (or a distribution bandwidth) is 80 MHz, the dRU tone plan may include thirty-seven (or thirty-six) 26-tone dRUs, or eighteen 52-tone dRUs, or nine 106-tone dRUs, or four 242-tone dRUs, or two 484-tone dRUs, or one 996-tone dRU, or various combinations of 26-tone dRUs, 52-tone dRUs, 106-tone dRUs, 242-tone dRUs, and 484-tone dRUs. A subcarrier spacing in a 52-tone dRU is greater than or equal to 18, and a subcarrier spacing in a 106-tone dRU is greater than or equal to 9. For example, for the content of a dRU tone plan at a 40 MHz or 80 MHz bandwidth, refer to the following descriptions. A distribution bandwidth may represent a bandwidth where subcarriers of a dRU are distributed. The distribution bandwidth may be less than or equal to a PPDU bandwidth (which may be a transmission bandwidth herein).

In a possible implementation, the first communication apparatus may generate a PPDU according to a dRU tone plan (dRU tone plan) at a bandwidth (for example, 40 MHz or 80 MHz), and transmit the PPDU. It may be understood that a dRU tone plan at a bandwidth includes a plurality of dRUs, and the first communication apparatus may generate and transmit a PPDU based on one or more dRUs in the dRU tone plan corresponding to the bandwidth. In other words, in actual application, when the first communication apparatus generates and transmits the PPDU, only some (for example, one or more) dRUs in the dRU tone plan may be used, and other dRUs in the dRU tone plan are not used. In other words, the PPDU generated and/or transmitted by the first communication apparatus does not carry information on some subcarriers of the transmission bandwidth of the PPDU.

In a possible implementation, when the first communication apparatus is an AP or an AP MLD, and the second communication apparatus is an STA or a non-AP MLD, the first communication apparatus may determine, based on a dRU tone plan corresponding to a specific bandwidth (for example, 40 MHz/80 MHz), a dRU used by the first communication apparatus, and a signal (signal, SIG) field of a PPDU may carry information (for example, a size and/or a location) about the dRU used by the first communication apparatus. The dRU may be one or more of dRU tone plans corresponding to the specific bandwidth. Correspondingly, after receiving (or parsing) the SIG field of the PPDU, the second communication apparatus may receive another part (for example, data data) of the PPDU on the dRU. In other words, the second communication apparatus may receive the PPDU on a dRU of a dRU tone plan corresponding to a bandwidth.

In a possible implementation, when the first communication apparatus is an STA or a non-AP MLD, and the second communication apparatus is an AP or an AP MLD, the second communication apparatus may transmit a frame used for triggering, where the frame used for triggering includes indication information, and the indication information indicates a dRU allocated to the first communication apparatus. The dRU allocated to the first communication apparatus is one or more dRUs in the dRU tone plan (dRU tone plan). After receiving the frame used for triggering, the first communication apparatus may determine, based on the indication information in the frame used for triggering, the dRU allocated to the first communication apparatus, and may generate and transmit the PPDU based on the dRU and the dRU tone plan. The second communication apparatus may receive the PPDU from the first communication apparatus according to the dRU allocated to the first communication apparatus and the dRU tone plan, and process the PPDU.

It may be understood that there may be one or more first communication apparatuses (for example, stations STAs), and the second communication apparatus (for example, an AP) may allocate a corresponding dRU to each of the one or more first communication apparatuses (for example, STAs). For example, the second communication apparatus (for example, an AP) may determine, based on the dRU tone plan (dRU tone plan), dRUs allocated to the one or more first communication apparatuses (for example, STAs). A specific determining manner may be an internal policy of the second communication apparatus (for example, the AP). This is not limited in this embodiment of this application. A second communication apparatus (for example, an AP) transmits a trigger frame, to trigger uplink multi-user transmission. The trigger frame includes one or more pieces of indication information. One piece of indication information indicates a dRU allocated to one first communication apparatus (for example, an STA). dRUs allocated to different first communication apparatuses (for example, STAs) may be different and do not conflict with each other (for example, different dRUs of a same size, or dRUs of different sizes that do not conflict with each other). In other words, the dRUs allocated by the second communication apparatus (for example, an AP) to the plurality of first communication apparatuses (for example, STAs) may be different dRUs of a same size (size), or dRUs of different sizes (size) that do not conflict with each other. In other words, the second communication apparatus (for example, an AP) may simultaneously schedule dRUs of different sizes that do not conflict with each other. For example, the second communication apparatus may allocate dRUs to two first communication apparatuses by using one trigger frame. A dRU allocated to one first communication apparatus is a first 52-tone dRU, and a dRU allocated to the other first communication apparatus is a third 106-tone dRU.

Correspondingly, each first communication apparatus (such as an STA) that is scheduled by the second communication apparatus (such as an AP) for uplink multi-user transmission receives the trigger frame. For ease of description, a first communication apparatus (for example, an STA) is used as an example for description in this application. The first communication apparatus (for example, the STA) determines, based on the indication information in the trigger frame, a dRU allocated to the first communication apparatus, and may transmit a PPDU by using the dRU allocated to the first communication apparatus (for example, transmit a trigger based PPDU (trigger based PPDU, TB PPDU)).

It may be further understood that, because the second communication apparatus (for example, the AP) may simultaneously schedule a plurality of first communication apparatuses (for example, STAs) to perform uplink transmission, the second communication apparatus (for example, the AP) may determine, based on a dRU allocated to each first communication apparatus (for example, the STA) and a dRU tone plan, which data on a subcarrier belongs to a same first communication apparatus (for example, the STA), and the second communication apparatus (for example, the AP) may distinguish uplink data from different first communication apparatuses (for example, STAs).

In a possible implementation, the frame used for triggering may use various possible frame formats, and may be a type of a control frame in a MAC frame specified in a standard, which is referred to as a trigger frame (trigger frame), or may be another MAC frame with a trigger function. This is not limited in this embodiment of this application. Another MAC frame with a trigger function may also be referred to as a MAC frame with a triggered response scheduling (triggered response scheduling, TRS) function, and the function is generally implemented by including a TRS Control subfield (TRS control subfield) in the MAC frame. For example, the indication information may be carried in an RU/dRU allocation (RU/dRU allocation) field of a user info field (user information field) in the trigger frame, or may be carried in an RU/dRU allocation field of a TRS Control subfield in another MAC frame. For another example, a field (for example, a dRU allocation (dRU allocation) field) may be added to a user info field (user information field) of the trigger frame to carry the indication information. Similarly, a field (for example, a dRU allocation (dRU allocation) field) may be added to a TRS Control subfield of another MAC frame to carry the indication information. In this case, a user info field (user information field) may include both an RU allocation field and a dRU allocation field. Therefore, more information may be required to indicate whether the RU allocation field or the dRU allocation field in the user info field is enabled.

It may be understood that a structure of the foregoing frame used for triggering is not limited in this embodiment of this application, and a manner of carrying the indication information in the foregoing frame used for triggering and a corresponding frame format are not limited.

In a possible implementation, the indication information may indicate a dRU allocated to the first communication apparatus (for example, the STA). The dRU may be determined by using a size (size) and a location. A size (size) of the dRU may be a quantity of subcarriers in the dRU, and a location of the dRU may be a location of a subcarrier in the dRU in frequency domain. Generally, a subcarrier index range (subcarrier index range) may indicate a location of a subcarrier in a dRU in frequency domain. In this embodiment of this application, a size and a location of a dRU comply with a size and a location defined in the following dRU tone plan.

In a possible implementation, that the first communication apparatus transmits the PPDU includes that the first communication apparatus transmits data information of the PPDU on data subcarriers of a dRU, and may transmit pilot information of the PPDU on pilot subcarriers of the dRU. A specific subcarrier included in the dRU may be determined according to a dRU tone plan (tone plan). For the dRU tone plan, refer to following descriptions. Details are not described herein again.

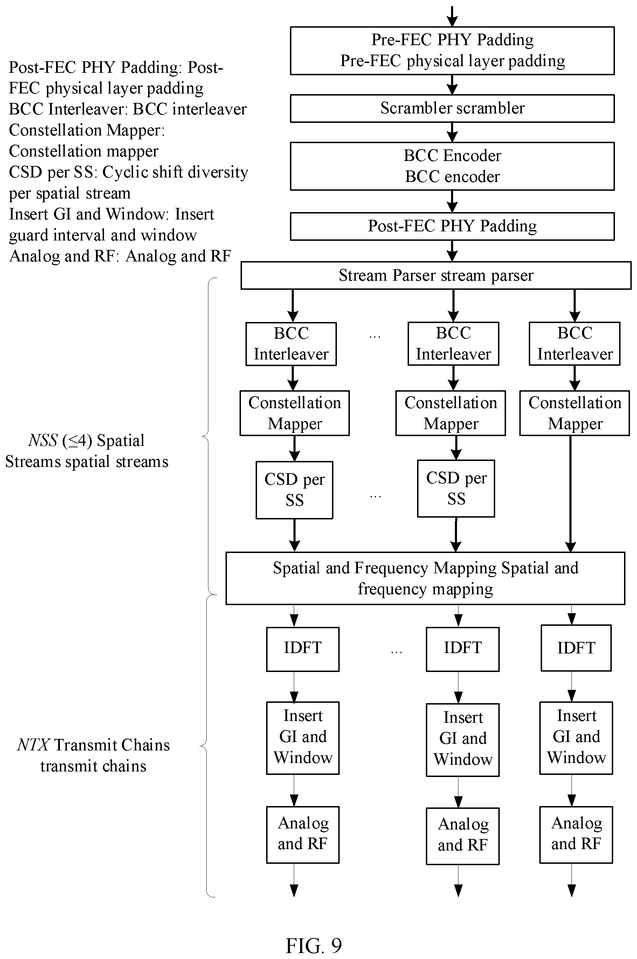

For example, dRU transmission based on binary convolutional code (binary convolutional code, BCC) coding is used as an example. A process in which the first communication apparatus transmits the PPDU may be shown in FIG. 9. FIG. 9 is a block diagram of dRU transmission based on BCC coding according to an embodiment of this application. As shown in FIG. 9, after performing BCC interleaving (BCC interleaving) on a signal, the first communication apparatus may perform constellation mapping (constellation mapping). In a constellation mapping process, a frequency domain sequence of the signal may be mapped to a plurality of subcarriers of a dRU, subsequent processing (for example, cyclic shift diversity (cyclic shift diversity, CSD), spatial and frequency mapping, inverse discrete Fourier transform (inverse discrete fourier transform, IDFT), and insertion of a guard interval (guard interval, GI) and a window are performed on each stream) is performed, and finally, the signal is transmitted through analog and radio frequency (Analog and RF) operations.

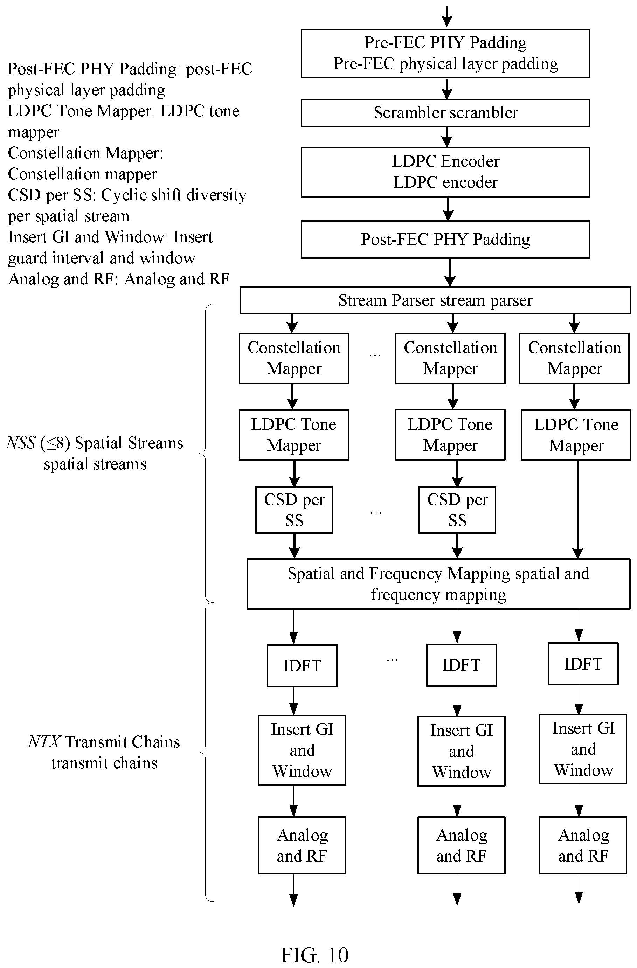

For example, dRU uplink transmission based on low-density parity-check (low-density parity check, LDPC) coding is as an example, a process in which the first communication apparatus transmits the PPDU may be shown in FIG. 10. FIG. 10 is a block diagram of dRU transmission based on LDPC coding according to an embodiment of this application. As shown in FIG. 10, after performing a stream parsing (Stream Parser) operation on a signal, a first communication apparatus performs constellation mapping for each stream. In a constellation mapping process, a frequency domain sequence of the signal may be mapped to multiple subcarriers of a dRU, after subsequent processing (for example, LDPC subcarrier mapping, cyclic shift diversity (CSD), space and frequency mapping, inverse discrete Fourier transform (IDFT), and guard interval (guard interval, GI) and window insertion are performed on each stream after constellation mapping), and finally, the stream is transmitted through analog and radio frequency (Analog and RF) operations.

The block diagrams shown in FIG. 9 and FIG. 10 may be understood as a process of generating and transmitting a PPDU. It may be understood that, for a process of generating and transmitting a PPDU, refer to the prior art (for example, an existing 802.11be standard). Only a brief description is provided herein. It may be further understood that a receiving and processing process of a PPDU may be an inverse process of a process of generating and transmitting the PPDU, and details are not described herein.

The following describes dRU tone plans of different bandwidths provided in this embodiment of this application by using examples.

### (1) 40 MHz dRU tone plan

In 802.11be, each 40 MHz bandwidth includes eight 52-tone RUs (as shown in FIG. 4), and eight 52-tone dRUs may be obtained by discretely allocating the eight 52-tone RUs to the 40 MHz bandwidth. In addition, as described above, to improve spectrum utilization, one additional 52-tone dRU may be constructed in the 40 MHz bandwidth. Therefore, in this embodiment of this application, the 40 MHz dRU tone plan may include nine 52-tone dRUs. This embodiment of this application mainly focuses on a ninth 52-tone dRU in the 40 MHz dRU tone plan.

For ease of description, in this application, dRUs of different sizes (size) are numbered. For example, for nine 52-tone dRUs in the 40 MHz dRU tone plan, if numbering starts from a value 0, an index (index) of a first 52-tone dRU is 0 (which may also be represented as 52-tone dRU 0), an index (index) of a second 52-tone dRU is 1 (which may also be represented as 52-tone dRU 1), and so on, an index (index) of the ninth 52-tone dRU is 8 (which may also be represented as 52-tone dRU 8). If numbering starts from a value 1, an index (index) of the first 52-tone dRU is 1 (which may also be represented as a 52-tone dRU 1), an index (index) of the second 52-tone dRU is 2 (which may also be represented as a 52-tone dRU 2), and so on, an index (index) of the ninth 52-tone dRU is 9 (which may also be represented as a 52-tone dRU 9). Similarly, other dRUs (such as 26-tone dRU, 106-tone dRU, 242-tone dRU and 484-tone dRU) in the 40 MHz dRU tone plan may be numbered in a similar manner, and details are not described herein. Similarly, for dRUs in a dRU tone plan of another bandwidth, a similar numbering manner may also be used, and details are not described below.

In this embodiment of this application, an example in which indexes are numbered from a value 1 is used. Details are not described below.

In a possible implementation, the ninth 52-tone dRU in the 40 MHz dRU tone plan may include subcarriers of 26-tone dRUs 5 and 14 (that is, 26-tone dRUs with indexes of 5 and 14, or a fifth 26-tone dRU and a fourteenth 26-tone dRU). Alternatively, subcarriers included in the ninth 52-tone dRU are the same as subcarriers included in 26-tone dRUs 5 and 14.

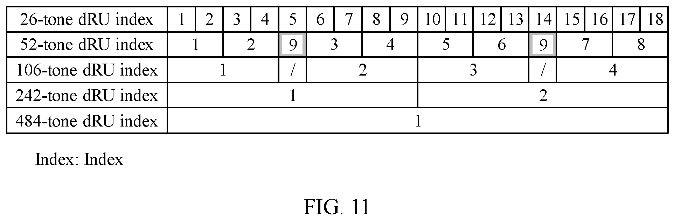

Refer to FIG. 11. FIG. 11 is a logical architectural diagram of a dRU in a 40 MHz bandwidth according to an embodiment of this application. As shown in FIG. 11, a 40 MHz bandwidth may include eighteen 26-tone dRUs, and the eighteen 26-tone dRUs may construct nine 52-tone dRUs. The 52-tone dRU 9 includes subcarriers that form 26-tone dRUs 5 and 14 (that is, 26-tone dRUs with indexes of 5 and 14). It may be understood that the logical architecture of the dRU shown in FIG. 11 is merely an example. In actual application, an index mapping relationship between dRUs of different sizes (size) may alternatively be in another form. This is not limited in this embodiment of this application.

In this embodiment of this application, "a dRU with an index of x" may be a dRU with a physical dRU index (PHY dRU index) of x. Details are not described below.

For example, subcarriers included in the ninth 52-tone dRU in the 40 MHz dRU tone plan are shown in the following Table 3. Subcarriers included in the 26-tone dRU 5 and 14 are shown in Table 4.

**Table 3**

| 52-tone dRU index | Index of constituent 26-tone dRUs | Subcarrier index |
|---|---|---|
| 9 | 5, 14 | [-234, -225, -216, -207, -198, -189, -180, -171, -162, -153, -144, -135, -126, -117, -108, -99, -90, -81, -72, -63, -54, -45, - 36, -27, -18, -9, 18, 27, 36, 45, 54, 63, 72, 81, 90, 99, 108, 117, 126, 135, 144, 153, 162, 171, 180, 189, 198, 207, 216, 225, 234, 243] |

**Table 4**

| 26-tone dRU index | Subcarrier index |
|---|---|
| 5 | [-225, -207, -189, -171, -153, -135, -117, -99, -81, -63, -45, -27, -9, 27, 45, 63, 81, 99, 117, 135, 153, 171, 189, 207, 225, 243] |
| 14 | [-234, -216, -198, -180, -162, -144, -126, -108, -90, -72, -54, -36, -18, 18, 36, 54, 72, 90, 108, 126, 144, 162, 180, 198, 216, 234] |

It may be understood that the 26-tone dRU index and the 52-tone dRU index in Table 3 and the 26-tone dRU index in Table 4 may refer to a physical dRU index (PHY dRU index). It may be further understood that the index values in Table 3 and Table 4 are merely examples, and may be replaced with other values in actual application. An index value of a dRU in a dRU tone plan is not limited in this embodiment of this application.

In this embodiment of this application, the ninth 52-tone dRU is defined in the 40 MHz bandwidth, and more frequency domain resources are used in the 40 MHz bandwidth, thereby improving spectrum utilization, and increasing transmit power of a device without increasing a power spectral density.

### (2) 80 MHz dRU tone plan 1

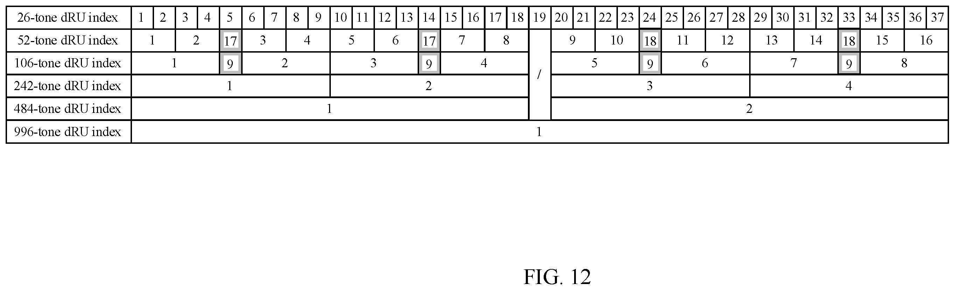

Refer to FIG. 12. FIG. 12 is a logical architectural diagram of a dRU in an 80 MHz bandwidth according to an embodiment of this application. As shown in FIG. 12, an 80 MHz bandwidth may include thirty-seven 26-tone dRUs (the 26-tone dRU 19 is not defined), where thirty-two 26-tone dRUs may be used to construct sixteen 52-tone dRUs or eight 106-tone dRUs, and remaining four 26-tone dRUs (that is, 26-tone dRUs 5, 14, 24, and 33) may be used to construct a seventeenth 52-tone dRU and an eighteenth 52-tone dRU, or may be used to construct a ninth 106-tone dRU.

In a possible implementation, the 26-tone dRU 5, 14, 24, and 33 include 26×4=104 subcarriers in total, and the 104 subcarriers may be arranged in ascending (or descending) order of subcarrier indexes. There are two manners for constructing the seventeenth 52-tone dRU and the eighteenth 52-tone dRU. One manner is that one 52-tone dRU includes a first subcarrier and a second subcarrier of every four subcarriers in the 104 subcarriers that are arranged in sequence, and the other 52-tone dRU includes a third subcarrier and a fourth subcarrier of every four subcarriers in the 104 subcarriers that are arranged in sequence. In another manner, one 52-tone dRU includes a first subcarrier and a third subcarrier of every four subcarriers in the 104 subcarriers that are arranged in sequence, and the other 52-tone dRU includes a second subcarrier and a fourth subcarrier of every four subcarriers in the 104 subcarriers that are arranged in sequence. In other words, in the 80 MHz bandwidth, the 52-tone dRU 17 (or the seventeenth 52-tone dRU) may include subcarriers of 26-tone dRUs 5 and 14, and correspondingly, the 52-tone dRU 18 (or the eighteenth 52-tone dRU) may include subcarriers of 26-tone dRUs 24 and 33 (that is, 26-tone dRUs with indexes of 24 and 33). Alternatively, in the 80 MHz bandwidth, the 52-tone dRU 17 may include subcarriers of the 26-tone dRUs 5 and 24, and correspondingly, the 52-tone dRU 18 may include subcarriers of the 26-tone dRUs 14 and 33 (that is, 26-tone dRUs with indexes of 24 and 33).

It may be understood that, although the 52-tone dRU 17 and the 52-tone dRU 18 constructed in the foregoing two manners are different, the 52-tone dRU 17 and the 52-tone dRU 18 constructed in the two manners may obtain a power increase of a same multiple compared with the 52-tone RU. For ease of description, in this embodiment of this application, for example, in the 80 MHz bandwidth, the 52-tone dRU 17 includes subcarriers forming 26-tone dRUs 5 and 14, and the 52-tone dRU 18 includes subcarriers forming 26-tone dRUs 24 and 33.

In another possible implementation, the 26-tone dRUs 5, 14, 24, and 33, and two additional subcarriers may be used to construct the ninth 106-tone dRU in the 80 MHz bandwidth. In other words, in this embodiment of this application, the dRU tone plan in the 80 MHz bandwidth may include nine 106-tone dRUs.

For example, subcarriers included in a 26-tone dRU in the 80 MHz bandwidth are shown in Table 5, subcarriers included in a 52-tone dRU are shown in Table 6, and subcarriers included in a 106-tone dRU are shown in Table 7. One 52-tone dRU may be understood as a combination of two 26-tone dRUs, or subcarriers included in one 52-tone dRU are the same as subcarriers included in two 26-tone dRUs. One 106-tone dRU may be understood as a combination of two 52-tone dRUs (or four 26-tone dRUs) and two additional subcarriers.

**Table 5**

| 26-tone dRU index | Subcarrier index |
|---|---|
| 1 | [-483, -447, -411, -375, -339, -303, -267, -231, -195, -159, -123, -87, -51, 17, 53, 89, 125, 161, 197, 233, 269, 305, 341, 377, 413, 449] |
| 2 | [-467, -431, -395, -359, -323, -287, -251, -215, -179, -143, -107, -71, -35, 33, 69, 105, 141, 177, 213, 249, 285, 321, 357, 393, 429, 465] |
| 3 | [-475, -439, -403, -367, -331, -295, -259, -223, -187, -151, -115, -79, -43, 25, 61, 97, 133, 169, 205, 241, 277, 313, 349, 385, 421, **457**] |
| 4 | [-459, -423, -387, -351, -315, -279, -243, -207, -171, -135, -99, -63, -27, 41, 77, 113, 149, 185, 221, 257, 293, 329, 365, 401, 437, 473] |
| 5 | [-451, -415, -379, -343, -307, -271, -235, -199, -163, -127, -91, -55, -19, 49, 85, 121, 157, 193, 229, 265, 301, 337, 373, 409, 445, 481] |
| 6 | [-479, -443, -407, -371, -335, -299, -263, -227, -191, -155, -119, -83, -47, 21, 57, 93, 129, 165, 201, 237, 273, 309, 345, 381, 417, 453] |
| 7 | [-463, -427, -391, -355, -319, -283, -247, -211, -175, -139, -103, -67, -31, 37, 73, 109, 145, 181, 217, 253, 289, 325, 361, 397, 433, 469] |
| 8 | [-471, -435, -399, -363, -327, -291, -255, -219, -183, -147, -111, -75, -39, 29, 65, 101, 137, 173, 209, 245, 281, 317, 353, 389, 425, 461] |
| 9 | [-455, -419, -383, -347, -311, -275, -239, -203, -167, -131, -95, -59, -23, 45, 81, 117, 153, 189, 225, 261, 297, 333, 369, 405, 441, 477] |
| 10 | [-477, -441, -405, -369, -333, -297, -261, -225, -189, -153, -117, -81, -45, 23, 59, 95, 131, 167, 203, 239, 275, 311, 347, 383, 419, 455] |
| 11 | [-461, -425, -389, -353, -317, -281, -245, -209, -173, -137, -101, -65, -29, 39, 75, 111, 147, 183, 219, 255, 291, 327, 363, 399, 435, 471] |
| 12 | [-469, -433, -397, -361, -325, -289, -253, -217, -181, -145, -109, -73, -37, 31, 67, 103, 139, 175, 211, 247, 283, 319, 355, 391, 427, 463] |
| 13 | [-453, -417, -381, -345, -309, -273, -237, -201, -165, -129, -93, -57, -21, 47, 83, 119, 155, 191, 227, 263, 299, 335, 371, 407, 443, 479] |
| 14 | [-450, -414, -378, -342, -306, -270, -234, -198, -162, -126, -90, -54, -18, 50, 86, 122, 158, 194, 230, 266, 302, 338, 374, 410, 446, 482] |
| 15 | [-481, -445, -409, -373, -337, -301, -265, -229, -193, -157, -121, -85, -49, **19**, 55, 91, 127, 163, 199, 235, 271, 307, 343, 379, 415, 451] |
| 16 | [-465, -429, -393, -357, -321, -285, -249, -213, -177, -141, -105, -69, -33, 35, 71, 107, 143, 179, 215, 251, 287, 323, 359, 395, 431, 467] |
| 17 | [-473, -437, -401, -365, -329, -293, -257, -221, -185, -149, -113, -77, -41, 27, 63, 99, 135, 171, 207, 243, 279, 315, 351, 387, 423, 459] |
| 18 | [-457, -421, -385, -349, -313, -277, -241, -205, -169, -133, -97, -61, -25, 43, 79, 115, 151, 187, 223, 259, 295, 331, 367, 403, 439, 475] |
| 19 | Undefined |
| 20 | [-482, -446, -410, -374, -338, -302, -266, -230, -194, -158, -122, -86, -50, 18, 54, 90, 126, 162, 198, 234, 270, 306, 342, 378, 414, 450] |
| 21 | [-466, -430, -394, -358, -322, -286, -250, -214, -178, -142, -106, -70, -34, 34, 70, 106, 142, 178, 214, 250, 286, 322, 358, 394, 430, 466] |
| 22 | [-474, -438, -402, -366, -330, -294, -258, -222, -186, -150, -114, -78, -42, 26, 62, 98, 134, 170, 206, 242, 278, 314, 350, 386, 422, 458] |
| 23 | [-458, -422, -386, -350, -314, -278, -242, -206, -170, -134, -98, -62, -26, 42, 78, 114, 150, 186, 222, 258, 294, 330, 366, 402, 438, 474] |
| 24 | [-449, -413, -377, -341, -305, -269, -233, -197, -161, -125, -89, -53, -17, 51, 87, 123, 159, 195, 231, 267, 303, 339, 375, 411, 447, 483] |
| 25 | [-478, -442, -406, -370, -334, -298, -262, -226, -190, -154, -118, -82, -46, 22, 58, 94, 130, 166, 202, 238, 274, 310, 346, 382, 418, 454] |
| 26 | [-462, -426, -390, -354, -318, -282, -246, -210, -174, -138, -102, -66, -30, 38, 74, 110, 146, 182, 218, 254, 290, 326, 362, 398, 434, 470] |
| 27 | [-470, -434, -398, -362, -326, -290, -254, -218, -182, -146, -110, -74, -38, 30, 66, 102, 138, 174, 210, 246, 282, 318, 354, 390, 426, 462] |
| 28 | [-454, -418, -382, -346, -310, -274, -238, -202, -166, -130, -94, -58, -22, 46, 82, 118, 154, 190, 226, 262, 298, 334, 370, 406, 442, 478] |
| 29 | [-476, -440, -404, -368, -332, -296, -260, -224, -188, -152, -116, -80, -44, 24, 60, 96, 132, 168, 204, 240, 276, 312, 348, 384, 420, 456] |
| 30 | [-460, -424, -388, -352, -316, -280, -244, -208, -172, -136, -100, -64, -28, 40, 76, 112, 148, 184, 220, 256, 292, 328, 364, 400, 436, 472] |
| 31 | [-468, -432, -396, -360, -324, -288, -252, -216, -180, -144, -108, -72, -36, 32, 68, 104, 140, 176, 212, 248, 284, 320, 356, 392, 428, 464] |
| 32 | [-452, -416, -380, -344, -308, -272, -236, -200, -164, -128, -92, -56, -20, 48, 84, 120, 156, 192, 228, 264, 300, 336, 372, 408, 444, 480] |
| 33 | [-448, -412, -376, -340, -304, -268, -232, -196, -160, -124, -88, -52, -16, 52, 88, 124, 160, 196, 232, 268, 304, 340, 376, 412, 448, 484] |
| 34 | [-480, -444, -408, -372, -336, -300, -264, -228, -192, -156, -120, -84, -48, 20, 56, 92, 128, 164, 200, 236, 272, 308, 344, 380, 416, 452] |
| 35 | [-464, -428, -392, -356, -320, -284, -248, -212, -176, -140, -104, -68, -32, 36, 72, 108, 144, 180, 216, 252, 288, 324, 360, 396, 432, 468] |
| 36 | [-472, -436, -400, -364, -328, -292, -256, -220, -184, -148, -112, -76, -40, 28, 64, 100, 136, 172, 208, 244, 280, 316, 352, 388, 424, 460] |
| 37 | [-456, -420, -384, -348, -312, -276, -240, -204, -168, -132, -96, -60, -24, 44, 80, 116, 152, 188, 224, 260, 296, 332, 368, 404, 440, 476] |

**Table 6**

| 52-tone dRU index | Index of constituent 26-tone dRUs | Subcarrier index |
|---|---|---|
| 1 | 1,2 | [-483, -467, -447, -431, -411, -395, -375, -359, -339, -323, -303, -287, -267, -251, -231, -215, -195, -179, -159, -143, -123, -107, -87, -71, -51, -35, 17, 33, 53, 69, 89, 105, 125, 141, 161, 177, 197, 213, 233, 249, 269, 285, 305, 321, 341, 357, 377, 393, 413, 429, 449, 465] |
| 2 | 3,4 | [-475, -459, -439, -423, -403, -387, -367, -351, -331, -315, -295, -279, -259, -243, -223, -207, -187, -171, -151, -135, -115, -99, - 79, -63, -43, -27, 25, 41, 61, 77, 97, 113, 133, 149, 169, 185, 205, 221, 241, 257, 277, 293, 313, 329, 349, 365, 385, 401, 421, 437, 457, 473] |
| 3 | 6,7 | [-479, -463, -443, -427, -407, -391, -371, -355, -335, -319, -299, -283, -263, -247, -227, -211, -191, -175, -155, -139, -119, -103, -83, -67, -47, -31, 21, 37, 57, 73, 93, 109, 129, 145, 165, 181, 201, 217, 237, 253, 273, 289, 309, 325, 345, 361, 381, 397, 417, 433, 453, 469] |
| 4 | 8,9 | [-471, -455, -435, -419, -399, -383, -363, -347, -327, -311, -291, -275, -255, -239, -219, -203, -183, -167, -147, -131, -111, -95, - 75, -59, -39, -23, 29, 45, 65, 81, 101, 117, 137, 153, 173, 189, 209, 225, 245, 261, 281, 297, 317, 333, 353, 369, 389, 405, 425, 441, 461, 477] |
| 5 | 10,11 | [-477, -461, -441, -425, -405, -389, -369, -353, -333, -317, -297, -281, -261, -245, -225, -209, -189, -173, -153, -137, -117, -101, -81, -65, -45, -29, 23, 39, 59, 75, 95, 111, 131, 147, 167, 183, 203, 219, 239, 255, 275, 291, 311, 327, 347, 363, 383, 399, 419, 435, 455, 471] |
| 6 | 12,13 | [-469, -453, -433, -417, -397, -381, -361, -345, -325, -309, -289, -273, -253, -237, -217, -201, -181, -165, -145, -129, -109, -93, - 73, -57, -37, -21, 31, 47, 67, 83, 103, 119, 139, 155, 175, 191, 211, 227, 247, 263, 283, 299, 319, 335, 355, 371, 391, 407, 427, 443, 463, 479] |
| 7 | 15,16 | [-481, -465, -445, -429, -409, -393, -373, -357, -337, -321, -301, -285, -265, -249, -229, -213, -193, -177, -157, -141, -121, -105, -85, -69, -49, -33, 19, 35, 55, 71, 91, 107, 127, 143, 163, 179, 199, 215, 235, 251, 271, 287, 307, 323, 343, 359, 379, 395, 415, 431, 451, 467] |
| 8 | 17,18 | [-473, -457, -437, -421, -401, -385, -365, -349, -329, -313, -293, -277, -257, -241, -221, -205, -185, -169, -149, -133, -113, -97, - 77, -61, -41, -25, 27, 43, 63, 79, 99, 115, 135, 151, 171, 187, 207, 223, 243, 259, 279, 295, 315, 331, 351, 367, 387, 403, 423, 439, 459, 475] |
| 9 | 20,21 | [-482, -466, -446, -430, -410, -394, -374, -358, -338, -322, -302, -286, -266, -250, -230, -214, -194, -178, -158, -142, -122, -106, -86, -70, -50, -34, 18, 34, 54, 70, 90, 106, 126, 142, 162, 178, 198, 214, 234, 250, 270, 286, 306, 322, 342, 358, 378, 394, 414, 430, 450, 466] |
| 10 | 22,23, | [-474, -458, -438, -422, -402, -386, -366, -350, -330, -314, -294, -278, -258, -242, -222, -206, -186, -170, -150, -134, -114, -98, -78, -62, -42, -26, 26, 42, 62, 78, 98, 114, 134, 150, 170, 186, 206, 222, 242, 258, 278, 294, 314, 330, 350, 366, 386, 402, 422, 438, 458, 474] |
| 11 | 25,26 | [-478, -462, -442, -426, -406, -390, -370, -354, -334, -318, -298, -282, -262, -246, -226, -210, -190, -174, -154, -138, -118, -102, -82, -66, -46, -30, 22, 38, 58, 74, 94, 110, 130, 146, 166, 182, 202, 218, 238, 254, 274, 290, 310, 326, 346, 362, 382, 398, 418, 434, 454, 470] |
| 12 | 27,28 | [-470, -454, -434, -418, -398, -382, -362, -346, -326, -310, -290, -274, -254, -238, -218, -202, -182, -166, -146, -130, -110, -94, - 74, -58, -38, -22, 30, 46, 66, 82, 102, 118, 138, 154, 174, 190, 210, 226, 246, 262, 282, 298, 318, 334, 354, 370, 390, 406, 426, 442, 462, 478] |
| 13 | 29,30 | [-476, -460, -440, -424, -404, -388, -368, -352, -332, -316, -296, -280, -260, -244, -224, -208, -188, -172, -152, -136, -116, -100, -80, -64, -44, -28, 24, 40, 60, 76, 96, 112, 132, 148, 168, 184, 204, 220, 240, 256, 276, 292, 312, 328, 348, 364, 384, 400, 420, 436, 456, 472] |
| 14 | 31,32 | [-468, -452, -432, -416, -396, -380, -360, -344, -324, -308, -288, -272, -252, -236, -216, -200, -180, -164, -144, -128, -108, -92, - 72, -56, -36, -20, 32, 48, 68, 84, 104, 120, 140, 156, 176, 192, 212, 228, 248, 264, 284, 300, 320, 336, 356, 372, 392, 408, 428, 444, 464, 480] |
| 15 | 34,35 | [-480, -464, -444, -428, -408, -392, -372, -356, -336, -320, -300, -284, -264, -248, -228, -212, -192, -176, -156, -140, -120, -104, -84, -68, -48, -32, 20, 36, 56, 72, 92, 108, 128, 144, 164, 180, 200, 216, 236, 252, 272, 288, 308, 324, 344, 360, 380, 396, 416, 432, 452, 468] |
| 16 | 36,37 | [-472, -456, -436, -420, -400, -384, -364, -348, -328, -312, -292, -276, -256, -240, -220, -204, -184, -168, -148, -132, -112, -96, - 76, -60, -40, -24, 28, 44, 64, 80, 100, 116, 136, 152, 172, 188, 208, 224, 244, 260, 280, 296, 316, 332, 352, 368, 388, 404, 424, 440, 460, 476] |
| **17** | **5,14** | [-451, -450, -415, -414, -379, -378, -343, -342, -307, -306, -271, -270, -235, -234, -199, -198, -163, -162, -127, -126, -91, -90, - 55, -54, -19, -18, 49, 50, 85, 86, 121, 122, 157, 158, 193, 194, 229, 230, 265, 266, 301, 302, 337, 338, 373, 374, 409, 410, 445, 446, 481, 482] |
| **18** | **24,33** | [-449, -448, -413, -412, -377, -376, -341, -340, -305, -304, -269, -268, -233, -232, -197, -196, -161, -160, -125, -124, -89, -88, - 53, -52, -17, -16, 51, 52, 87, 88, 123, 124, 159, 160, 195, 196, 231, 232, 267, 268, 303, 304, 339, 340, 375, 376, 411, 412, 447, 448, 483, 484] |

**Table 7**

| 106-tone dRU index | Index of constituent 26-tone dRUs | Index of two additional subcarriers | Subcarrier index |
|---|---|---|---|
| 1 | 1, 2, 3, 4 | [-495, 485] | [-495, -483, -475, -467, -459, -447, -439, -431, -423, -411, -403, -395, -387, -375, -367, -359, -351, -339, -331, -323, -315, -303, -295, -287, -279, -267, -259, -251, -243, -231, -223, -215, -207, -195, -187, -179, -171, -159, -151, -143, -135, -123, -115, -107, -99, -87, -79, -71, -63, -51, -43, -35, -27, 17, 25, 33, 41, 53, 61, 69, 77, 89, 97, 105, 113, 125, 133, 141, 149, 161, 169, 177, 185, 197, 205, 213, 221, 233, 241, 249, 257, 269, 277, 285, 293, 305, 313, 321, 329, 341, 349, 357, 365, 377, 385, 393, 401, 413, 421, 429, 437, 449, 457, 465, 473, 485] |
| 2 | 6, 7, 8, 9 | [-491, 489] | [-491, -479, -471, -463, -455, -443, -435, -427, -419, -407, -399, -391, -383, -371, -363, -355, -347, -335, -327, -319, -311, -299, -291, -283, -275, -263, -255, -247, -239, -227, -219, -211, -203, -191, -183, -175, -167, -155, -147, -139, -131, -119, -111, -103, -95, -83, -75, -67, -59, - 47, -39, -31, -23, 21, 29, 37, 45, 57, 65, 73, 81, 93, 101, 109, 117, 129, 137, 145, 153, 165, 173, 181, 189, 201, 209, 217, 225, 237, 245, 253, 261, 273, 281, 289, 297, 309, 317, 325, 333, 345, 353, 361, 369, 381, 389, 397, 405, 417, 425, 433, 441, 453, 461, 469, 477, 489] |
| 3 | 10, 11, 12, 13 | [-489, 491] | [-489, -477, -469, -461, -453, -441, -433, -425, -417, -405, -397, -389, -381, -369, -361, -353, -345, -333, -325, -317, -309, -297, -289, -281, -273, -261, -253, -245, -237, -225, -217, -209, -201, -189, -181, -173, -165, -153, -145, -137, -129, -117, -109, -101, -93, -81, -73, -65, -57, -45, -37, -29, -21, 23, 31, 39, 47, 59, 67, 75, 83, 95, 103, 111, 119, 131, 139, 147, 155, 167, 175, 183, 191, 203, 211, 219, 227, 239, 247, 255, 263, 275, 283, 291, 299, 311, 319, 327, 335, 347, 355, 363, 371, 383, 391, 399, 407, 419, 427, 435, 443, 455, 463, 471, 479, 491] |
| 4 | 15, 16, 17, 18 | [-493, 487] | [-493, -481, -473, -465, -457, -445, -437, -429, -421, -409, -401, -393, -385, -373, -365, -357, -349, -337, -329, -321, -313, -301, -293, -285, -277, -265, -257, -249, -241, -229, -221, -213, -205, -193, -185, -177, -169, -157, -149, -141, -133, -121, -113, -105, -97, -85, -77, -69, -61, -49, -41, -33, -25, 19, 27, 35, 43, 55, 63, 71, 79, 91, 99, 107, 115, 127, 135, 143, 151, 163, 171, 179, 187, 199, 207, 215, 223, 235, 243, 251, 259, 271, 279, 287, 295, 307, 315, 323, 331, 343, 351, 359, 367, 379, 387, 395, 403, 415, 423, 431, 439, 451, 459, 467, 475, 487] |
| 5 | 20, 21, 22, 23 | [-494, 486] | [-494, -482, -474, -466, -458, -446, -438, -430, -422, -410, -402, -394, -386, -374, -366, -358, -350, -338, -330, -322, -314, -302, -294, -286, -278, -266, -258, -250, -242, -230, -222, -214, -206, -194, -186, -178, -170, -158, -150, -142, -134, -122, -114, -106, -98, -86, -78, -70, -62, -50, -42, -34, -26, 18, 26, 34, 42, 54, 62, 70, 78, 90, 98, 106, 114, 126, 134, 142, 150, 162, 170, 178, 186, 198, 206, 214, 222, 234, 242, 250, 258, 270, 278, 286, 294, 306, 314, 322, 330, 342, 350, 358, 366, 378, 386, 394, 402, 414, 422, 430, 438, 450, 458, 466, 474, 486] |
| 6 | 25, 26, 27, 28 | [-490, 490] | [-490, -478, -470, -462, -454, -442, -434, -426, -418, -406, -398, -390, -382, -370, -362, -354, -346, -334, -326, -318, -310, -298, -290, -282, -274, -262, -254, -246, -238, -226, -218, -210, -202, -190, -182, -174, -166, -154, -146, -138, -130, -118, -110, -102, -94, -82, -74, -66, -58, -46, -38, -30, -22, 22, 30, 38, 46, 58, 66, 74, 82, 94, 102, 110, 118, 130, 138, 146, 154, 166, 174, 182, 190, 202, 210, 218, 226, 238, 246, 254, 262, 274, 282, 290, 298, 310, 318, 326, 334, 346, 354, 362, 370, 382, 390, 398, 406, 418, 426, 434, 442, 454, 462, 470, 478, 490] |
| 7 | 29, 30, 31, 32 | [-488, 492] | [-488, -476, -468, -460, -452, -440, -432, -424, -416, -404, -396, -388, -380, -368, -360, -352, -344, -332, -324, -316, -308, -296, -288, -280, -272, -260, -252, -244, -236, -224, -216, -208, -200, -188, -180, -172, -164, -152, -144, -136, -128, -116, -108, -100, -92, -80, -72, -64, -56, -44, -36, -28, -20, 24, 32, 40, 48, 60, 68, 76, 84, 96, 104, 112, 120, 132, 140, 148, 156, 168, 176, 184, 192, 204, 212, 220, 228, 240, 248, 256, 264, 276, 284, 292, 300, 312, 320, 328, 336, 348, 356, 364, 372, 384, 392, 400, 408, 420, 428, 436, 444, 456, 464, 472, 480, 492] |
| 8 | 34, 35, 36, 37 | [-492, 488] | [-492, -480, -472, -464, -456, -444, -436, -428, -420, -408, -400, -392, -384, -372, -364, -356, -348, -336, -328, -320, -312, -300, -292, -284, -276, -264, -256, -248, -240, -228, -220, -212, -204, -192, -184, -176, -168, -156, -148, -140, -132, -120, -112, -104, -96, -84, -76, -68, -60, -48, -40, -32, -24, 20, 28, 36, 44, 56, 64, 72, 80, 92, 100, 108, 116, 128, 136, 144, 152, 164, 172, 180, 188, 200, 208, 216, 224, 236, 244, 252, 260, 272, 280, 288, 296, 308, 316, 324, 332, 344, 352, 360, 368, 380, 388, 396, 404, 416, 424, 432, 440, 452, 460, 468, 476, 488] |
| 9 | 5,14, 24,33 | [-500, 16] | [-500, -451, -450, -449, -448, -415, -414, -413, -412, -379, -378, -377, -376, -343, -342, -341, -340, -307, -306, -305, -304, -271, -270, -269, -268, -235, -234, -233, -232, -199, -198, -197, -196, -163, -162, -161, -160, -127, -126, -125, -124, -91, -90, -89, -88, -55, -54, -53, -52, -19, -18, -17, -16, 16, 49, 50, 51, 52, 85, 86, 87, 88, 121, 122, 123, 124, 157, 158, 159, 160, 193, 194, 195, 196, 229, 230, 231, 232, 265, 266, 267, 268, 301, 302, 303, 304, 337, 338, 339, 340, 373, 374, 375, 376, 409, 410, 411, 412, 445, 446, 447, 448, 481, 482, 483, 484] |

It may be understood that the 26-tone dRU index in Table 5 to Table 7, the 52-tone dRU index in Table 6, and the 106-tone dRU index in Table 7 may refer to a physical dRU index (PHY dRU index). It may be further understood that the index values in Table 5 to Table 7 are merely examples, and may be replaced with other values in actual application. An index value of a dRU in a dRU tone plan is not limited in this embodiment of this application.

In this embodiment of this application, the seventeenth 52-tone dRU, the eighteenth 52-tone dRU, and the ninth 106-tone dRU are defined in the 80 MHz bandwidth, and more frequency domain resources are used in the 80 MHz bandwidth, thereby improving spectrum utilization, and increasing transmit power of a device without increasing a power spectral density.

### (3) 80 MHz dRU tone plan 2

An embodiment of this application further designs an 80 MHz dRU tone plan. The dRU tone plan may include thirty-seven 26-tone dRUs (the 26-tone dRU 19 is not defined), eighteen 52-tone dRUs, nine 106-tone dRUs, four 242-tone dRUs, two 484-tone dRUs, one 996-tone dRU, or various combinations of 26-tone dRUs, 52-tone dRUs, 106-tone dRUs, 242-tone dRUs, and 484-tone dRUs. A subcarrier spacing in the 52-tone dRU is greater than or equal to 18, or an absolute value of a difference between indexes of two adjacent subcarriers in the 52-tone dRU is greater than or equal to 18. A subcarrier spacing in the 106-tone dRU is greater than or equal to 9, or an absolute value of a difference between two adjacent subcarrier indexes in the 106-tone dRU is greater than or equal to 9.

For example, subcarriers included in the 26-tone dRU in the 80 MHz bandwidth are shown in the following Table 8.

**Table 8**

| 26-tone dRU index | Subcarrier index |
|---|---|
| 1 | [-483, -447, -411, -375, -339, -303, -267, -231, -195, -159, -123, -87, -51, 17, 53, 89, 125, 161, 197, 233, 269, 305, 341, 377, 413, 449]; |
| 2 | [-465, -429, -393, -357, -321, -285, -249, -213, -177, -141, -105, -69, -33, 35, 71, 107, 143, 179, 215, 251, 287, 323, 359, 395, 431, 467]; |
| 3 | [-474, -438, -402, -366, -330, -294, -258, -222, -186, -150, -114, -78, -42, 26, 62, 98, 134, 170, 206, 242, 278, 314, 350, 386, 422, 458]; |
| 4 | [-456, -420, -384, -348, -312, -276, -240, -204, -168, -132, -96, -60, -24, 44, 80, 116, 152, 188, 224, 260, 296, 332, 368, 404, 440, 476]; |
| **5** | [-475, -439, -403, -367, -331, -295, -259, -223, -187, -151, -115, -79, -43, 25, 61, 97, 133, 169, 205, 241, 277, 313, 349, 385, 421, 457]; |
| 6 | [-479, -443, -407, -371, -335, -299, -263, -227, -191, -155, -119, -83, -47, 21, 57, 93, 129, 165, 201, 237, 273, 309, 345, 381, 417, 453]; |
| 7 | [-461, -425, -389, -353, -317, -281, -245, -209, -173, -137, -101, -65, -29, 39, 75, 111, 147, 183, 219, 255, 291, 327, 363, 399, 435, 471]; |
| 8 | [-470, -434, -398, -362, -326, -290, -254, -218, -182, -146, -110, -74, -38, 30, 66, 102, 138, 174, 210, 246, 282, 318, 354, 390, 426, 462]; |
| 9 | [-452, -416, -380, -344, -308, -272, -236, -200, -164, -128, -92, -56, -20, 48, 84, 120, 156, 192, 228, 264, 300, 336, 372, 408, 444, 480]; |
| 10 | [-481, -445, -409, -373, -337, -301, -265, -229, -193, -157, -121, -85, -49, 19, 55, 91, 127, 163, 199, 235, 271, 307, 343, 379, 415, 451]; |
| 11 | [-463, -427, -391, -355, -319, -283, -247, -211, -175, -139, -103, -67, -31, 37, 73, 109, 145, 181, 217, 253, 289, 325, 361, 397, 433, 469]; |
| 12 | [-472, -436, -400, -364, -328, -292, -256, -220, -184, -148, -112, -76, -40, 28, 64, 100, 136, 172, 208, 244, 280, 316, 352, 388, 424, 460]; |
| 13 | [-454, -418, -382, -346, -310, -274, -238, -202, -166, -130, -94, -58, -22, 46, 82, 118, 154, 190, 226, 262, 298, 334, 370, 406, 442, 478]; |
| 14 | [-457, -421, -385, -349, -313, -277, -241, -205, -169, -133, -97, -61, -25, 43, 79, 115, 151, 187, 223, 259, 295, 331, 367, 403, 439, 475]; |
| 15 | [-477, -441, -405, -369, -333, -297, -261, -225, -189, -153, -117, -81, -45, 23, 59, 95, 131, 167, 203, 239, 275, 311, 347, 383, 419, 455]; |
| 16 | [-459, -423, -387, -351, -315, -279, -243, -207, -171, -135, -99, -63, -27, 41, 77, 113, 149, 185, 221, 257, 293, 329, 365, 401, 437, 473]; |
| 17 | [-468, -432, -396, -360, -324, -288, -252, -216, -180, -144, -108, -72, -36, 32, 68, 104, 140, 176, 212, 248, 284, 320, 356, 392, 428, 464]; |
| 18 | [-450, -414, -378, -342, -306, -270, -234, -198, -162, -126, -90, -54, -18, 50, 86, 122, 158, 194, 230, 266, 302, 338, 374, 410, 446, 482]; |
| 19 | Undefined |
| 20 | [-482, -446, -410, -374, -338, -302, -266, -230, -194, -158, -122, -86, -50, 18, 54, 90, 126, 162, 198, 234, 270, 306, 342, 378, 414, 450]; |
| 21 | [-464, -428, -392, -356, -320, -284, -248, -212, -176, -140, -104, -68, -32, 36, 72, 108, 144, 180, 216, 252, 288, 324, 360, 396, 432, 468]; |
| 22 | [-473, -437, -401, -365, -329, -293, -257, -221, -185, -149, -113, -77, -41, 27, 63, 99, 135, 171, 207, 243, 279, 315, 351, 387, 423, 459]; |
| 23 | [-455, -419, -383, -347, -311, -275, -239, -203, -167, -131, -95, -59, -23, 45, 81, 117, 153, 189, 225, 261, 297, 333, 369, 405, 441, 477]; |
| 24 | [-466, -430, -394, -358, -322, -286, -250, -214, -178, -142, -106, -70, -34, 34, 70, 106, 142, 178, 214, 250, 286, 322, 358, 394, 430, 466]; |
| 25 | [-478, -442, -406, -370, -334, -298, -262, -226, -190, -154, -118, -82, -46, 22, 58, 94, 130, 166, 202, 238, 274, 310, 346, 382, 418, 454]; |
| 26 | [-460, -424, -388, -352, -316, -280, -244, -208, -172, -136, -100, -64, -28, 40, 76, 112, 148, 184, 220, 256, 292, 328, 364, 400, 436, 472]; |
| 27 | [-469, -433, -397, -361, -325, -289, -253, -217, -181, -145, -109, -73, -37, 31, 67, 103, 139, 175, 211, 247, 283, 319, 355, 391, 427, 463]; |
| 28 | [-451, -415, -379, -343, -307, -271, -235, -199, -163, -127, -91, -55, -19, 49, 85, 121, 157, 193, 229, 265, 301, 337, 373, 409, 445, 481]; |
| 29 | [-480, -444, -408, -372, -336, -300, -264, -228, -192, -156, -120, -84, -48, 20, 56, 92, 128, 164, 200, 236, 272, 308, 344, 380, 416, 452]; |
| 30 | [-462, -426, -390, -354, -318, -282, -246, -210, -174, -138, -102, -66, -30, 38, 74, 110, 146, 182, 218, 254, 290, 326, 362, 398, 434, 470]; |
| 31 | [-471, -435, -399, -363, -327, -291, -255, -219, -183, -147, -111, -75, -39, 29, 65, 101, 137, 173, 209, 245, 281, 317, 353, 389, 425, 461]; |
| 32 | [-453, -417, -381, -345, -309, -273, -237, -201, -165, -129, -93, -57, -21, 47, 83, 119, 155, 191, 227, 263, 299, 335, 371, 407, 443, 479]; |
| 33 | [-448, -412, -376, -340, -304, -268, -232, -196, -160, -124, -88, -52, -16, 52, 88, 124, 160, 196, 232, 268, 304, 340, 376, 412, 448, 484]; |
| 34 | [-476, -440, -404, -368, -332, -296, -260, -224, -188, -152, -116, -80, -44, 24, 60, 96, 132, 168, 204, 240, 276, 312, 348, 384, 420, 456]; |
| 35 | [-458, -422, -386, -350, -314, -278, -242, -206, -170, -134, -98, -62, -26, 42, 78, 114, 150, 186, 222, 258, 294, 330, 366, 402, 438, 474]; |
| 36 | [-467, -431, -395, -359, -323, -287, -251, -215, -179, -143, -107, -71, -35, 33, 69, 105, 141, 177, 213, 249, 285, 321, 357, 393, 429, 465]; |
| 37 | [-449, -413, -377, -341, -305, -269, -233, -197, -161, -125, -89, -53, -17, 51, 87, 123, 159, 195, 231, 267, 303, 339, 375, 411, 447, 483] |

The 80 MHz dRU tone plan may include eighteen 52-tone dRUs, and one 52-tone dRU may be understood as a combination of two 26-tone dRUs (or subcarriers included in one 52-tone dRU are the same as subcarriers included in two 26-tone dRUs), and specifically included subcarriers are shown in the following Table 9.

**Table 9**

| 52-tone dRU index | Index of constituent 26-tone dRUs | Subcarrier index |
|---|---|---|
| 1 | 1,2 | [-483, -465, -447, -429, -411, -393, -375, -357, -339, -321, - 303, -285, -267, -249, -231, -213, -195, -177, -159, -141, -123, -105, -87, -69, -51, -33, 17, 35, 53, 71, 89, 107, 125, 143, 161, 179, 197, 215, 233, 251, 269, 287, 305, 323, 341, 359, 377, 395, 413, 431, 449, 467]; |
| 2 | 3,4 | [-474, -456, -438, -420, -402, -384, -366, -348, -330, -312, - 294, -276, -258, -240, -222, -204, -186, -168, -150, -132, -114, -96, -78, -60, -42, -24, 26, 44, 62, 80, 98, 116, 134, 152, 170, 188, 206, 224, 242, 260, 278, 296, 314, 332, 350, 368, 386, 404, 422, 440, 458, 476]; |
| 3 | 6,7 | [-479, -461, -443, -425, -407, -389, -371, -353, -335, -317, - 299, -281, -263, -245, -227, -209, -191, -173, -155, -137, -119, -101, -83, -65, -47, -29, 21, 39, 57, 75, 93, 111, 129, 147, 165, 183, 201, 219, 237, 255, 273, 291, 309, 327, 345, 363, 381, 399, 417, 435, 453, 471]; |
| 4 | 8,9 | [-470, -452, -434, -416, -398, -380, -362, -344, -326, -308, - 290, -272, -254, -236, -218, -200, -182, -164, -146, -128, -110, -92, -74, -56, -38, -20, 30, 48, 66, 84, 102, 120, 138, 156, 174, 192, 210, 228, 246, 264, 282, 300, 318, 336, 354, 372, 390, 408, 426, 444, 462, 480]; |
| 5 | 10,11 | [-481, -463, -445, -427, -409, -391, -373, -355, -337, -319, - 301, -283, -265, -247, -229, -211, -193, -175, -157, -139, -121, -103, -85, -67, -49, -31, 19, 37, 55, 73, 91, 109, 127, 145, 163, 181, 199, 217, 235, 253, 271, 289, 307, 325, 343, 361, 379, 397, 415, 433, 451, 469]; |
| 6 | 12,13 | [-472, -454, -436, -418, -400, -382, -364, -346, -328, -310, - 292, -274, -256, -238, -220, -202, -184, -166, -148, -130, -112, -94, -76, -58, -40, -22, 28, 46, 64, 82, 100, 118, 136, 154, 172, 190, 208, 226, 244, 262, 280, 298, 316, 334, 352, 370, 388, 406, 424, 442, 460, 478]; |
| 7 | 15,16 | [-477, -459, -441, -423, -405, -387, -369, -351, -333, -315, - 297, -279, -261, -243, -225, -207, -189, -171, -153, -135, -117, -99, -81, -63, -45, -27, 23, 41, 59, 77, 95, 113, 131, 149, 167, 185, 203, 221, 239, 257, 275, 293, 311, 329, 347, 365, 383, 401, 419, 437, 455, 473]; |
| 8 | 17,18 | [-468, -450, -432, -414, -396, -378, -360, -342, -324, -306, - 288, -270, -252, -234, -216, -198, -180, -162, -144, -126, -108, -90, -72, -54, -36, -18, 32, 50, 68, 86, 104, 122, 140, 158, 176, 194, 212, 230, 248, 266, 284, 302, 320, 338, 356, 374, 392, 410, 428, 446, 464, 482]; |
| 9 | 20,21 | [-482, -464, -446, -428, -410, -392, -374, -356, -338, -320, - 302, -284, -266, -248, -230, -212, -194, -176, -158, -140, -122, -104, -86, -68, -50, -32, 18, 36, 54, 72, 90, 108, 126, 144, 162, 180, 198, 216, 234, 252, 270, 288, 306, 324, 342, 360, 378, 396, 414, 432, 450, 468]; |
| 10 | 22,23, | [-473, -455, -437, -419, -401, -383, -365, -347, -329, -311, - 293, -275, -257, -239, -221, -203, -185, -167, -149, -131, -113, -95, -77, -59, -41, -23, 27, 45, 63, 81, 99, 117, 135, 153, 171, 189, 207, 225, 243, 261, 279, 297, 315, 333, 351, 369, 387, 405, 423, 441, 459, 477]; |
| 11 | 25,26 | [-478, -460, -442, -424, -406, -388, -370, -352, -334, -316, - 298, -280, -262, -244, -226, -208, -190, -172, -154, -136, -118, -100, -82, -64, -46, -28, 22, 40, 58, 76, 94, 112, 130, 148, 166, 184, 202, 220, 238, 256, 274, 292, 310, 328, 346, 364, 382, 400, 418, 436, 454, 472]; |
| 12 | 27,28 | [-469, -451, -433, -415, -397, -379, -361, -343, -325, -307, - 289, -271, -253, -235, -217, -199, -181, -163, -145, -127, -109, -91, -73, -55, -37, -19, 31, 49, 67, 85, 103, 121, 139, 157, 175, 193, 211, 229, 247, 265, 283, 301, 319, 337, 355, 373, 391, 409, 427, 445, 463, 481]; |
| 13 | 29,30 | [-480, -462, -444, -426, -408, -390, -372, -354, -336, -318, - 300, -282, -264, -246, -228, -210, -192, -174, -156, -138, -120, -102, -84, -66, -48, -30, 20, 38, 56, 74, 92, 110, 128, 146, 164, 182, 200, 218, 236, 254, 272, 290, 308, 326, 344, 362, 380, 398, 416, 434, 452, 470]; |
| 14 | 31,32 | [-471, -453, -435, -417, -399, -381, -363, -345, -327, -309, - 291, -273, -255, -237, -219, -201, -183, -165, -147, -129, -111, -93, -75, -57, -39, -21, 29, 47, 65, 83, 101, 119, 137, 155, 173, 191, 209, 227, 245, 263, 281, 299, 317, 335, 353, 371, 389, 407, 425, 443, 461, 479]; |
| 15 | 34,35 | [-476, -458, -440, -422, -404, -386, -368, -350, -332, -314, - 296, -278, -260, -242, -224, -206, -188, -170, -152, -134, -116, -98, -80, -62, -44, -26, 24, 42, 60, 78, 96, 114, 132, 150, 168, 186, 204, 222, 240, 258, 276, 294, 312, 330, 348, 366, 384, 402, 420, 438, 456, 474]; |
| 16 | 36,37 | [-467, -449, -431, -413, -395, -377, -359, -341, -323, -305, - 287, -269, -251, -233, -215, -197, -179, -161, -143, -125, -107, -89, -71, -53, -35, -17, 33, 51, 69, 87, 105, 123, 141, 159, 177, 195, 213, 231, 249, 267, 285, 303, 321, 339, 357, 375, 393, 411, 429, 447, 465, 483]; |
| 17 | 5,14 | [-475, -457, -439, -421, -403, -385, -367, -349, -331, -313, - 295, -277, -259, -241, -223, -205, -187, -169, -151, -133, -115, -97, -79, -61, -43, -25, 25, 43, 61, 79, 97, 115, 133, 151, 169, 187, 205, 223, 241, 259, 277, 295, 313, 331, 349, 367, 385, 403, 421, 439, 457, 475]; |
| 18 | 24,33 | [-466, -448, -430, -412, -394, -376, -358, -340, -322, -304, - 286, -268, -250, -232, -214, -196, -178, -160, -142, -124, -106, -88, -70, -52, -34, -16, 34, 52, 70, 88, 106, 124, 142, 160, 178, 196, 214, 232, 250, 268, 286, 304, 322, 340, 358, 376, 394, 412, 430, 448, 466, 484] |

The 80 MHz dRU tone plan may include nine 106-tone dRUs, and one 106-tone dRU may be understood as a combination of two 52-tone dRUs (or four 26-tone dRUs) and two additional subcarriers. The subcarriers specifically included are shown in the following Table 10.

**Table 10**

| 106-tone dRU index | Index of constituent 26-tone dRUs | Index of two additional subcarriers | Subcarrier index |
|---|---|---|---|
| 1 | 1, 2, 3, 4 | [-495, 485] | [-495, -483, -474, -465, -456, -447, -438, -429, - 420, -411, -402, -393, -384, -375, -366, -357, -348, -339, -330, -321, -312, -303, -294, -285, -276, - 267, -258, -249, -240, -231, -222, -213, -204, -195, -186, -177, -168, -159, -150, -141, -132, -123, - 114, -105, -96, -87, -78, -69, -60, -51, -42, -33, - 24, 17, 26, 35, 44, 53, 62, 71, 80, 89, 98, 107, 116, 125, 134, 143, 152, 161, 170, 179, 188, 197, 206, 215, 224, 233, 242, 251, 260, 269, 278, 287, 296, 305, 314, 323, 332, 341, 350, 359, 368, 377, 386, 395, 404, 413, 422, 431, 440, 449, 458, 467, 476, 485]; |
| 2 | 6, 7, 8, 9 | [-491, 489] | [-491, -479, -470, -461, -452, -443, -434, -425, - 416, -407, -398, -389, -380, -371, -362, -353, -344, -335, -326, -317, -308, -299, -290, -281, -272, - 263, -254, -245, -236, -227, -218, -209, -200, -191, -182, -173, -164, -155, -146, -137, -128, -119, - 110, -101, -92, -83, -74, -65, -56, -47, -38, -29, - 20, 21, 30, 39, 48, 57, 66, 75, 84, 93, 102, 111, 120, 129, 138, 147, 156, 165, 174, 183, 192, 201, 210, 219, 228, 237, 246, 255, 264, 273, 282, 291, 300, 309, 318, 327, 336, 345, 354, 363, 372, 381, 390, 399, 408, 417, 426, 435, 444, 453, 462, 471, 480, 489]; |
| 3 | 10, 11, 12, 13 | [-493, 487] | [-493, -481, -472, -463, -454, -445, -436, -427, - 418, -409, -400, -391, -382, -373, -364, -355, -346, -337, -328, -319, -310, -301, -292, -283, -274, - 265, -256, -247, -238, -229, -220, -211, -202, -193, -184, -175, -166, -157, -148, -139, -130, -121, - 112, -103, -94, -85, -76, -67, -58, -49, -40, -31, -22, 19, 28, 37, 46, 55, 64, 73, 82, 91, 100, 109, 118, 127, 136, 145, 154, 163, 172, 181, 190, 199, 208, 217, 226, 235, 244, 253, 262, 271, 280, 289, 298, 307, 316, 325, 334, 343, 352, 361, 370, 379, 388, 397, 406, 415, 424, 433, 442, 451, 460, 469, 478, 487]; |
| 4 | 15, 16, 17, 18 | [-489, 491] | [-489, -477, -468, -459, -450, -441, -432, -423, - 414, -405, -396, -387, -378, -369, -360, -351, -342, -333, -324, -315, -306, -297, -288, -279, -270, - 261, -252, -243, -234, -225, -216, -207, -198, -189, -180, -171, -162, -153, -144, -135, -126, -117, - 108, -99, -90, -81, -72, -63, -54, -45, -36, -27, -18, 23, 32, 41, 50, 59, 68, 77, 86, 95, 104, 113, 122, 131, 140, 149, 158, 167, 176, 185, 194, 203, 212, 221, 230, 239, 248, 257, 266, 275, 284, 293, 302, 311, 320, 329, 338, 347, 356, 365, 374, 383, 392, 401, 410, 419, 428, 437, 446, 455, 464, 473, 482, 491]; |
| 5 | 20, 21, 22, 23 | [-494, 486] | [-494, -482, -473, -464, -455, -446, -437, -428, - 419, -410, -401, -392, -383, -374, -365, -356, -347, -338, -329, -320, -311, -302, -293, -284, -275, - 266, -257, -248, -239, -230, -221, -212, -203, -194, -185, -176, -167, -158, -149, -140, -131, -122, - 113, -104, -95, -86, -77, -68, -59, -50, -41, -32, - 23, 18, 27, 36, 45, 54, 63, 72, 81, 90, 99, 108, 117, 126, 135, 144, 153, 162, 171, 180, 189, 198, 207, 216, 225, 234, 243, 252, 261, 270, 279, 288, 297, 306, 315, 324, 333, 342, 351, 360, 369, 378, 387, 396, 405, 414, 423, 432, 441, 450, 459, 468, 477, 486]; |
| 6 | 25, 26, 27, 28 | [-490, 490] | [-490, -478, -469, -460, -451, -442, -433, -424, - 415, -406, -397, -388, -379, -370, -361, -352, -343, -334, -325, -316, -307, -298, -289, -280, -271, - 262, -253, -244, -235, -226, -217, -208, -199, -190, -181, -172, -163, -154, -145, -136, -127, -118, - 109, -100, -91, -82, -73, -64, -55, -46, -37, -28, - 19, 22, 31, 40, 49, 58, 67, 76, 85, 94, 103, 112, 121, 130, 139, 148, 157, 166, 175, 184, 193, 202, 211, 220, 229, 238, 247, 256, 265, 274, 283, 292, 301, 310, 319, 328, 337, 346, 355, 364, 373, 382, 391, 400, 409, 418, 427, 436, 445, 454, 463, 472, 481, 490]; |
| 7 | 29, 30, 31, 32 | [-492, 488] | [-492, -480, -471, -462, -453, -444, -435, -426, - 417, -408, -399, -390, -381, -372, -363, -354, -345, -336, -327, -318, -309, -300, -291, -282, -273, - 264, -255, -246, -237, -228, -219, -210, -201, -192, -183, -174, -165, -156, -147, -138, -129, -120, - 111, -102, -93, -84, -75, -66, -57, -48, -39, -30, - 21, 20, 29, 38, 47, 56, 65, 74, 83, 92, 101, 110, 119, 128, 137, 146, 155, 164, 173, 182, 191, 200, 209, 218, 227, 236, 245, 254, 263, 272, 281, 290, 299, 308, 317, 326, 335, 344, 353, 362, 371, 380, 389, 398, 407, 416, 425, 434, 443, 452, 461, 470, 479, 488]; |
| 8 | 34, 35, 36, 37 | [-488, 492] | [-488, -476, -467, -458, -449, -440, -431, -422, - 413, -404, -395, -386, -377, -368, -359, -350, -341, -332, -323, -314, -305, -296, -287, -278, -269, - 260, -251, -242, -233, -224, -215, -206, -197, -188, -179, -170, -161, -152, -143, -134, -125, -116, - 107, -98, -89, -80, -71, -62, -53, -44, -35, -26, -17, 24, 33, 42, 51, 60, 69, 78, 87, 96, 105, 114, 123, 132, 141, 150, 159, 168, 177, 186, 195, 204, 213, 222, 231, 240, 249, 258, 267, 276, 285, 294, 303, 312, 321, 330, 339, 348, 357, 366, 375, 384, 393, 402, 411, 420, 429, 438, 447, 456, 465, 474, 483, 492]; |
| **9** | **5,14, 24,33** | [-500, 16] | [-500, -475, -466, -457, -448, -439, -430, -421, - 412, -403, -394, -385, -376, -367, -358, -349, -340, -331, -322, -313, -304, -295, -286, -277, -268, - 259, -250, -241, -232, -223, -214, -205, -196, -187, -178, -169, -160, -151, -142, -133, -124, -115, - 106, -97, -88, -79, -70, -61, -52, -43, -34, -25, -16, 16, 25, 34, 43, 52, 61, 70, 79, 88, 97, 106, 115, 124, 133, 142, 151, 160, 169, 178, 187, 196, 205, 214, 223, 232, 241, 250, 259, 268, 277, 286, 295, 304, 313, 322, 331, 340, 349, 358, 367, 376, 385, 394, 403, 412, 421, 430, 439, 448, 457, 466, 475, 484] |

The 80 MHz dRU tone plan may include four 242-tone dRUs. One 242-tone dRU may be understood as a combination of two 106-tone dRUs, one 26-tone dRU, and four additional subcarriers, or one 242-tone dRU may be understood as a combination of nine 26-tone dRUs and eight additional subcarriers. The subcarriers specifically included are shown in the following Table 11.

**Table 11**

| 242-tone dRU index | Index of constituent 26-tone dRUs | Index of eight additional subcarriers | Subcarrier index |
|---|---|---|---|
| 1 | 1, 2, 3, 4, 5, 6, 7, 8, 9 | [-499, - 495, -491, -487, 485, 489, 493, 497] | [-499, -495, -491, -487, -483, -479, -475, -474, - 470, -465, -461, -456, -452, -447, -443, -439, -438, -434, -429, -425, -420, -416, -411, -407, -403, - 402, -398, -393, -389, -384, -380, -375, -371, -367, -366, -362, -357, -353, -348, -344, -339, -335, - 331, -330, -326, -321, -317, -312, -308, -303, -299, -295, -294, -290, -285, -281, -276, -272, -267, -263, -259, -258, -254, -249, -245, -240, -236, -231, -227, -223, -222, -218, -213, -209, -204, -200, - 195, -191, -187, -186, -182, -177, -173, -168, -164, -159, -155, -151, -150, -146, -141, -137, -132, - 128, -123, -119, -115, -114, -110, -105, -101, -96, - 92, -87, -83, -79, -78, -74, -69, -65, -60, -56, -51, - 47, -43, -42, -38, -33, -29, -24, -20, 17, 21, 25, 26, 30, 35, 39, 44, 48, 53, 57, 61, 62, 66, 71, 75, 80, 84, 89, 93, 97, 98, 102, 107, 111, 116, 120, 125, 129, 133, 134, 138, 143, 147, 152, 156, 161, 165, 169, 170, 174, 179, 183, 188, 192, 197, 201, 205, 206, 210, 215, 219, 224, 228, 233, 237, 241, 242, 246, 251, 255, 260, 264, 269, 273, 277, 278, 282, 287, 291, 296, 300, 305, 309, 313, 314, 318, 323, 327, 332, 336, 341, 345, 349, 350, 354, 359, 363, 368, 372, 377, 381, 385, 386, 390, 395, 399, 404, 408, 413, 417, 421, 422, 426, 431, 435, 440, 444, 449, 453, 457, 458, 462, 467, 471, 476, 480, 485, 489, 493, 497]; |
| 2 | 10,11,12,1 3,14,15,16 , 17, 18 | [-497, - 493, -489, -485, 487, 491, 495, 499] | [-497, -493, -489, -485, -481, -477, -472, -468, - 463, -459, -457, -454, -450, -445, -441, -436, -432, -427, -423, -421, -418, -414, -409, -405, -400, - 396, -391, -387, -385, -382, -378, -373, -369, -364, -360, -355, -351, -349, -346, -342, -337, -333, - 328, -324, -319, -315, -313, -310, -306, -301, -297, -292, -288, -283, -279, -277, -274, -270, -265, - 261, -256, -252, -247, -243, -241, -238, -234, -229, -225, -220, -216, -211, -207, -205, -202, -198, - 193, -189, -184, -180, -175, -171, -169, -166, -162, -157, -153, -148, -144, -139, -135, -133, -130, - 126, -121, -117, -112, -108, -103, -99, -97, -94, - 90, -85, -81, -76, -72, -67, -63, -61, -58, -54, -49, - 45, -40, -36, -31, -27, -25, -22, -18, 19, 23, 28, 32, 37, 41, 43, 46, 50, 55, 59, 64, 68, 73, 77, 79, 82, 86, 91, 95, 100, 104, 109, 113, 115, 118, 122, 127, 131, 136, 140, 145, 149, 151, 154, 158, 163, 167, 172, 176, 181, 185, 187, 190, 194, 199, 203, 208, 212, 217, 221, 223, 226, 230, 235, 239, 244, 248, 253, 257, 259, 262, 266, 271, 275, 280, 284, 289, 293, 295, 298, 302, 307, 311, 316, 320, 325, 329, 331, 334, 338, 343, 347, 352, 356, 361, 365, 367, 370, 374, 379, 383, 388, 392, 397, 401, 403, 406, 410, 415, 419, 424, 428, 433, 437, 439, 442, 446, 451, 455, 460, 464, 469, 473, 475, 478, 482, 487, 491, 495, 499]; |
| 3 | 20, 21, 22, 23, 24, 25, 26, 27, 28 | [-498, - 494, -490, -486, 486, 490, 494, 498] | [-498, -494, -490, -486, -482, -478, -473, -469, - 466, -464, -460, -455, -451, -446, -442, -437, -433, -430, -428, -424, -419, -415, -410, -406, -401, - 397, -394, -392, -388, -383, -379, -374, -370, -365, -361, -358, -356, -352, -347, -343, -338, -334, - 329, -325, -322, -320, -316, -311, -307, -302, -298, -293, -289, -286, -284, -280, -275, -271, -266, - 262, -257, -253, -250, -248, -244, -239, -235, -230, -226, -221, -217, -214, -212, -208, -203, -199, - 194, -190, -185, -181, -178, -176, -172, -167, -163, -158, -154, -149, -145, -142, -140, -136, -131, - 127, -122, -118, -113, -109, -106, -104, -100, -95, - 91, -86, -82, -77, -73, -70, -68, -64, -59, -55, -50, - 46, -41, -37, -34, -32, -28, -23, -19, 18, 22, 27, 31, 34, 36, 40, 45, 49, 54, 58, 63, 67, 70, 72, 76, 81, 85, 90, 94, 99, 103, 106, 108, 112, 117, 121, 126, 130, 135, 139, 142, 144, 148, 153, 157, 162, 166, 171, 175, 178, 180, 184, 189, 193, 198, 202, 207, 211, 214, 216, 220, 225, 229, 234, 238, 243, 247, 250, 252, 256, 261, 265, 270, 274, 279, 283, 286, 288, 292, 297, 301, 306, 310, 315, 319, 322, 324, 328, 333, 337, 342, 346, 351, 355, 358, 360, 364, 369, 373, 378, 382, 387, 391, 394, 396, 400, 405, 409, 414, 418, 423, 427, 430, 432, 436, 441, 445, 450, 454, 459, 463, 466, 468, 472, 477, 481, 486, 490, 494, 498]; |
| 4 | 29, 30, 31, 32, 33, 34, 35, 36, 37 | [-496, - 492, -488, -484, 488, 492, 496, 500] | [-496, -492, -488, -484, -480, -476, -471, -467, - 462, -458, -453, -449, -448, -444, -440, -435, -431, -426, -422, -417, -413, -412, -408, -404, -399, - 395, -390, -386, -381, -377, -376, -372, -368, -363, -359, -354, -350, -345, -341, -340, -336, -332, - 327, -323, -318, -314, -309, -305, -304, -300, -296, -291, -287, -282, -278, -273, -269, -268, -264, - 260, -255, -251, -246, -242, -237, -233, -232, -228, -224, -219, -215, -210, -206, -201, -197, -196, - 192, -188, -183, -179, -174, -170, -165, -161, -160, -156, -152, -147, -143, -138, -134, -129, -125, - 124, -120, -116, -111, -107, -102, -98, -93, -89, - 88, -84, -80, -75, -71, -66, -62, -57, -53, -52, -48, - 44, -39, -35, -30, -26, -21, -17, -16, 20, 24, 29, 33, 38, 42, 47, 51, 52, 56, 60, 65, 69, 74, 78, 83, 87, 88, 92, 96, 101, 105, 110, 114, 119, 123, 124, 128, 132, 137, 141, 146, 150, 155, 159, 160, 164, 168, 173, 177, 182, 186, 191, 195, 196, 200, 204, 209, 213, 218, 222, 227, 231, 232, 236, 240, 245, 249, 254, 258, 263, 267, 268, 272, 276, 281, 285, 290, 294, 299, 303, 304, 308, 312, 317, 321, 326, 330, 335, 339, 340, 344, 348, 353, 357, 362, 366, 371, 375, 376, 380, 384, 389, 393, 398, 402, 407, 411, 412, 416, 420, 425, 429, 434, 438, 443, 447, 448, 452, 456, 461, 465, 470, 474, 479, 483, 484, 488, 492, 496, 500] |

The 80 MHz dRU tone plan may include two 484-tone dRUs. One 484-tone dRU may be understood as a combination of two 242-tone dRUs, or one 484-tone dRU may be understood as a combination of eighteen 26-tone dRUs and sixteen additional subcarriers. The subcarriers specifically included are shown in the following Table 12.

**Table 12**

| 484-tone dRU index | Index of constituent 26-tone dRUs | Index of sixteen additional subcarriers | Subcarrier index |
|---|---|---|---|
| 1 | 1 to 18 | [-499, - 497, -495, -493, - 491, -489, -487, - 485, 485, 487, 489, 491, 493, 495, 497, 499] | [-499, -497, -495, -493, -491, -489, -487, -485, -483, -481, -479, -477, -475, -474, -472, -470, -468, -465, -463, -461, -459, -457, -456, -454, -452, -450, -447, -445, -443, -441, -439, -438, -436, -434, -432, -429, -427, -425, -423, -421, -420, -418, -416, -414, -411, -409, -407, -405, -403, -402, -400, -398, -396, -393, -391, -389, -387, -385, -384, -382, -380, -378, -375, -373, -371, -369, -367, -366, -364, -362, -360, -357, -355, -353, -351, -349, -348, -346, -344, -342, -339, -337, -335, -333, -331, -330, -328, -326, -324, -321, -319, -317, -315, -313, -312, -310, -308, -306, -303, -301, -299, -297, -295, -294, -292, -290, -288, -285, -283, -281, -279, -277, -276, -274, -272, -270, -267, -265, -263, -261, -259, -258, -256, -254, -252, -249, -247, -245, -243, -241, -240, -238, -236, -234, -231, -229, -227, -225, -223, -222, -220, -218, -216, -213, -211, -209, -207, -205, -204, -202, -200, -198, -195, -193, -191, -189, -187, -186, -184, -182, -180, -177, -175, -173, -171, -169, -168, -166, -164, -162, -159, -157, -155, -153, -151, -150, -148, -146, -144, -141, -139, -137, -135, -133, -132, -130, -128, -126, -123, -121, -119, -117, -115, -114, -112, -110, -108, -105, -103, -101, -99, -97, -96, -94, -92, -90, -87, -85, -83, -81, -79, -78, -76, -74, -72, -69, -67, -65, -63, -61, -60, -58, -56, -54, -51, -49, -47, -45, -43, -42, -40, -38, -36, -33, -31, -29, -27, -25, -24, -22, -20, -18, 17, 19, 21, 23, 25, 26, 28, 30, 32, 35, 37, 39, 41, 43, 44, 46, 48, 50, 53, 55, 57, 59, 61, 62, 64, 66, 68, 71, 73, 75, 77, 79, 80, 82, 84, 86, 89, 91, 93, 95, 97, 98, 100, 102, 104, 107, 109, 111, 113, 115, 116, 118, 120, 122, 125, 127, 129, 131, 133, 134, 136, 138, 140, 143, 145, 147, 149, 151, 152, 154, 156, 158, 161, 163, 165, 167, 169, 170, 172, 174, 176, 179, 181, 183, 185, 187, 188, 190, 192, 194, 197, 199, 201, 203, 205, 206, 208, 210, 212, 215, 217, 219, 221, 223, 224, 226, 228, 230, 233, 235, 237, 239, 241, 242, 244, 246, 248, 251, 253, 255, 257, 259, 260, 262, 264, 266, 269, 271, 273, 275, 277, 278, 280, 282, 284, 287, 289, 291, 293, 295, 296, 298, 300, 302, 305, 307, 309, 311, 313, 314, 316, 318, 320, 323, 325, 327, 329, 331, 332, 334, 336, 338, 341, 343, 345, 347, 349, 350, 352, 354, 356, 359, 361, 363, 365, 367, 368, 370, 372, 374, 377, 379, 381, 383, 385, 386, 388, 390, 392, 395, 397, 399, 401, 403, 404, 406, 408, 410, 413, 415, 417, 419, 421, 422, 424, 426, 428, 431, 433, 435, 437, 439, 440, 442, 444, 446, 449, 451, 453, 455, 457, 458, 460, 462, 464, 467, 469, 471, 473, 475, 476, 478, 480, 482, 485, 487, 489, 491, 493, 495, 497, 499] |
| 2 | 20 to 37 | [-498, - 496, -494, -492, - 490, -488, -486, - 484, 486, 488, 490, 492, 494, 496, 498, 500] | [-498, -496, -494, -492, -490, -488, -486, -484, -482, -480, -478, -476, -473, -471, -469, -467, -466, -464, -462, -460, -458, -455, -453, -451, -449, -448, -446, -444, -442, -440, -437, -435, -433, -431, -430, -428, -426, -424, -422, -419, -417, -415, -413, -412, -410, -408, -406, -404, -401, -399, -397, -395, -394, -392, -390, -388, -386, -383, -381, -379, -377, -376, -374, -372, -370, -368, -365, -363, -361, -359, -358, -356, -354, -352, -350, -347, -345, -343, -341, -340, -338, -336, -334, -332, -329, -327, -325, -323, -322, -320, -318, -316, -314, -311, -309, -307, -305, -304, -302, -300, -298, -296, -293, -291, -289, -287, -286, -284, -282, -280, -278, -275, -273, -271, -269, -268, -266, -264, -262, -260, -257, -255, -253, -251, -250, -248, -246, -244, -242, -239, -237, -235, -233, -232, -230, -228, -226, -224, -221, -219, -217, -215, -214, -212, -210, -208, -206, -203, -201, -199, -197, -196, -194, -192, -190, -188, -185, -183, -181, -179, -178, -176, -174, -172, -170, -167, -165, -163, -161, -160, -158, -156, -154, -152, -149, -147, -145, -143, -142, -140, -138, -136, -134, -131, -129, -127, -125, -124, -122, -120, -118, -116, -113, -111, -109, -107, -106, -104, -102, -100, -98, -95, -93, -91, -89, -88, -86, -84, -82, -80, -77, -75, -73, -71, -70, -68, -66, -64, -62, -59, -57, -55, -53, -52, -50, -48, -46, -44, -41, -39, -37, -35, -34, -32, -30, -28, -26, -23, -21, -19, -17, -16, 18, 20, 22, 24, 27, 29, 31, 33, 34, 36, 38, 40, 42, 45, 47, 49, 51, 52, 54, 56, 58, 60, 63, 65, 67, 69, 70, 72, 74, 76, 78, 81, 83, 85, 87, 88, 90, 92, 94, 96, 99, 101, 103, 105, 106, 108, 110, 112, 114, 117, 119, 121, 123, 124, 126, 128, 130, 132, 135, 137, 139, 141, 142, 144, 146, 148, 150, 153, 155, 157, 159, 160, 162, 164, 166, 168, 171, 173, 175, 177, 178, 180, 182, 184, 186, 189, 191, 193, 195, 196, 198, 200, 202, 204, 207, 209, 211, 213, 214, 216, 218, 220, 222, 225, 227, 229, 231, 232, 234, 236, 238, 240, 243, 245, 247, 249, 250, 252, 254, 256, 258, 261, 263, 265, 267, 268, 270, 272, 274, 276, 279, 281, 283, 285, 286, 288, 290, 292, 294, 297, 299, 301, 303, 304, 306, 308, 310, 312, 315, 317, 319, 321, 322, 324, 326, 328, 330, 333, 335, 337, 339, 340, 342, 344, 346, 348, 351, 353, 355, 357, 358, 360, 362, 364, 366, 369, 371, 373, 375, 376, 378, 380, 382, 384, 387, 389, 391, 393, 394, 396, 398, 400, 402, 405, 407, 409, 411, 412, 414, 416, 418, 420, 423, 425, 427, 429, 430, 432, 434, 436, 438, 441, 443, 445, 447, 448, 450, 452, 454, 456, 459, 461, 463, 465, 466, 468, 470, 472, 474, 477, 479, 481, 483, 484, 486, 488, 490, 492, 494, 496, 498, 500] |

The 80 MHz dRU tone plan may include one 996-tone dRU. Subcarriers included in the 996-tone dRU are shown in the following Table 13. Subcarrier indexes [-500:-3,3:500] in Table 13 represent -500, -499, -498, ..., -5, -4, -3, 3, 4, 5, ..., 498, 499, 500.

**Table 13**

| 996-tone dRU index | Index of constituent 26-tone dRUs | Additional 34 subcarrier indexes | Subcarrier index |
|---|---|---|---|
| 1 | 1 to 37 | [-500, -499, -498, -497, -496, -495, -494, -493, -492, -491, -490, -489, -488, -487, -486, -485, -484, 16, 485, 486, 487, 488, 489, 490, 491, 492, 493, 494, 495, 496, 497, 498, 499, 500] | [-500:-3,3:500] |

It may be understood that the 26-tone dRU index in Table 8 to Table 13, the 52-tone dRU index in Table 9, the 106-tone dRU index in Table 10, the 242-tone dRU index in Table 11, the 484-tone dRU index in Table 12, and the 996-tone dRU index in Table 13 may refer to a physical dRU index (PHY dRU index). It may be further understood that the index values in Table 8 to Table 13 are merely examples, and may be replaced with other values in actual application. An index value of a dRU in a dRU tone plan is not limited in this embodiment of this application.

In this embodiment of this application, an 80 MHz dRU tone plan is designed, including eighteen 52-tone dRUs or nine 106-tone dRUs, and more frequency domain resources are used in the 80 MHz bandwidth, thereby improving spectrum utilization, and increasing a transmit power of a device without increasing a power spectral density. In addition, in the 80 MHz dRU tone plan, a subcarrier spacing of a 52-tone dRU is greater than or equal to 18 (that is, each subcarrier exclusively occupies 1 MHz), and a higher power gain can be obtained.

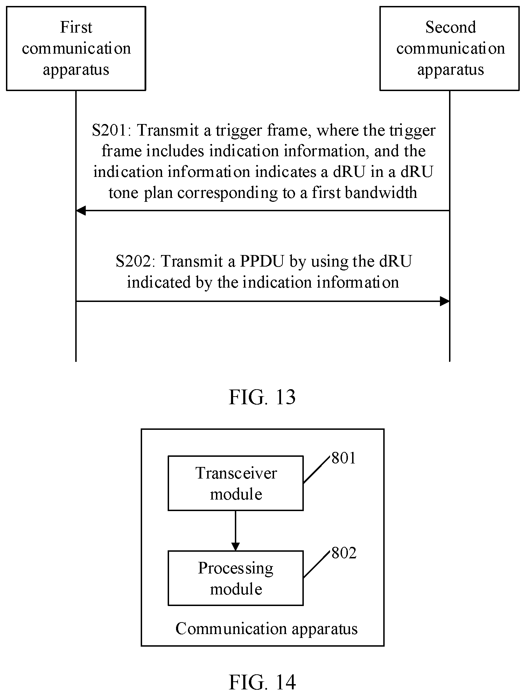

Refer to FIG. 13. FIG. 13 is another schematic flowchart of a communication method based on a distributed resource unit according to an embodiment of this application. In the method, the first communication apparatus may be the STA in FIG. 1, and correspondingly, the second communication apparatus may be the AP in FIG. 1. Certainly, the first communication apparatus in the method may also be a non-AP MLD, and correspondingly, the second communication apparatus may be an AP MLD. This is not limited in this embodiment of this application.

In a possible implementation, the embodiment shown in FIG. 13 may be implemented in combination with the dRU tone plan in the embodiment shown in FIG. 8, or may be implemented separately. This is not limited in this embodiment of this application.

As shown in FIG. 13, the communication method based on the distributed resource unit includes, but is not limited to, the following steps.

S201: The second communication apparatus transmits a trigger frame, where the trigger frame includes indication information, and the indication information indicates a dRU in a dRU tone plan corresponding to a first bandwidth. The dRU tone plan corresponding to the first bandwidth includes any one of the following: nine 52-tone dRUs when the first bandwidth is 40 MHz, eighteen 52-tone dRUs when the first bandwidth is 80 MHz, thirty-six 52-tone dRUs when the first bandwidth is 160 MHz, seventy-two 52-tone dRUs when the first bandwidth is 320 MHz, nine 106-tone dRUs when the first bandwidth is 80 MHz, eighteen 106-tone dRUs when the first bandwidth is 160 MHz, or thirty-six 106-tone dRUs when the first bandwidth is 320 MHz.

Correspondingly, the first communication apparatus receives the trigger frame.

S202: The first communication apparatus transmits a PPDU by using the dRU indicated by the indication information.

Correspondingly, the second communication apparatus receives the PPDU on a corresponding dRU.

In a possible implementation, the indication information may be carried in a user information field of the trigger frame. For example, the indication information may include an RU allocation subfield (RU allocation subfield) and/or a primary-secondary 160 subfield (PS160 subfield). Certainly, the indication information may alternatively be implemented by using another field. This is not limited in this embodiment of this application. The RU allocation subfield and the PS160 subfield may jointly indicate a dRU (including a size and a location) in a dRU tone plan corresponding to the first bandwidth. The dRU tone plan corresponding to the first bandwidth may include but is not limited to any one of the following: nine 52-tone dRUs when the first bandwidth is 40 MHz, eighteen 52-tone dRUs when the first bandwidth is 80 MHz, thirty-six 52-tone dRUs when the first bandwidth is 160 MHz, seventy-two 52-tone dRUs when the first bandwidth is 320 MHz, nine 106-tone dRUs when the first bandwidth is 80 MHz, eighteen 106-tone dRUs when the first bandwidth is 160 MHz, or thirty-six 106-tone dRUs when the first bandwidth is 320 MHz. It may be understood that when the indication information (for example, the RU allocation subfield and the PS160 subfield) has different values, different dRUs may be indicated.

For example, a length of the RU allocation subfield is 8 bits, and is respectively represented as B0, B1, B2, ..., and B7. A length of the PS160 subfield is 1 bit. B7 to B1 of the RU allocation subfield have 7 bits in total, and may represent 128 (2⁷) entries (namely, 0 to 127 values), and some entries (namely, values) of the entries may indicate a dRU. In a possible implementation, for an indication manner of the indication information (for example, the RU allocation subfield and the PS160 subfield), refer to the following Table 14.

**Table 14**

| PS160 subfield | B0 of the RU allocation subfield | B7 to B1 of the RU allocation subfield | Bandwidth (BW) (MHz) | dRU size | dRU index | Physical dRU index (PHY dRU index) |
|---|---|---|---|---|---|---|
| 0 - 3 | | 37-40 | 20, 40, 80, 160, or 320 | 52 | dRU 1 to dRU 4, respectively | 16×N+dRU index |
| 0-3 | | 41-44 | 40, 80, 160, or 320 | | dRU 5 to dRU 8, respectively | |
| 0-3 | | 45-52 | 80, 160, or 320 | | dRU 9 to dRU 16, respectively | |
| 0-3 | | 53, 54 | 20, 40, 80, 160, or 320 | 106 | dRU 1 and dRU 2, respectively | 8×N+dRU index |
| 0-3 | | 55, 56 | 40, 80, 160, or 320 | | dRU 3 and dRU 4, respectively | |
| 0-3 | | 57-60 | 80, 160, or 320 | | dRU 5 to dRU 8, respectively | |
| 0 | | First value | 40 | 52 | dRU 9 | dRU 9 |
| 0-3 | | Second value and third value | 80, 160, or 320 | 52 | dRU 17 and dRU 18, respectively | 16×(BW/80-1)+2×N+dRU index |
| 0-3 | | Fourth value | 80, 160, or 320 | 106 | dRU 9 | 8×(BW/80-1)+N+dRU index |
| 0-3 | | Fifth value | 80, 160, or 320 | 26 | dRU 19 | 37×N+dRU index |

A value of N in Table 14 may be determined based on some or all of the bandwidth BW, the PS160 subfield, the B0 bit of the RU allocation subfield, and configuration information. For example, a relationship between N and all of the bandwidth BW, the PS160 subfield, the B0 bit of the RU allocation subfield, and the configuration information may be shown in the foregoing Table 2, and details are not described herein.

It may be understood that Table 14 lists only indication manners of some dRUs. In actual application, the indication information may further indicate more dRUs. For example, for an indication manner of a dRU not shown in Table 14, refer to an RU/MRU indication manner in 802.11be (namely, the foregoing Table 1). A difference includes that the RU in the foregoing Table 1 is replaced with the dRU.

It may be understood that, in Table 14, the bandwidth BW determines a value range of two bits in total of the PS160 subfield (the length is 1 bit) and the B0 of the RU allocation subfield. For example, when the bandwidth BW is 160 MHz, a value range of B0 of the PS160 subfield and the RU allocation subfield is 0 to 1; or when the bandwidth BW is 320 MHz, a value range of B0 of the PS160 subfield and the RU allocation subfield is 0 to 3. Therefore, when a next generation standard of 802.11be, such as 802.11bn, supports a larger bandwidth (greater than 320 MHz), more bits may be required to represent the larger bandwidth. In other words, when the 802.11bn supports a larger bandwidth (greater than 320 MHz), a quantity of bits of the RU allocation subfield and/or the PS160 subfield may need to be extended, to indicate dRUs in various bandwidths.

For example, the fifth value in Table 14 may be 18. In a possible implementation, when the bandwidth is 80 MHz, 160 MHz, or 320 MHz, there may be a 26-tone dRU 19 (namely, a 26-tone dRU with a physical dRU index of 19). The 26-tone dRU 19 may include an RU that is located near a direct current subcarrier in an 80 MHz PPDU of 802.11ax and that is discrete to an 80 MHz bandwidth. Alternatively, the 26-tone dRU 19 may be a 26-tone dRU forming a 996-tone dRU, and the 26-tone dRU, two 484-tone dRUs, and two additional subcarriers may form a 996-tone dRU.

For example, at least one of the first value, the second value, the third value, and the fourth value in Table 14 may be a value in 107 to 127. For example, the first value may be 107, the second value and the third value may be 108 and 109 respectively, and the fourth value may be 110. Certainly, the first value to the fifth value may alternatively be values from 0 to 127, and the first value to the fifth value are different from each other. For example, for dRUs of a same size in different bandwidths, values of B7 to B1 of the RU allocation subfield may be consecutive integers. For example, 37 to 55 may represent 52-tone dRUs in different bandwidths, where the first value may be 53, the second value may be 54, and the third value may be 55. Values of B7 to B1 of the subsequent RU allocation subfield may continue sequentially. For example, values of B7 to B1 of the RU allocation subfield may start from 56 to represent 106-tone dRUs in different bandwidths. For example, 56 to 64 represent 106-tone dRUs in different bandwidths, where the fourth value may be 64. This is not limited in this embodiment of this application.

For example, the first value, the second value, the third value, and the fourth value are respectively 107 to 110. When the value of the B7 to B1 of the RU allocation subfield is 107, it indicates that the bandwidth BW is 40 MHz, and the allocated frequency domain resource is a 52-tone dRU with a physical dRU index of 9. When B7 to B1 of the RU allocation subfield is 108 or 109, it indicates that the bandwidth is 80 MHz, 160 MHz, or 320 MHz, and the allocated frequency domain resource is an additional 52-tone dRU. The PS160 subfield may indicate a logical 80 MHz location at which the dRU is located. The logical 80 MHz location does not represent a frequency domain location of an 80 MHz sub-channel in an actual bandwidth, and is only used to calculate a physical dRU index. For example, when the PPDU bandwidth is 160 MHz, the PS160 subfield is 0, and B0=0 or 1. In this case, four 52-tone dRUs may be indicated in total. Specifically, when the PS160 subfield=0, B0=0, and B7 to B1 of the RU allocation subfield=108, a PHY dRU index of a 52-tone dRU is 16×1+2×0+17=33; when the PS160 subfield=0, B0=0, and B7 to B1 of the RU allocation subfield=109, a PHY dRU index of a 52-tone dRU is 16×1+2×0+18=34;when the PS160 subfield=0, B0=1, and B7 to B1 of the RU allocation subfield=108, a PHY dRU index of a 52-tone dRU is 16×1+2×1+17=35; and when the PS160 subfield=0, B0=1, and B7 to B1 of the RU allocation subfield=109, a PHY dRU index of a 52-tone dRU is 16×1+2×1+18=36.

When the B7 to B1 of the RU allocation subfield is 110, it indicates that the bandwidth is 80 MHz, 160 MHz, or 320 MHz, and the allocated frequency domain resource is 106-tone dRU 9. The PS160 subfield may indicate a logical 80 MHz location at which the dRU is located. The logical 80 MHz location does not represent a frequency domain location of an 80 MHz sub-channel in an actual bandwidth, and is only used to calculate a physical dRU index. For example, when the PPDU bandwidth is 160 MHz, PS160 subfield is 0, and B0=0 or 1. In this case, two 106-tone dRUs may be indicated in total. Specifically, when the PS160 subfield=0, B0=0, B7-B1 of the RU allocation subfield is 110, a PHY dRU index of a 106-tone dRU is 8×1+0+9=17; and when the PS160 subfield=0, B0=1, B7-B1 of the RU allocation subfield is 110, a PHY dRU index of a 106-tone dRU is 8×1+1+9=18.

In addition, when B7 to B1 of the RU allocation subfield is 18, it indicates that a bandwidth BW is 80 MHz, 160 MHz, or 320 MHz, and an allocated frequency domain resource is a 26-tone dRU 19.

In a possible implementation, when the bandwidth BW is 40 MHz, the indication information (for example, the PS160 subfield and the RU allocation subfield in Table 14) may indicate a dRU in the 40 MHz dRU tone plan. The 40 MHz dRU tone plan includes but is not limited to 52-tone dRUs with physical dRU indexes of 1 to 9 (or in other words, a first to a ninth 52-tone dRU). One of the nine 52-tone dRUs includes subcarriers of 26-tone dRUs 5 and 14 (that is, 26-tone dRUs with physical dRU indexes of 5 and 14). For example, in Table 14, a 52-tone dRU with a physical dRU index of 9 when a bandwidth BW is 40 MHz includes subcarriers of 26-tone dRUs with physical dRU indexes of 5 and 14. Alternatively, subcarriers included in the 52-tone dRU 9 are the same as subcarriers included in the 26-tone dRU 5 and 14. For example, subcarriers included in the 52-tone dRU 9 in the 40 MHz bandwidth are shown in the foregoing Table 3, and subcarriers included in the 26-tone dRU 5 and the 26-tone dRU 14 are shown in the foregoing Table 4. Details are not described herein again.

When the bandwidth BW is 80 MHz, the indication information (for example, the PS160 subfield and the RU allocation subfield in Table 14) may indicate a dRU in the 80 MHz dRU tone plan. The 80 MHz dRU tone plan includes but is not limited to 52-tone dRUs with physical dRU indexes of 1 to 18 (or the first to the eighteenth 52-tone dRUs), or 106-tone dRUs with physical dRU indexes of 1 to 9 (or the first to the ninth 106-tone dRUs). In the eighteen 52-tone dRUs, one 52-tone dRU includes subcarriers of 26-tone dRUs 5 and 14 (that is, 26-tone dRUs with physical dRU indexes of 5 and 14), and another 52-tone dRU includes subcarriers of 26-tone dRUs 24 and 33 (that is, 26-tone dRUs with physical dRU indexes of 24 and 33). For example, in Table 14, a 52-tone dRU with a physical dRU index of 17 when a bandwidth BW is 80 MHz includes subcarriers of 26-tone dRUs with physical dRU indexes of 5 and 14. In Table 14, when a bandwidth BW is 80 MHz, a 52-tone dRU with a physical dRU index of 18 includes subcarriers of 26-tone dRUs with physical dRU indexes of 24 and 33. One 106-tone dRU in the nine 106-tone dRUs includes subcarriers of 26-tone dRUs 5, 14, 24, and 33, and two additional subcarriers. For example, in Table 14, a 106-tone dRU with a physical dRU index of 9 when a bandwidth BW is 80 MHz includes subcarriers of 26-tone dRUs 5, 14, 24, and 33, and two additional subcarriers. In other words, a 106-tone dRU 9 may include subcarriers of 52-tone dRUs 17 and 18, and two additional subcarriers. For example, subcarriers included in the 52-tone dRU in the 80 MHz bandwidth are shown in Table 6 or Table 9, and subcarriers included in the 26-tone dRU are shown in Table 5 or Table 8. Details are not described herein again. For example, subcarriers included in the 106-tone dRU in the 80 MHz bandwidth are shown in Table 7 or Table 10. Details are not described herein again.

When the bandwidth BW is 160 MHz, the indication information (for example, the PS160 subfield and the RU allocation subfield in Table 14) may indicate a dRU in the 160 MHz dRU tone plan. The 160 MHz dRU tone plan includes but is not limited to: 52-tone dRUs with physical dRU indexes of 1 to 36 (or the first to the 36th 52-tone dRUs), or 106-tone dRUs with physical dRU indexes of 1 to 18 (or the first to the 18th 106-tone dRUs). In the thirty-six 52-tone dRUs, four 52-tone dRUs include subcarriers of 26-tone dRUs 5, 14, 24, 33, 42, 51, 61, and 70. In the eighteen 106-tone dRUs, two 106-tone dRUs include subcarriers of 26-tone dRUs 5, 14, 24, 33, 42, 51, 61, and 70, and four additional subcarriers. For example, in Table 14, when the bandwidth BW is 160 MHz, a 52-tone dRU with a physical dRU index of 33 includes subcarriers of 26-tone dRUs with physical dRU indexes of 5 and 14; a 52-tone dRU with a physical dRU index of 34 includes subcarriers of 26-tone dRUs with physical dRU indexes of 24 and 33; a 52-tone dRU with a physical dRU index of 35 includes subcarriers of 26-tone dRUs with physical dRU indexes of 42 and 51; and a 52-tone dRU with a physical dRU index of 36 includes subcarriers of 26-tone dRUs with physical dRU indexes of 61 and 70. For example, in Table 14, when the bandwidth BW is 160 MHz, a 106-tone dRU with a physical dRU index of 17 includes subcarriers of 26-tone dRUs with physical dRU indexes of 5, 14, 24, and 33, and subcarriers with subcarrier indexes of [-493, 493]; and a 106-tone dRU with a physical dRU index of 18 includes subcarriers of 26-tone dRUs with physical dRU indexes of 42, 51, 61, and 70, and subcarriers with subcarrier indexes of [-531, 531].

When the bandwidth BW is 320 MHz, the indication information (for example, the PS160 subfield and the RU allocation subfield in Table 14) may indicate a dRU in the 320 MHz dRU tone plan. The 320 MHz dRU tone plan includes but is not limited to: 52-tone dRUs with physical dRU indexes of 1 to 72 (or the first to the 72nd 52-tone dRUs), or 106-tone dRUs with physical dRU indexes of 1 to 36 (or the first to the 36th 106-tone dRUs). In the seventy-two 52-tone dRUs, eight 52-tone dRUs include subcarriers of 26-tone dRUs 5, 14, 24, 33, 42, 51, 61, 70, 79, 88, 98, 107, 116, 125, 135, and 144. In these thirty-six 106-tone dRUs, four 106-tone dRUs include subcarriers of 26-tone dRUs 5, 14, 24, 33, 42, 51, 61, 70, 79, 88, 98, 107, 116, 125, 135, and 144, and eight additional subcarriers. For example, when the bandwidth BW in Table 14 is 320 MHz, a 52-tone dRU 65 includes subcarriers of 26-tone dRUs 5 and 14; a 52-tone dRU 66 includes subcarriers of 26-tone dRUs 24 and 33; a 52-tone dRU 67 includes subcarriers of 26-tone dRUs 42 and 51; a 52-tone dRU 68 includes subcarriers of 26-tone dRUs 61 and 70; a 52-tone dRU 69 includes subcarriers of 26-tone dRUs 79 and 88; a 52-tone dRU 70 includes subcarriers of 26-tone dRUs 98 and 107; a 52-tone dRU 71 includes subcarriers of 26-tone dRUs 116 and 125; and a 52-tone dRU 72 includes subcarriers of 26-tone dRUs 135 and 144. For example, when the bandwidth BW in Table 14 is 320 MHz, a 106-tone dRU 33 includes subcarriers of 26-tone dRUs 5, 14, 24, and 33, and two additional subcarriers; a 106-tone dRU 34 includes subcarriers of 26-tone dRUs 42, 51, 61, and 70, and two additional subcarriers; a 106-tone dRU 35 includes subcarriers of 26-tone dRUs 79, 88, 98, and 107, and two additional subcarriers; and a 106-tone dRU 36 includes subcarriers of 26-tone dRUs 116, 125, 135, and 144, and two additional subcarriers. Alternatively, the 106-tone dRU 33 includes subcarriers of 52-tone dRUs 65 and 66, and two additional subcarriers; the 106-tone dRU 34 includes subcarriers of 52-tone dRUs 67 and 68, and two additional subcarriers; the 106-tone dRU 35 includes subcarriers of 52-tone dRUs 69 and 70, and two additional subcarriers; and the 106-tone dRU 36 includes subcarriers of 52-tone dRUs 71 and 72, and two additional subcarriers.

In a possible implementation, the first communication apparatus may allocate dRUs to the one or more second communication apparatuses in the manner in Table 14. It may be understood that the trigger frame may include one or more user information fields, and one user information field may include information that needs to be read by one second communication apparatus (for example, a station). For example, the user information field herein may be an EHT, a UHR, or another variant user information field (EHT or UHR or others variant User Info field). One user information field of the trigger frame includes one piece of indication information, and the indication information (for example, the PS160 subfield and the RU allocation subfield) in different user information fields may have different values, and different (or non-conflicting) dRUs are allocated to different second communication apparatuses. For ease of description, in this application, one second communication apparatus (for example, a station) is used as an example for description.

For example, the first communication apparatus (for example, an AP) transmits a trigger frame, and indication information in a user information field of the trigger frame may be set in the manner in Table 14, to allocate a dRU to the second communication apparatus. The second communication apparatus (for example, the STA) may determine, based on the indication information in the trigger frame, a dRU allocated to the second communication apparatus, and may transmit a PPDU (for example, transmit a TB PPDU) by using the dRU allocated to the second communication apparatus.

It may be understood that, because the first communication apparatus (for example, the AP) may simultaneously schedule multiple second communication apparatuses (for example, STAs) to perform uplink transmission, the first communication apparatus (for example, the AP) may determine, based on a dRU and a dRU tone plan both of which are allocated to each second communication apparatus (for example, the STA), which data on a subcarrier belongs to a same second communication apparatus (for example, the STA), and the first communication apparatus (for example, the AP) may distinguish uplink data from different second communication apparatuses (for example, STAs).

In this embodiment of this application, on a basis of reusing an existing RU/MRU indication to schedule a dRU resource, a dRU indication method is provided to indicate more dRUs, and an access point can schedule more stations to perform uplink communication (one dRU is allocated to one station), thereby improving spectrum utilization of uplink transmission. In addition, this embodiment of this application can further resolve a problem that indication signaling is insufficient when the RU/MRU indication method is reused to indicate the dRU.

The foregoing content describes in detail the method provided in this application. To facilitate implementation of the foregoing solutions in embodiments of this application, embodiments of this application further provide a corresponding apparatus or device.

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes, in detail with reference to FIG. 14 to FIG. 16, the communication apparatuses in embodiments of this application.

Refer to FIG. 14. FIG. 14 is a diagram of a structure of a communication apparatus according to an embodiment of this application. As shown in FIG. 14, the communication apparatus includes a transceiver module 801 and a processing module 802. The transceiver module 801 may implement a corresponding communication function. The processing module 802 is configured to process data. For example, the transceiver module 801 may also be referred to as an interface, a communication interface, a communication module, or the like.

In some embodiments of this application, the communication apparatus may be the first communication apparatus shown above. To be specific, the communication apparatus shown in FIG. 14 may be configured to perform steps, functions, or the like performed by the first communication apparatus in the foregoing method embodiments. For example, the communication apparatus may be the first communication apparatus or a chip, a functional module, or the like disposed in the first communication apparatus. This is not limited in embodiments of this application. The transceiver module 801 is configured to perform a receiving/transmitting-related operation of the first communication apparatus in the foregoing method embodiments, and the processing module 802 is configured to perform a processing-related operation of the first communication apparatus in the foregoing method embodiments.

For example, the processing module 802 is configured to generate a PPDU according to a 40 MHz bandwidth dRU tone plan, where the dRU tone plan includes a ninth 52-tone dRU. The transceiver module 801 is configured to transmit the PPDU.

It may be understood that the transceiver module 801 may transmit the PPDU to another communication apparatus, or the transceiver module 801 outputs the PPDU from the processing module 802 to another component, another functional module, or the like in the first communication apparatus. Related descriptions of outputting other information by the transceiver module are similar. Details are not described below again.

In this embodiment of this application, for descriptions of the ninth 52-tone dRU, the 40 MHz bandwidth dRU tone plan, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 8). Details are not described herein again. In addition, for a technical effect of this embodiment of this application, refer to the technical effect in the foregoing method embodiments. For brevity, details are not described herein.

For example, the processing module 802 is configured to generate a PPDU according to an 80 MHz bandwidth dRU tone plan, where the dRU tone plan includes eighteen 52-tone dRUs or nine 106-tone dRUs; and the transceiver module 801 is configured to transmit the PPDU.

In this embodiment of this application, for descriptions of the 80 MHz bandwidth dRU tone plan, the 52-tone dRU, the 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 8). Details are not described herein again. In addition, for a technical effect of this embodiment of this application, refer to the technical effect in the foregoing method embodiments. For brevity, details are not described herein.

For example, the transceiver module 801 is configured to receive a trigger frame, where the trigger frame includes indication information, and the indication information indicates a dRU in a dRU tone plan corresponding to the first bandwidth. The transceiver module 801 is further configured to transmit a PPDU by using the dRU indicated by the indication information.

For example, the processing module 802 is configured to generate a PPDU.

It may be understood that the transceiver module 801 may receive the trigger frame from another communication apparatus, or the transceiver module 801 inputs the trigger frame from another component or another function module in the communication apparatus, or the like. Related descriptions of inputting other information by the transceiver module are similar. Details are not described below again.

In this embodiment of this application, for descriptions of the indication information, the dRU tone plan corresponding to the first bandwidth, the dRU, the PPDU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 13). Details are not described herein again. In addition, for a technical effect of this embodiment of this application, refer to the technical effect in the foregoing method embodiments. For brevity, details are not described herein.

FIG. 14 is reused. In some other embodiments of this application, the communication apparatus may be the second communication apparatus shown above. To be specific, the communication apparatus shown in FIG. 14 may be configured to perform steps, functions, or the like performed by the second communication apparatus in the foregoing method embodiments. For example, the communication apparatus may be the second communication apparatus or a chip, a functional module, or the like disposed in the second communication apparatus. This is not limited in embodiments of this application. The transceiver module 801 is configured to perform a receiving/transmitting-related operation of the second communication apparatus in the foregoing method embodiments, and the processing module 802 is configured to perform a processing-related operation of the second communication apparatus in the foregoing method embodiments.

For example, the transceiver module 801 is configured to receive a PPDU according to the 40 MHz bandwidth dRU tone plan, where the dRU tone plan includes a ninth 52-tone dRU; and the processing module 802 is configured to process the PPDU.

In this embodiment of this application, for descriptions of the 40 MHz bandwidth dRU tone plan, the ninth 52-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 8). Details are not described herein again. In addition, for a technical effect of this embodiment of this application, refer to the technical effect in the foregoing method embodiments. For brevity, details are not described herein.

For example, the transceiver module 801 is configured to receive a PPDU according to the 80 MHz bandwidth dRU tone plan, where the dRU tone plan includes eighteen 52-tone dRUs or nine 106-tone dRUs; and the processing module 802 is configured to process the PPDU.

In this embodiment of this application, for descriptions of the 80 MHz bandwidth dRU tone plan, the 52-tone dRU, the 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 8). Details are not described herein again. In addition, for a technical effect of this embodiment of this application, refer to the technical effect in the foregoing method embodiments. For brevity, details are not described herein.

For example, the transceiver module 801 is configured to transmit a trigger frame, where the trigger frame includes indication information, and the indication information indicates a dRU in a dRU tone plan corresponding to the first bandwidth. The transceiver module 801 is further configured to receive the PPDU on the dRU indicated by the indication information.

For example, the processing module 802 is configured to generate a trigger frame.

In this embodiment of this application, for descriptions of the indication information, the dRU tone plan corresponding to the first bandwidth, the dRU, the PPDU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (for example, FIG. 13). Details are not described herein again. In addition, for a technical effect of this embodiment of this application, refer to the technical effect in the foregoing method embodiments. For brevity, details are not described herein.

The foregoing describes the communication apparatus in embodiments of this application, and the following describes a possible product form of the communication apparatus. It should be understood that any product in any form that has a function of the communication apparatus in FIG. 8 falls within the protection scope of embodiments of this application. It should be further understood that the following description is merely an example, and does not limit a product form of the communication apparatus in embodiments of this application.

In a possible implementation, in the communication apparatus shown in FIG. 14, the processing module 802 may be one or more processors, and the transceiver module 801 may be a transceiver; or the transceiver module 801 may be a transmitting module and a receiving module, the transmitting module may be a transmitter, the receiving module may be a receiver, and the transmitting module and the receiving module are integrated into one device, for example, a transceiver. In embodiments of this application, the processor and the transceiver may be coupled, or the like. A connection manner between the processor and the transceiver is not limited in embodiments of this application. In a process of performing the foregoing method, a process of transmitting information (for example, transmitting a PPDU) in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information and inputs the information to the processor. Further, after the transceiver receives the information, other processing may need to be performed on the information before the information is input into the processor.

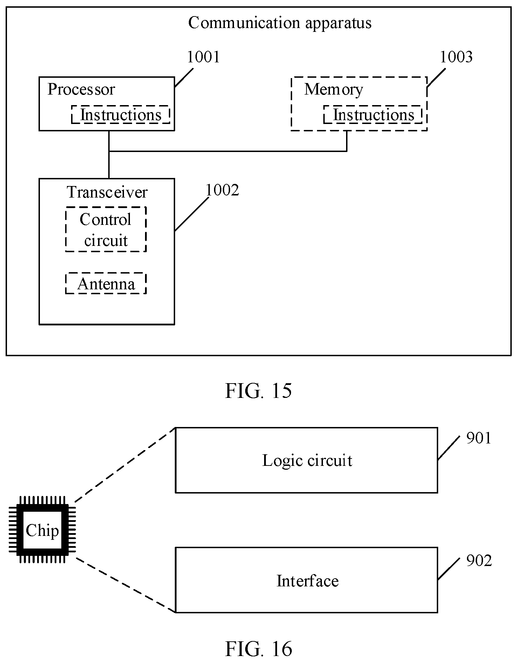

Refer to FIG. 15. FIG. 15 is a diagram of another structure of a communication apparatus according to an embodiment of this application. The communication apparatus may be a first communication apparatus, a second communication apparatus, or a chip in the first communication apparatus or the second communication apparatus. FIG. 15 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. In a design, the transceiver 1002 may be referred to as a transceiver module, a transceiver, a transceiver circuit, or the like, and is configured to implement a transceiver function. The transceiver 1002 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a transmitting function. In another design, the transceiver 1002 may include a control circuit and an antenna. The control circuit is mainly configured to: perform conversion between a baseband signal and a radio frequency signal and process the radio frequency signal. The antenna is mainly configured to receive and transmit a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute an instruction of the software program, process data of the software program, and perform control on a medium access control (medium access control, MAC) layer and a physical layer (physical layer, PHY), to implement the method in this embodiment of this application. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then transmits a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiments, the processor 1001 may be configured to perform step S101 in FIG. 8, and/or configured to perform another process of the technology described in this specification; and the transceiver 1002 may be configured to perform step S102 in FIG. 8, and/or configured to perform another process of the technology described in this specification.

For example, when the communication apparatus is configured to perform the steps, methods, or functions performed by the second communication apparatus in the foregoing method embodiments, the processor 1001 may be configured to perform step S104 in FIG. 8, and/or configured to perform another process of the technology described in this specification; and the transceiver 1002 may be configured to perform step S103 in FIG. 8, and/or configured to perform another process of the technology described in this specification.

For example, when the communication apparatus is configured to perform the steps, methods, or functions performed by the first communication apparatus in the foregoing method embodiments, the processor 1001 may be configured to generate the PPDU transmitted in step S202 in FIG. 13, and/or to perform another process of the technology described in this specification; and the transceiver 1002 may be configured to perform step S202 in FIG. 13, and/or configured to perform another process of the technology described in this specification.

For example, when the communication apparatus is configured to perform the steps, methods, or functions performed by the second communication apparatus in the foregoing method embodiments, the processor 1001 may be configured to generate the trigger frame transmitted in step S201 in FIG. 13, and/or configured to perform another process of the technology described in this specification; and the transceiver 1002 may be configured to perform step S201 in FIG. 13, and/or configured to perform another process of the technology described in this specification.

In any one of the foregoing designs, the processor 1001 may include a transceiver configured to implement receiving and transmitting functions. For example, the transceiver may be a transceiver circuit, an interface, or an interface circuit. The transceiver circuit, the interface, or the interface circuit configured to implement the receiving and transmitting functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program runs on the processor 1001, to enable the communication apparatus to perform the methods described in the foregoing method embodiments. The computer program may be embedded in the processor 1001. In this case, the processor 1001 may be implemented by hardware.

In an implementation, the communication apparatus may include a circuit. The circuit may implement a transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-type Metal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may alternatively include more components than those shown in FIG. 15, or the like. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 14, the processing module 802 may be one or more logic circuits, and the transceiver module 801 may be an input/output interface that is also referred to as a communication interface, an interface circuit, an interface, or the like. Alternatively, the transceiver module 801 may be a transmitting module and a receiving module. The transmitting module may be an output interface, and the receiving module may be an input interface. The transmitting module and the receiving module are integrated into one module, for example, an input/output interface. Refer to FIG. 16. FIG. 16 is a diagram of another structure of a communication apparatus according to an embodiment of this application. As shown in FIG. 16, the communication apparatus shown in FIG. 16 includes a logic circuit 901 and an interface 902. That is, the processing module 802 may be implemented by using the logic circuit 901, and the transceiver module 801 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 16 shows an example in which the communication apparatus is a chip. The chip includes the logic circuit 901 and the interface 902.

In this embodiment of this application, the logic circuit and the interface may further be coupled to each other. A specific manner of connection between the logic circuit and the interface is not limited in this embodiment of this application.

For example, when the communication apparatus is configured to perform the method, the function, or the step performed by the first communication apparatus in the foregoing method embodiments, the logic circuit 901 is configured to generate a PPDU according to a 40 MHz/80 MHz bandwidth dRU tone plan; and the interface 902 is configured to output the PPDU.

For example, when the communication apparatus is configured to perform the method, the function, or the step performed by the second communication apparatus in the foregoing method embodiments, the interface 902 is configured to input a PPDU according to a 40 MHz/80 MHz bandwidth dRU tone plan; and the logic circuit 901 is configured to process the PPDU.

In this embodiment of this application, for descriptions of the 40 MHz/80 MHz bandwidth dRU tone plan, the 52-tone dRU, the 106-tone dRU, and the like, refer to the descriptions in the foregoing method embodiments (as shown in FIG. 8). Details are not described herein again.

For example, when the communication apparatus is configured to perform the method, the function, or the step performed by the first communication apparatus in the foregoing method embodiments, the interface 902 is configured to input a trigger frame, where the trigger frame includes indication information, and the indication information indicates a dRU in a dRU tone plan corresponding to a first bandwidth; the logic circuit 901 is configured to generate a PPDU; and the interface 902 is further configured to output the PPDU by using the dRU indicated by the indication information.

For example, when the communication apparatus is configured to perform the method, the function, or the step performed by the second communication apparatus in the foregoing method embodiments, the logic circuit 901 is configured to generate a trigger frame; the interface 902 is configured to output the trigger frame, where the trigger frame includes indication information, and the indication information indicates a dRU in a dRU tone plan corresponding to a first bandwidth; and the interface 902 is further configured to input a PPDU on the dRU indicated by the indication information.

In this embodiment of this application, for descriptions of the indication information, the dRU tone plan corresponding to the first bandwidth, the dRU, the PPDU, and the like, refer to the descriptions in the foregoing method embodiments (as shown in FIG. 13). Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiment shown in FIG. 16, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing method embodiments.

In addition, this application further provides a computer program. The computer program is used to implement operations and/or processing performed by a first communication apparatus in the method provided in this application.

This application further provides a computer program. The computer program is used to implement operations and/or processing performed by a second communication apparatus in the method provided in this application.

This application further provides a computer readable storage medium. The computer readable storage medium stores computer code. When the computer code runs on a computer, the computer is enabled to perform operations and/or processing performed by a first communication apparatus in the method provided in this application.

This application further provides a computer readable storage medium. The computer readable storage medium stores computer code. When the computer code runs on a computer, the computer is enabled to perform operations and/or processing performed by a second communication apparatus in the method provided in this application.

This application further provides a computer program product. The computer program product includes computer code or a computer program. When the computer code or the computer program runs on a computer, operations and/or processing performed by a first communication apparatus in the method provided in this application are performed.

This application further provides a computer program product. The computer program product includes computer code or a computer program. When the computer code or the computer program runs on a computer, operations and/or processing performed by a second communication apparatus in the method provided in this application are performed.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located at one position, or may be distributed on a plurality of network units. Some or all of the units may be selected based on an actual requirement to implement the technical effect of the solutions provided in embodiments of this application.

In addition, function units in embodiments of this application may be integrated into one processing module, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method based on a distributed resource unit, comprising:
generating a physical layer protocol data unit PPDU according to a 40 MHz bandwidth distributed resource unit dRU tone plan, wherein the dRU tone plan comprises a ninth 52-tone dRU, and the ninth 52-tone dRU comprises subcarrier indexes of [-234, -225, -216, -207, -198, -189, -180, -171, -162, -153, -144, -135, -126, -117, -108, -99, -90, -81, -72, -63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243]; and
transmitting the PPDU.

2. A communication method based on a distributed resource unit, comprising:
receiving a physical layer protocol data unit PPDU according to a 40 MHz bandwidth distributed resource unit dRU tone plan, wherein the dRU tone plan comprises a ninth 52-tone dRU, and the ninth 52-tone dRU comprises subcarrier indexes of [-234, -225, -216, -207, -198, -189, -180, -171, -162, -153, -144, -135, -126, -117, -108, -99, -90, -81, -72, -63, -54, -45, -36, -27, -18, -9, 18, 27, 36, 45, 54, 63, 72, 81, 90, 99, 108, 117, 126, 135, 144, 153, 162, 171, 180, 189, 198, 207, 216, 225, 234, 243]; and
processing the PPDU.

3. A communication method based on a distributed resource unit, comprising:
generating a physical layer protocol data unit PPDU according to an 80 MHz bandwidth distributed resource unit dRU tone plan, wherein the dRU tone plan comprises eighteen 52-tone dRUs or nine 106-tone dRUs; a 52-tone dRU with an index of 2 in the eighteen 52-tone dRUs comprises a subcarrier with a subcarrier index of 457, and a 52-tone dRU with an index of 7 in the eighteen 52-tone dRUs comprises subcarriers with subcarrier indexes of 19, 55, 91, 127, 163, 199, 235, 271, 307, 343, 379, 415, and 451; and a 106-tone dRU with an index of 1 in the nine 106-tone dRUs comprises a subcarrier with a subcarrier index of 457, and a 106-tone dRU with an index of 4 in the nine 106-tone dRUs comprises subcarriers with subcarrier indexes of 19, 55, 91, 127, 163, 199, 235, 271, 307, 343, 379, 415, and 451; and
transmitting the PPDU.

4. A communication method based on a distributed resource unit, comprising:
receiving a physical layer protocol data unit PPDU according to an 80 MHz bandwidth distributed resource unit dRU tone plan, wherein the dRU tone plan comprises eighteen 52-tone dRUs or nine 106-tone dRUs; a 52-tone dRU with an index of 2 in the eighteen 52-tone dRUs comprises a subcarrier with a subcarrier index of 457, and a 52-tone dRU with an index of 7 in the eighteen 52-tone dRUs comprises subcarriers with subcarrier indexes of 19, 55, 91, 127, 163, 199, 235, 271, 307, 343, 379, 415, and 451; and a 106-tone dRU with an index of 1 in the nine 106-tone dRUs comprises a subcarrier with a subcarrier index of 457, and a 106-tone dRU with an index of 4 in the nine 106-tone dRUs comprises subcarriers with subcarrier indexes of 19, 55, 91, 127, 163, 199, 235, 271, 307, 343, 379, 415, and 451; and
processing the PPDU.

5. The method according to claim 3 or 4, wherein the 52-tone dRU with the index of 2 in the eighteen 52-tone dRUs comprises subcarrier indexes of [-475, -459, -439, -423, -403, -387, - 367, -351, -331, -315, -295, -279, -259, -243, -223, -207, -187, -171, -151, -135, -115, -99, -79, -63, -43, -27, 25, 41, 61, 77, 97, 113, 133, 149, 169, 185, 205, 221, 241, 257, 277, 293, 313, 329, 349, 365, 385, 401, 421, 437, 457, 473].

6. The method according to any one of claims 3 to 5, wherein the 52-tone dRU with the index of 7 in the eighteen 52-tone dRUs comprises subcarrier indexes of [-481, -465, -445, -429, -409, -393, -373, -357, -337, -321, -301, -285, -265, -249, -229, -213, -193, -177, -157, -141, - 121, -105, -85, -69, -49, -33, 19, 35, 55, 71, 91, 107, 127, 143, 163, 179, 199, 215, 235, 251, 271, 287, 307, 323, 343, 359, 379, 395, 415, 431, 451, 467].

7. The method according to any one of claims 3 to 6, wherein a 52-tone dRU with an index of 17 in the eighteen 52-tone dRUs comprises subcarriers of 26-tone dRUs with indexes of 5 and 14; and
a 52-tone dRU with an index of 18 in the eighteen 52-tone dRUs comprises subcarriers of 26-tone dRUs with indexes of 24 and 33.

8. The method according to claim 3 or 4, wherein a 106-tone dRU with an index of 9 in the nine 106-tone dRUs comprises subcarriers of 26-tone dRUs with indexes of 5, 14, 24, and 33, and subcarriers with subcarrier indexes of [-500, 16].

9. The method according to claim 7 or 8, wherein the 26-tone dRU with the index of 5 comprises subcarrier indexes of [-451, -415, -379, -343, -307, -271, -235, -199, -163, -127, - 91, -55, -19, 49, 85, 121, 157, 193, 229, 265, 301, 337, 373, 409, 445, 481];
the 26-tone dRU with the index of 14 comprises subcarrier indexes of [-450, -414, -378, - 342, -306, -270, -234, -198, -162, -126, -90, -54, -18, 50, 86, 122, 158, 194, 230, 266, 302, 338, 374, 410, 446, 482];
the 26-tone dRU with the index of 24 comprises subcarrier indexes of [-449, -413, -377, - 341, -305, -269, -233, -197, -161, -125, -89, -53, -17, 51, 87, 123, 159, 195, 231, 267, 303, 339, 375, 411, 447, 483];
the 26-tone dRU with the index of 33 comprises subcarrier indexes of [-448, -412, -376, - 340, -304, -268, -232, -196, -160, -124, -88, -52, -16, 52, 88, 124, 160, 196, 232, 268, 304, 340, 376, 412, 448, 484].

10. The method according to claim 3 or 4, wherein the 106-tone dRU with the index of 1 in the nine 106-tone dRUs comprises subcarrier indexes of [-495, -483, -475, -467, -459, -447, - 439, -431, -423, -411, -403, -395, -387, -375, -367, -359, -351, -339, -331, -323, -315, -303, -295, -287, -279, -267, -259, -251, -243, -231, -223, -215, -207, -195, -187, -179, -171, - 159, -151, -143, -135, -123, -115, -107, -99, -87, -79, -71, -63, -51, -43, -35, -27, 17, 25, 33, 41, 53, 61, 69, 77, 89, 97, 105, 113, 125, 133, 141, 149, 161, 169, 177, 185, 197, 205, 213, 221, 233, 241, 249, 257, 269, 277, 285, 293, 305, 313, 321, 329, 341, 349, 357, 365, 377, 385, 393, 401, 413, 421, 429, 437, 449, 457, 465, 473, 485]; and
the 106-tone dRU with the index of 4 in the nine 106-tone dRUs comprises subcarrier indexes of [-493, -481, -473, -465, -457, -445, -437, -429, -421, -409, -401, -393, -385, -373, -365, -357, -349, -337, -329, -321, -313, -301, -293, -285, -277, -265, -257, -249, -241, -229, - 221, -213, -205, -193, -185, -177, -169, -157, -149, -141, -133, -121, -113, -105, -97, -85, - 77, -69, -61, -49, -41, -33, -25, 19, 27, 35, 43, 55, 63, 71, 79, 91, 99, 107, 115, 127, 135, 143, 151, 163, 171, 179, 187, 199, 207, 215, 223, 235, 243, 251, 259, 271, 279, 287, 295, 307, 315, 323, 331, 343, 351, 359, 367, 379, 387, 395, 403, 415, 423, 431, 439, 451, 459, 467, 475, 487].

11. A communication method based on a distributed resource unit, comprising:
generating a physical layer protocol data unit PPDU according to an 80 MHz bandwidth dRU tone plan, wherein the dRU tone plan comprises eighteen 52-tone dRUs or nine 106-tone dRUs, and a subcarrier spacing in a 52-tone dRU is greater than or equal to 18, and a subcarrier spacing in a 106-tone dRU is greater than or equal to 9; and
transmitting the PPDU.

12. A communication method based on a distributed resource unit, comprising:
receiving a physical layer protocol data unit PPDU according to an 80 MHz bandwidth dRU tone plan, wherein the dRU tone plan comprises eighteen 52-tone dRUs or nine 106-tone dRUs, and a subcarrier spacing in a 52-tone dRU is greater than or equal to 18, and a subcarrier spacing in a 106-tone dRU is greater than or equal to 9; and
processing the PPDU.

13. The method according to claim 11 or 12, wherein a 52-tone dRU with an index of 1 in the eighteen 52-tone dRUs comprises subcarriers of 26-tone dRUs with indexes of 1 and 2;
a 52-tone dRU with an index of 2 in the eighteen 52-tone dRUs comprises subcarriers of 26-tone dRUs with indexes of 3 and 4;
a 52-tone dRU with an index of 3 in the eighteen 52-tone dRUs comprises subcarriers of 26-tone dRUs with indexes of 6 and 7;
a 52-tone dRU with an index of 4 in the eighteen 52-tone dRUs comprises subcarriers of 26-tone dRUs with indexes of 8 and 9;
a 52-tone dRU with an index of 5 in the eighteen 52-tone dRUs comprises subcarriers of 26-tone dRUs with indexes of 10 and 11;
a 52-tone dRU with an index of 6 in the eighteen 52-tone dRUs comprises subcarriers of 26-tone dRUs with indexes of 12 and 13;
a 52-tone dRU with an index of 7 in the eighteen 52-tone dRUs comprises subcarriers of 26-tone dRUs with indexes of 15 and 16;
a 52-tone dRU with an index of 8 in the eighteen 52-tone dRUs comprises subcarriers of 26-tone dRUs with indexes of 17 and 18;
a 52-tone dRU with an index of 9 in the eighteen 52-tone dRUs comprises subcarriers of 26-tone dRUs with indexes of 20 and 21;
a 52-tone dRU with an index of 10 in the eighteen 52-tone dRUs comprises subcarriers of 26-tone dRUs with indexes of 22 and 23;
a 52-tone dRU with an index of 11 in the eighteen 52-tone dRUs comprises subcarriers of 26-tone dRUs with indexes of 25 and 26;
a 52-tone dRU with an index of 12 in the eighteen 52-tone dRUs comprises subcarriers of 26-tone dRUs with indexes of 27 and 28;
a 52-tone dRU with an index of 13 in the eighteen 52-tone dRUs comprises subcarriers of 26-tone dRUs with indexes of 29 and 30;
a 52-tone dRU with an index of 14 in the eighteen 52-tone dRUs comprises subcarriers of 26-tone dRUs with indexes of 31 and 32;
a 52-tone dRU with an index of 15 in the eighteen 52-tone dRUs comprises subcarriers of 26-tone dRUs with indexes of 34 and 35;
a 52-tone dRU with an index of 16 in the eighteen 52-tone dRUs comprises subcarriers of 26-tone dRUs with indexes of 36 and 37;
a 52-tone dRU with an index of 17 in the eighteen 52-tone dRUs comprises subcarriers of 26-tone dRUs with indexes of 5 and 14; and
a 52-tone dRU with an index of 18 in the eighteen 52-tone dRUs comprises subcarriers of 26-tone dRUs with indexes of 24 and 33.

14. The method according to claim 11 or 12, wherein a 106-tone dRU with an index of 1 in the nine 106-tone dRUs comprises subcarriers of 26-tone dRUs with indexes of 1 to 4, and subcarriers with subcarrier indexes of [-495, 485];
a 106-tone dRU with an index of 2 in the nine 106-tone dRUs comprises subcarriers of 26-tone dRUs with indexes of 6 to 9, and subcarriers with subcarrier indexes of [-491, 489];
a 106-tone dRU with an index of 3 in the nine 106-tone dRUs comprises subcarriers of 26-tone dRUs with indexes of 10 to 13, and subcarriers with subcarrier indexes of [-493, 487];
a 106-tone dRU with an index of 4 in the nine 106-tone dRUs comprises subcarriers of 26-tone dRUs with indexes of 15 to 18, and subcarriers with subcarrier indexes of [-489, 491];
a 106-tone dRU with an index of 5 in the nine 106-tone dRUs comprises subcarriers of 26-tone dRUs with indexes of 20 to 23, and subcarriers with subcarrier indexes of [-494, 486];
a 106-tone dRU with an index of 6 in the nine 106-tone dRUs comprises subcarriers of 26-tone dRUs with indexes of 25 to 28, and subcarriers with subcarrier indexes of [-490, 490];
a 106-tone dRU with an index of 7 in the nine 106-tone dRUs comprises subcarriers of 26-tone dRUs with indexes of 29 to 32, and subcarriers with subcarrier indexes of [-492, 488];
a 106-tone dRU with an index of 8 in the nine 106-tone dRUs comprises subcarriers of 26-tone dRUs with indexes of 34 to 37, and subcarriers with subcarrier indexes of [-488, 492]; and
a 106-tone dRU with an index of 9 in the nine 106-tone dRUs comprises subcarriers of 26-tone dRUs with indexes of 5, 14, 24, and 33, and subcarriers with subcarrier indexes of [-500, 16].

15. The method according to any one of claims 11 to 14, wherein the dRU tone plan further comprises four 242-tone dRUs;
a 242-tone dRU with an index of 1 in the four 242-tone dRUs comprises subcarriers of 26-tone dRUs with indexes of 1 to 9, and subcarriers with subcarrier indexes of [-499, -495, -491, - 487, 485, 489, 493, 497];
a 242-tone dRU with an index of 2 in the four 242-tone dRUs comprises subcarriers of 26-tone dRUs with indexes of 10 to 18, and subcarriers with subcarrier indexes of [-497, -493, -489, -485, 487, 491, 495, 499];
a 242-tone dRU with an index of 3 in the four 242-tone dRUs comprises subcarriers of 26-tone dRUs with indexes of 20 to 28, and subcarriers with subcarrier indexes of [-498, -494, -490, -486, 486, 490, 494, 498]; and
a 242-tone dRU with an index of 4 in the four 242-tone dRUs comprises subcarriers of 26-tone dRUs with indexes of 29 to 37, and subcarriers with subcarrier indexes of [-496, -492, -488, -484, 488, 492, 496, 500].

16. The method according to any one of claims 11 to 15, wherein the dRU tone plan further comprises two 484-tone dRUs;
a 484-tone dRU with an index of 1 in the two 484-tone dRUs comprises subcarriers of 26-tone dRUs with indexes of 1 to 18, and subcarriers with subcarrier indexes of [-499, -497, -495, -493, -491, -489, -487, -485, 485, 487, 489, 491, 493, 495, 497, 499]; and
a 484-tone dRU with an index of 2 in the two 484-tone dRUs comprises subcarriers of 26-tone dRUs with indexes of 20 to 37, and subcarriers with subcarrier indexes of [-498, -496, -494, -492, -490, -488, -486, -484, 486, 488, 490, 492, 494, 496, 498, 500].

17. The method according to any one of claims 11 to 16, wherein the dRU tone plan further comprises 26-tone dRUs, and the 26-tone dRUs comprise subcarriers as shown in Table 8.

18. A communication method based on a distributed resource unit, comprising:
receiving a trigger frame, wherein the trigger frame comprises indication information, and the indication information indicates a dRU in a dRU tone plan corresponding to a first bandwidth; and the dRU tone plan corresponding to the first bandwidth comprises any one of the following:
nine 52-tone dRUs when the first bandwidth is 40 MHz,
eighteen 52-tone dRUs when the first bandwidth is 80 MHz,
thirty-six 52-tone dRUs when the first bandwidth is 160 MHz,
seventy-two 52-tone dRUs when the first bandwidth is 320 MHz,
nine 106-tone dRUs when the first bandwidth is 80 MHz,
eighteen 106-tone dRUs when the first bandwidth is 160 MHz, or
thirty-six 106-tone dRUs when the first bandwidth is 320 MHz, wherein a 52-tone dRU with a physical dRU index of 2 when the first bandwidth is 80 MHz comprises a subcarrier with a subcarrier index of 457, and a 52-tone dRU with a physical dRU index of 7 when the first bandwidth is 80 MHz comprises subcarriers with subcarrier indexes of 19, 55, 91, 127, 163, 199, 235, 271, 307, 343, 379, 415, and 451; and a 106-tone dRU with a physical dRU index of 1 when the first bandwidth is 160 MHz comprises a subcarrier with a subcarrier index of 457, and a 106-tone dRU with a physical dRU index of 4 when the first bandwidth is 160 MHz comprises subcarriers with subcarrier indexes of 19, 55, 91, 127, 163, 199, 235, 271, 307, 343, 379, 415, and 451; and
transmitting a physical layer protocol data unit PPDU using the dRU indicated by the indication information.

19. A communication method based on a distributed resource unit, comprising:
transmitting a trigger frame, wherein the trigger frame comprises indication information, and the indication information indicates a dRU in a dRU tone plan corresponding to a first bandwidth; and the dRU tone plan corresponding to the first bandwidth comprises any one of the following:
nine 52-tone dRUs when the first bandwidth is 40 MHz,
eighteen 52-tone dRUs when the first bandwidth is 80 MHz,
thirty-six 52-tone dRUs when the first bandwidth is 160 MHz,
seventy-two 52-tone dRUs when the first bandwidth is 320 MHz,
nine 106-tone dRUs when the first bandwidth is 80 MHz,
eighteen 106-tone dRUs when the first bandwidth is 160 MHz, or
thirty-six 106-tone dRUs when the first bandwidth is 320 MHz, wherein a 52-tone dRU with a physical dRU index of 2 when the first bandwidth is 80 MHz comprises a subcarrier with a subcarrier index of 457, and a 52-tone dRU with a physical dRU index of 7 when the first bandwidth is 80 MHz comprises subcarriers with subcarrier indexes of 19, 55, 91, 127, 163, 199, 235, 271, 307, 343, 379, 415, and 451; and a 106-tone dRU with a physical dRU index of 1 when the first bandwidth is 160 MHz comprises a subcarrier with a subcarrier index of 457, and a 106-tone dRU with a physical dRU index of 4 when the first bandwidth is 160 MHz comprises subcarriers with subcarrier indexes of 19, 55, 91, 127, 163, 199, 235, 271, 307, 343, 379, 415, and 451; and
receiving a physical layer protocol data unit PPDU on the dRU indicated by the indication information.

20. The method according to claim 18 or 19, wherein the indication information comprises a resource unit RU allocation subfield and a primary-secondary 160 subfield, and the RU allocation subfield and the primary-secondary 160 subfield jointly indicate the dRU.

21. The method according to claim 20, wherein interpretation of the primary-secondary 160 subfield and the RU allocation subfield comprises one or more of the following:
| Primary-secondary 160 subfield | B0 of the RU allocation subfield | B7 to B1 of the RU allocation subfield | Bandwidth (BW) (MHz) | dRU size | dRU index | Physical dRU index |
|---|---|---|---|---|---|---|
| 0 | | First value | 40 | 52 | dRU 9 | dRU 9 |
| 0 to 3 | | Second value and third value | 80, 160, or 320 | 52 | dRU 17 and dRU 18 | 16×(BW/80-1)+2×N+dRU index |
| 0 to 3 | | Fourth value | 80, 160, or 320 | 106 | dRU 9 | 8×(BW/80-1)+N+dRU index |
| 0 to 3 | | Fifth value | 80, 160, or 320 | 26 | dRU 19 | 37×N+dRU index |
N is determined based on a part or all of the bandwidth BW, the primary-secondary 160 subfield, the B0 bit of the RU allocation subfield, and configuration information.

22. The method according to claim 21, wherein the fifth value is 18.

23. The method according to claim 21 or 22, wherein at least one of the first value, the second value, the third value, and the fourth value is a value from 107 to 127.

24. The method according to any one of claims 18 to 23, wherein a 52-tone dRU with a physical dRU index of 9 when the first bandwidth is 40 MHz comprises subcarriers of 26-tone dRUs with physical dRU indexes of 5 and 14.

25. The method according to any one of claims 18 to 24, wherein the 52-tone dRU with the physical dRU index of 9 comprises subcarrier indexes of [-234, -225, -216, -207, -198, -189, - 180, -171, -162, -153, -144, -135, -126, -117, -108, -99, -90, -81, -72, -63, -54, -45, -36, - 27, -18, -9, 18, 27, 36, 45, 54, 63, 72, 81, 90, 99, 108, 117, 126, 135, 144, 153, 162, 171, 180, 189, 198, 207, 216, 225, 234, 243].

26. The method according to any one of claims 18 to 23, wherein a 52-tone dRU with a physical dRU index of 17 when the first bandwidth is 80 MHz comprises subcarriers of 26-tone dRUs with physical dRU indexes of 5 and 14; and a 52-tone dRU with a physical dRU index of 18 when the first bandwidth is 80 MHz comprises subcarriers of 26-tone dRUs with physical dRU indexes of 24 and 33.

27. The method according to any one of claims 18 to 23 and 26, wherein the 52-tone dRU with the physical dRU index of 2 when the first bandwidth is 80 MHz comprises subcarrier indexes of [-475, -459, -439, -423, -403, -387, -367, -351, -331, -315, -295, -279, -259, -243, -223, -207, -187, -171, -151, -135, -115, -99, -79, -63, -43, -27, 25, 41, 61, 77, 97, 113, 133, 149, 169, 185, 205, 221, 241, 257, 277, 293, 313, 329, 349, 365, 385, 401, 421, 437, 457, 473].

28. The method according to any one of claims 18 to 23 and 26 to 27, wherein the 52-tone dRU with the physical dRU index of 7 when the first bandwidth is 80 MHz comprises subcarrier indexes of [-481, -465, -445, -429, -409, -393, -373, -357, -337, -321, -301, -285, -265, -249, -229, -213, -193, -177, -157, -141, -121, -105, -85, -69, -49, -33, 19, 35, 55, 71, 91, 107, 127, 143, 163, 179, 199, 215, 235, 251, 271, 287, 307, 323, 343, 359, 379, 395, 415, 431, 451, 467].

29. The method according to any one of claims 18 to 23 and 26 to 28, wherein a 106-tone dRU with a physical dRU index of 9 when the first bandwidth is 80 MHz comprises subcarriers of 26-tone dRUs with physical dRU indexes of 5, 14, 24, and 33, and subcarriers with subcarrier indexes of [-500, 16].

30. The method according to claim 26 or 29, wherein the 26-tone dRU with the physical dRU index of 5 comprises subcarrier indexes of [-451, -415, -379, -343, -307, -271, -235, -199, - 163, -127, -91, -55, -19, 49, 85, 121, 157, 193, 229, 265, 301, 337, 373, 409, 445, 481];
the 26-tone dRU with the physical dRU index of 14 comprises subcarrier indexes of [-450, - 414, -378, -342, -306, -270, -234, -198, -162, -126, -90, -54, -18, 50, 86, 122, 158, 194, 230, 266, 302, 338, 374, 410, 446, 482];
the 26-tone dRU with the physical dRU index of 24 comprises subcarrier indexes of [-449, - 413, -377, -341, -305, -269, -233, -197, -161, -125, -89, -53, -17, 51, 87, 123, 159, 195, 231, 267, 303, 339, 375, 411, 447, 483]; and
the 26-tone dRU with the physical dRU index of 33 comprises subcarrier indexes of [-448, - 412, -376, -340, -304, -268, -232, -196, -160, -124, -88, -52, -16, 52, 88, 124, 160, 196, 232, 268, 304, 340, 376, 412, 448, 484].

31. The method according to any one of claims 18 to 23, wherein a 106-tone dRU with a physical dRU index of 1 when the first bandwidth is 80 MHz comprises subcarrier indexes of [-495, -483, -475, -467, -459, -447, -439, -431, -423, -411, -403, -395, -387, -375, -367, -359, -351, -339, -331, -323, -315, -303, -295, -287, -279, -267, -259, -251, -243, -231, -223, - 215, -207, -195, -187, -179, -171, -159, -151, -143, -135, -123, -115, -107, -99, -87, -79, - 71, -63, -51, -43, -35, -27, 17, 25, 33, 41, 53, 61, 69, 77, 89, 97, 105, 113, 125, 133, 141, 149, 161, 169, 177, 185, 197, 205, 213, 221, 233, 241, 249, 257, 269, 277, 285, 293, 305, 313, 321, 329, 341, 349, 357, 365, 377, 385, 393, 401, 413, 421, 429, 437, 449, 457, 465, 473, 485]; and
a 106-tone dRU with a physical dRU index of 4 when the first bandwidth is 80 MHz comprises subcarrier indexes of [-493, -481, -473, -465, -457, -445, -437, -429, -421, -409, - 401, -393, -385, -373, -365, -357, -349, -337, -329, -321, -313, -301, -293, -285, -277, -265, -257, -249, -241, -229, -221, -213, -205, -193, -185, -177, -169, -157, -149, -141, -133, - 121, -113, -105, -97, -85, -77, -69, -61, -49, -41, -33, -25, 19, 27, 35, 43, 55, 63, 71, 79, 91, 99, 107, 115, 127, 135, 143, 151, 163, 171, 179, 187, 199, 207, 215, 223, 235, 243, 251, 259, 271, 279, 287, 295, 307, 315, 323, 331, 343, 351, 359, 367, 379, 387, 395, 403, 415, 423, 431, 439, 451, 459, 467, 475, 487].

32. A communication apparatus, comprising a module configured to perform the method according to any one of claims 1 to 31.

33. A communication apparatus, comprising:
one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 31.

34. A communication apparatus, comprising a logic circuit and an interface, wherein the logic circuit is coupled to the interface; and
the interface is configured to input and/or output information, and the logic circuit is configured to perform the method according to any one of claims 1 to 31.

35. A readable storage medium, configured to store a program, wherein the program is executed by one or more processors, to enable an apparatus comprising the one or more processors to perform the method according to any one of claims 1 to 31.

36. A computer program product, wherein when the computer program product is executed, the method according to any one of claims 1 to 31 is performed.

37. A communication system, wherein the communication system comprises a communication apparatus configured to perform the method according to claim 1, and a communication apparatus configured to perform the method according to claim 2; or
the communication system comprises a communication apparatus configured to perform the method according to any one of claims 3, 5 to 10, and a communication apparatus configured to perform the method according to any one of claims 4 to 10; or
the communication system comprises a communication apparatus configured to perform the method according to any one of claims 11, 13 to 17, and a communication apparatus configured to perform the method according to any one of claims 12 to 17; or
the communication system comprises a communication apparatus configured to perform the method according to any one of claims 18, 20 to 31, and a communication apparatus configured to perform the method according to any one of claims 19 to 31.
